(19) Europäisches Patentamt
European Patent Office
Office européen des brevets

(11) **EP 4 456 466 A2**

(12) **EUROPEAN PATENT APPLICATION**

(43) Date of publication:
**30.10.2024 Bulletin 2024/44**

(21) Application number: **24200256.6**

(22) Date of filing: **21.10.2021**

(51) International Patent Classification (IPC):
*H04L 1/18* $^{(2023.01)}$

(52) Cooperative Patent Classification (CPC):
**H04L 1/1822; H04L 1/0003; H04L 1/0009;**
**H04L 1/0016; H04L 1/0036; H04L 1/0052;**
**H04L 1/1819;** H04L 1/0057

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **22.10.2020 KR 20200137850**

(62) Document number(s) of the earlier application(s) in
accordance with Art. 76 EPC:
**21883300.2 / 4 203 357**

(71) Applicant: **Samsung Electronics Co., Ltd**
**Suwon-si, Gyeonggi-do 16677 (KR)**

(72) Inventors:
• **YOON, Suha**
**16677 Suwon-si (KR)**
• **KIM, Hyunjung**
**16677 Suwon-si (KR)**
• **MYUNG, Seho**
**16677 Suwon-si (KR)**
• **JUNG, Euichang**
**16677 Suwon-si (KR)**
• **PARK, Sungjin**
**16677 Suwon-si (KR)**
• **YEO, Jeongho**
**16677 Suwon-si (KR)**

(74) Representative: **Nederlandsch Octrooibureau**
**P.O. Box 29720**
**2502 LS The Hague (NL)**

Remarks:
This application was filed on 13.09.2024 as a
divisional application to the application mentioned
under INID code 62.

(54) **APPARATUS AND METHOD FOR TRANSMITTING AND RECEIVING CONTROL INFORMATION AND DATA IN COMMUNICATION SYSTEM**

(57) The present disclosure relates to a communication method and system for converging a 5th-Generation (5G) communication system for supporting higher data rates beyond a 4th-Generation (4G) system with a technology for Internet of Things (IoT). The present disclosure may be applied to intelligent services based on the 5G communication technology and the IoT-related technology, such as smart home, smart building, smart city, smart car, connected car, health care, digital education, smart retail, security and safety services. A method for transmitting control information in a wireless communication system, according to an embodiment of the present disclosure, may comprise: a method for designing a CQI table to transmit channel state information (CSI); or a method for using the designed CQI table. Also, the method may comprise: a method for designing a CQI table designed when supported services or target BLERs are different from each other; or a method for using the designed CQI table. In addition, the method may comprise a method for determining or configuring an appropriate MCS by using a suitable MCS table corresponding to the CQI table, or a designed MCS table. Moreover, the method may comprise an SINR mapping method and an MCS configuration method, on the basis of CQI information which has been reported from a terminal.

FIG. 3

**Description**

This divisional application is filed based on PCT application No. PCT/KR2021/014839 as filed on 21 October 2021 (European patent application No. 21883300.2), which claims priorities of Korean patent application No. 10-2020-0137850 filed on 22 Oct 2020.

**[Technical Field]**

The disclosure relates to a communication or broadcast system and, more specifically, to an apparatus and a method for transmitting or receiving control information in a communication or broadcast system.

**[Background Art]**

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier(FBMC), non-orthogonal multiple access(NOMA), and sparse code multiple access (SCMA) as an advanced access technology have been developed.

New radio (NR), which is new 5G communication, is designed to allow various services to be freely multiplexed in time and frequency resources, and accordingly, waveform/numerology and reference signals may be dynamically or freely allocated according to the needs of a corresponding service. In order to provide an optimal service to a terminal in communication, data transmission optimized through measurement of channel quality and interference amounts is important, and accurate measurement of a channel state is indispensable accordingly. However, unlike 4G communication in which channel and interference characteristics do not largely change with respect to frequency resources, in a case of 5G channels, channel and interference characteristics largely change depending on service. Therefore, support of subsets at the level of frequency resource groups (FRGs) allowing separate measurement is required. The types of services supported in an NR system may be divided according to categories, such as enhanced mobile broadband (eMBB), massive machine type communications (mMTC), and ultra-reliable and low-latency communications (URLLC). The service eMBB is considered as a service aiming for high-speed transmission of a large amount of data, mMTC is a service aiming for terminal power minimization and access by multiple terminals, and URLLC is a service aiming for high reliability and low latency. Different requirements may be applied according to the type of a service applied to a terminal.

As described above, multiple services may be provided to a user in a communication system, and in order to provide multiple services to a user, a method for providing each service to a user according to the feature of the service and a device using the method are required.

**[Disclosure of Invention]**

**[Technical Problem]**

The disclosure provides an apparatus and method for generating, configuring, or indicating channel quality indicator (CQI) and modulation and coding scheme (MCS) tables in a communication system requiring various target block error rates (BLERs).

**[Solution to Problem]**

A method for transmitting control information in a wireless communication system according to an embodiment of the disclosure may include a method for designing a CQI table to transmit channel state information (CSI) or a method for using a designed CQI table. In addition, the method may include a method for designing a CQI table designed in case that support services or target BLERs are different from each other, or a method for using a designed CQI table.

In addition, the method may include a method for determining or configuring a proper MCS by using a suitable MCS table corresponding to the CQI table or a designed MCS table. Moreover, the method may include a method for SINR mapping and a method for MCS configuration, based on CQI information reported from a terminal. In addition, the method may include a method for efficiently skipping LDPC coding, based on a determined MCS level and a transport block size

In addition, a method for performing decoding by a terminal or a base station of a wireless communication system according to an embodiment of the disclosure includes: receiving a reception signal corresponding to a transport block; identifying an MCS level applied to the transport block, based on the received signal; determining a transport block size (TBS), based on the MCS level; and determining whether to skip LDPC decoding, based on the reception signal and the TBS, wherein the LDPC decoding is skipped in case that the MCS level is configured to a highest MCS level and the TBS is equal to or smaller than a reference value.

In addition, a terminal or a base station for performing decoding in a wireless communication system according to an embodiment of the disclosure includes: a transceiver; and a controller configured to receive a reception signal corresponding to a transport block via the transceiver, identify an MCS level applied to the transport block, based on the received signal, determine a transport block size (TBS), based on the MCS level, and determine whether to skip LDPC decoding, based on the reception signal and the TBS, wherein the LDPC decoding is skipped in case that the MCS level is configured to a highest MCS level and the TBS is equal to or smaller than a reference value.

In addition, a method for performing decoding by a receiver of a wireless communication system according to an embodiment of the disclosure includes: receiving a reception signal corresponding to a transport block; identifying an MCS level applied to the transport block, based on the received signal; determining a transport block size (TBS), based on the MCS level; determining an effective code rate, based on the TBS and the number (a number of physical channel bits on PDSCH) of physical channel bits transmitted through a PDSCH; and determining whether to skip LDPC decoding, based on the reception signal and the TBS, wherein the LDPC decoding process is skipped in case that the TBS is equal to or smaller than a first reference value and the effective code rate is equal to or greater than a second reference value.

In addition, a receiver of a wireless communication system, for performing decoding according to an embodiment of the disclosure includes: a transceiver; and a controller configured to receive a reception signal corresponding to a transport block via the transceiver, identify an MCS level applied to the transport block, based on the received signal, determine a transport block size (TBS), based on the MCS level, determine an effective code rate, based on the TBS and the number (a number of physical channel bits on PDSCH) of physical channel bits transmitted through a PDSCH, and determine whether to skip LDPC decoding, based on the reception signal and the TBS, wherein the LDPC decoding process is skipped in case that the TBS is equal to or smaller than a first reference value and the effective code rate is equal to or greater than a second reference value.

In addition, a method for determining a modulation and coding scheme (MCS) level for downlink transmission by a base station in a wireless communication system according to an embodiment of the disclosure may include: receiving a channel quality indicator (CQI) from a terminal; identifying at least one of the number of CSI-RS ports or a rank index; determining a signal-to-interference-plus-noise ratio (SINR) value, based on the received CQI information; performing SINR normalization, based on the determined SINR value and at least one of the number of CSI-RS ports or the rank index; and determining an MCS, based on the normalized SINR value.

### [Advantageous Effects of Invention]

According to an embodiment of the disclosure, when communication is performed between a base station and a terminal, a suitable CQI table or MCS table corresponding to a required target BLER may be used whereby more efficient communication is possible.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

FIG. 1 illustrates a wireless communication system according to an embodiment of the disclosure;
FIG. 2 illustrates a configuration of a base station in a wireless communication system according to an embodiment of the disclosure;
FIG. 3 illustrates a configuration of a terminal in a wireless communication system according to an embodiment of the disclosure;
FIG. 4A illustrates a configuration of a communicator in a wireless communication system according to an embodiment of the disclosure;

FIG. 4B illustrates an example of a configuration of an analog beamformer of a communicator in a wireless communication system according to an embodiment of the disclosure;

FIG. 4C illustrates another example of a configuration of an analog beamformer of a communicator in a wireless communication system according to an embodiment of the disclosure;

FIG. 5 illustrates a resource structure of a time-frequency domain in a wireless communication system according to an embodiment of the disclosure;

FIG. 6A illustrates an example of allocation of pieces of service-specific data to frequency-time resources in a wireless communication system according to an embodiment of the disclosure;

FIG. 6B illustrates another example of allocation of pieces of service-specific data to frequency-time resources in a wireless communication system according to an embodiment of the disclosure;

FIG. 6C illustrates an example of a control resource set (CORESET) on which a downlink control channel is transmitted in a wireless communication system according to an embodiment of the disclosure;

FIG. 6D illustrates an example in which an REG 6d03, a basic unit of downlink control channels, includes both: REs to which downlink control information (DCI) is mapped; and an area in which a DMRS 6d05, a reference signal for decoding same, is mapped, according to an embodiment of the disclosure;

FIG. 6E illustrates an example of an aperiodic CSI reporting method according to an embodiment of the disclosure;

FIG. 6F illustrates another example of an aperiodic CSI reporting method according to an embodiment of the disclosure;

FIG. 7 illustrates an example of transmission of a channel quality indicator (CQI), one of pieces of channel state information of a terminal according to interference strength and signal energy measured by the terminal according to an embodiment of the disclosure;

FIG. 8 is a diagram illustrating a scheduling method according to an embodiment of the disclosure;

FIG. 9A is a diagram illustrating an example of a method of transmitting a PDCCH indicating retransmission according to an embodiment of the disclosure;

FIG. 9B is a diagram illustrating another example of a method of transmitting a PDCCH indicating retransmission according to an embodiment of the disclosure;

FIG. 10A is a diagram illustrating a method of transmitting a PDCCH indicating retransmission according to an embodiment of the disclosure;

FIG. 10B is another diagram illustrating a method of transmitting a PDCCH indicating retransmission according to an embodiment of the disclosure;

FIG. 11A is a diagram illustrating an embodiment of transmitting a PDCCH indicating retransmission according to an embodiment of the disclosure;

FIG. 11B is another diagram illustrating an embodiment of transmitting a PDCCH indicating retransmission according to an embodiment of the disclosure;

FIG. 12 illustrates a flowchart of a method for calculating a TBS by a terminal by using CQI and MCS tables according to an embodiment of the disclosure;

FIG. 13 illustrates a flowchart of another method for calculating a TBS by a terminal by using CQI and MCS tables according to an embodiment of the disclosure; and

FIG. 14 illustrates a flowchart of performing SINR mapping, based on CQI information received from a terminal according to an embodiment of the disclosure.

**[Mode for the Invention]**

Hereinafter, exemplary embodiments of the disclosure will be described in detail with reference to the accompanying drawings. In describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Based on determinations by those skilled in the art, the main idea of the disclosure may also be applied to other systems having similar technical backgrounds through some modifications without significantly departing from the scope of the disclosure. For reference, the meaning of the term "communication system" generally includes a broadcast system, but in the case of a communication system the main service of which is a broadcast service, the communication system may be definitely named a broadcast system.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Hereinafter, various embodiments of the disclosure will be described based on an approach of hardware. However, various embodiments of the disclosure include a technology that uses both hardware and software, and thus the various embodiments of the disclosure may not exclude the perspective of software.

Hereinafter, the disclosure relates to an apparatus and a method for transmitting or receiving control information in a communication system. Specifically, the disclosure describes a technology for transmitting or receiving control information, based on channel quality indicator (CQI) and modulation coding scheme (MCS) tables in a wireless communication system.

In the following description, terms referring to signals, terms referring to channels, terms referring to control information, terms referring to network entities, terms referring to device elements, and the like are illustratively used for the convenience of description. Therefore, the disclosure is not limited by the terms as described below, and other terms referring to subjects having equivalent technical meanings may be used.

Furthermore, in the following description, various embodiments of the disclosure will be described using terms employed in some communication standards (e.g., the 3rd generation partnership project (3GPP)), but they are merely used for the sake of illustrative description. Various embodiments of the disclosure may be easily modified and applied to other communication systems.

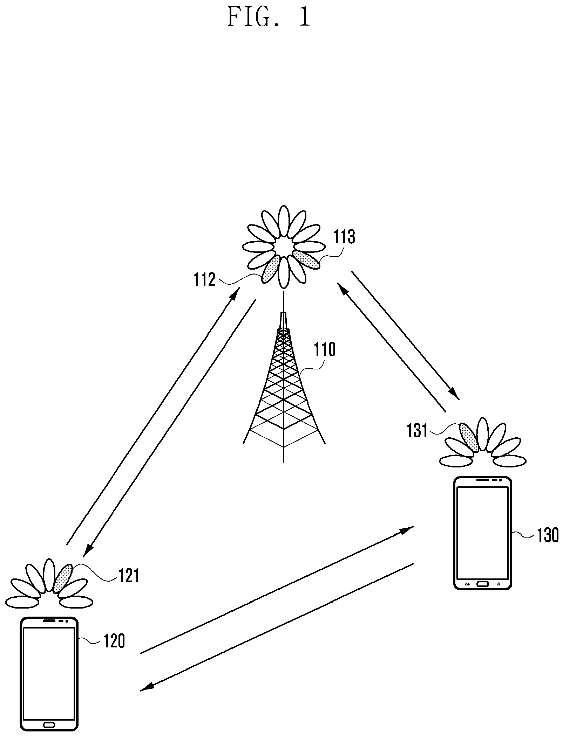

FIG. 1 illustrates a wireless communication system according to an embodiment of the disclosure. FIG. 1 shows an example of a base station 110, a terminal 120, and a terminal 130 as some of nodes using wireless channels in a wireless communication system. Although FIG. 1 illustrates only one base station, another base station identical to or similar to the base station 110 may be further included.

The base station 110 is a network infrastructure that provides wireless access to the terminals 120 and 130. The base station 110 has a coverage defined as a particular geographic area, based on a distance by which the base station is able to transmit a signal. The base station 110 may be called, other than a base station, "an access point (AP)", "an eNodeB (eNB)", "a 5th generation node (5G node)", "a wireless point", "a transmission/reception point (TRP)" or other terms having a technical meaning equivalent thereto.

Each of the terminals 120 and 130 is a device used by a user and communicates with the base station 110 through a wireless channel. In some cases, at least one of the terminals 120 and 130 may be operated without involvement of a user. For example, in case that at least one of the terminals 120 and 130 is a device which performs machine type communication (MTC), the at least one may not be carried by a user. Each of the terminals 120 and 130 may be called, other than a terminal, "a user equipment (UE)", "a mobile station", "a subscriber station", "a remote terminal", "a wireless terminal", "a user device", or another term having a technical meaning equivalent thereto.

The base station 110, the terminal 120, and the terminal 130 may transmit and receive a wireless signal in millimeter wave (mmWave) bands (e.g., 28 GHz, 30 GHz, 38 GHz, and 60 GHz). To improve a channel gain, the base station 110 and the terminals 120 and 130 may perform beamforming. Beamforming may include transmission beamforming and reception beamforming. That is, the base station 110 and the terminals 120 and 130 may give directivity to a transmission signal or a reception signal. To this end, the base station 110 and the terminals 120 and 130 may select serving beams 112, 113, 121, and 131 through a beam search or beam management procedure. Communication after the serving beams 112, 113, 121, and 131 are selected may be performed through resources having a quasi-co-located (QCL) relationship with resources used for transmission of the serving beams 112, 113, 121, and 131.

If large-scale characteristics of a channel having transferred a symbol on a first antenna port are inferable from a channel having transferred a symbol on a second antenna port, the first antenna port and the second antenna port may be assessed as having a QCL relationship therebetween. For example, the large-scale characteristics may include at least one of delay spread, Doppler spread, Doppler shift, average gain, average delay, and spatial receiver parameter.

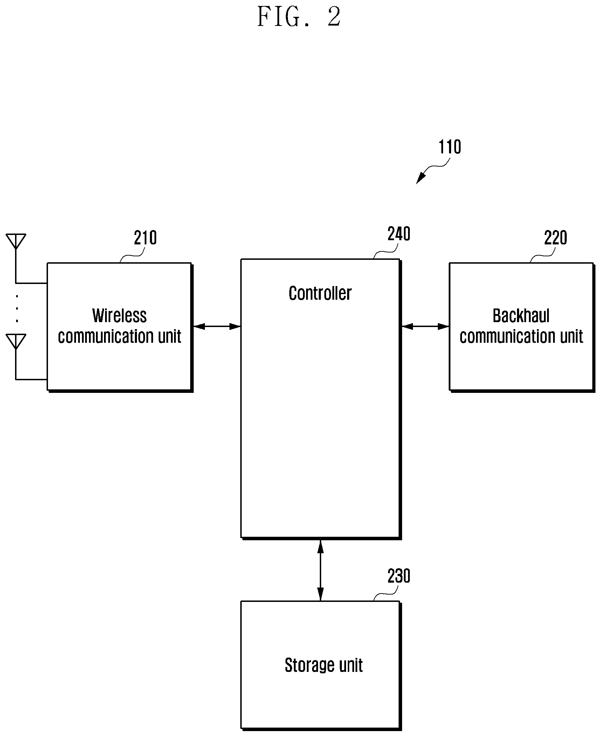

FIG. 2 illustrates a configuration of a base station in a wireless communication system according to an embodiment of the disclosure. The configuration illustrated in FIG. 2 may be understood as a configuration of the base station 110. The term "...unit" or the ending of a word, such as "...or", "... er", or the like used hereinafter may mean a unit of processing at least one function or operation, and this may be embodied by hardware, software, or a combination of hardware and software.

Referring to FIG. 2, a base station includes a wireless communicator 210, a backhaul communicator 220, a storage 230, and a controller 240.

The wireless communicator 210 performs functions for transmitting or receiving a signal through a wireless channel. The wireless communicator 210 may perform a function of conversion between a baseband signal and a bitstream according to physical layer specifications of a system. For example, when data is transmitted, the wireless communicator 210 generates complex symbols by encoding and modulating a transmission bitstream. Furthermore, when data is received, the wireless communicator 210 reconstructs a reception bitstream by demodulating and decoding a baseband signal.

Furthermore, the wireless communicator 210 up-converts a baseband signal into a radio-frequency (RF) band signal and then transmits the converted RF band signal through an antenna, and down-converts an RF band signal received through an antenna into a baseband signal. To this end, the wireless communicator 210 may include a transmission filter, a reception filter, an amplifier, a mixer, an oscillator, a digital-to-analog converter (DAC), an analog-to-digital converter (ADC), and the like. In addition, the wireless communicator 210 may include a plurality of transmission/reception paths. Furthermore, the wireless communicator 210 may include at least one antenna array configured by multiple antenna elements.

In view of hardware, the wireless communicator 210 may be configured by a digital unit and an analog unit, and the analog unit may include a plurality of subunits according to operating power, operating frequency, etc. The digital unit may be implemented as at least one processor (e.g., a digital signal processor (DSP)).

The wireless communicator 210 may transmit and receive a signal as described above. Accordingly, the entirety or a part of the wireless communicator 210 may be called "a transmitter", "a receiver", or "a transceiver". Furthermore, in the following description, transmission and reception performed through a wireless channel is used as a meaning of including the above processing being performed by the wireless communicator 210. In some embodiments, the wireless communicator 210 performs functions for transmitting or receiving a signal by using wired communication.

The backhaul communicator 220 provides an interface for performing communication with other nodes within a network. That is, the backhaul communicator 220 converts, into a physical signal, a bitstream transmitted from the base station to another node, for example, another access node, another base station, a higher node, a core network, etc., and converts a physical signal received from another node into a bitstream.

The storage 230 stores data such as a basic program, an application program, and configuration information for operation of the base station. The storage 230 may be configured as a volatile memory, a nonvolatile memory, or a combination of a volatile memory and a nonvolatile memory. The storage 230 provides stored data according to a request of the controller 240.

The controller 240 controls overall operations of the base station. For example, the controller 240 transmits and receives a signal through the wireless communicator 210 or the backhaul communicator 220. In addition, the controller 240 records and reads data in and from the storage 230. In addition, the controller 240 may perform functions of a protocol stack required in a communication protocol. According to another embodiment, the protocol stack may be included in the wireless communicator 210. To this end, the controller 240 may include at least one processor.

According to an embodiment, the controller 240 may transmit or receive control information to or from the terminal 120. For example, the controller 240 may control the base station to perform operations according to an embodiment described later.

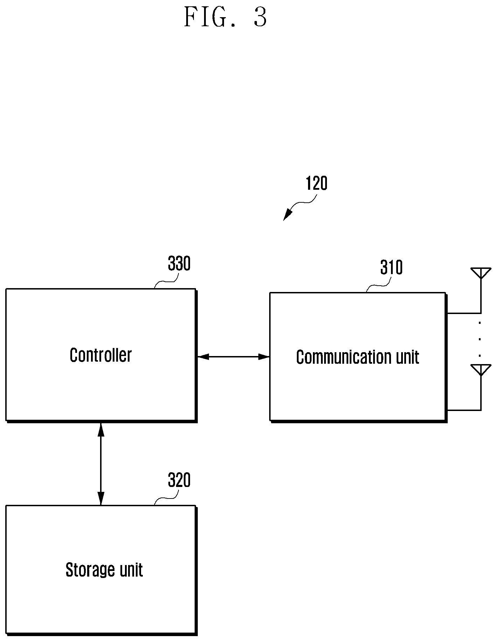

FIG. 3 illustrates a configuration of a terminal in a wireless communication system according to an embodiment of the disclosure. The configuration illustrated in FIG. 3 may be understood as a configuration of the terminal 120. The term "...unit" or the ending of a word, such as "...or", "... er", or the like used hereinafter may mean a unit of processing at least one function or operation, and this may be embodied by hardware, software, or a combination of hardware and software.

Referring to FIG. 3, a terminal includes a communicator 310, a storage 320, and a controller 330.

The communicator 310 performs functions for transmitting or receiving a signal through a wireless channel. For example, the communicator 310 may perform a function of conversion between a baseband signal and a bitstream according to physical layer specifications of a system. For example, when data is transmitted, the communicator 310 generates complex symbols by encoding and modulating a transmission bitstream. In addition, when data is received, the communicator 310 reconstructs a reception bitstream by demodulating and decoding a baseband signal. Furthermore, the communicator 310 up-converts a baseband signal into an RF band signal and then transmits the converted RF band signal through an antenna, and down-converts an RF band signal received through an antenna into a baseband signal. For example, the communicator 310 may include a transmission filter, a reception filter, an amplifier, a mixer, an oscillator, a DAC, an ADC, and the like.

In addition, the communicator 310 may include a plurality of transmission/reception paths. Furthermore, the communicator 310 may include at least one antenna array including a plurality of antenna elements. In view of hardware, the communicator 310 may be configured as a digital circuit and an analog circuit (e.g., radio-frequency integrated circuit (RFIC)). The digital circuit and the analog circuit may be implemented as a single package. Furthermore, the communicator 310 may include a plurality of RF chains. Moreover, the communicator 310 may perform beamforming.

In addition, the communicator 310 may include different communication modules to process signals in different frequency bands. Furthermore, the communicator 310 may include a plurality of communication modules for supporting a plurality of different wireless access technologies. For example, the different wireless access technologies may include Bluetooth low energy (BLE), wireless fidelity (Wi-Fi), Wi-Fi gigabyte (WiGig), a cellular network (e.g., long-term evolution (LTE)) and the like. In addition, the different frequency bands may include a super high frequency (SHF) (e.g., 2.5 GHz and 5 GHz) band, and a millimeter (mm) wave (e.g., 60 GHz) band.

The communicator 310 transmits and receives a signal as described above. Accordingly, the entirety or a part of the communicator 310 may be called "a transmitter", "a receiver", or "a transceiver". Furthermore, in the following description, transmission and reception performed through a wireless channel is used as a meaning of including the above processing being performed by the communicator 310. In some embodiments, the communicator 310 performs functions for transmitting or receiving a signal by using wired communication.

The storage 320 stores data such as a basic program, an application program, and configuration information for operation of the terminal. The storage 320 may be configured as a volatile memory, a nonvolatile memory, or a combination of a volatile memory and a nonvolatile memory. The storage 320 provides stored data according to a request of the controller 330.

The controller 330 controls overall operations of the terminal. For example, the controller 330 transmits and receives a signal through the communicator 310. In addition, the controller 330 records and reads data in and from the storage 320. In addition, the controller 330 may perform functions of a protocol stack required in a communication protocol. To this end, the controller 330 may include at least one processor or microprocessor, or may be a part of a processor. Furthermore, the controller 330 and a part of the communicator 310 may be called a communication processor (CP).

According to an embodiment, the controller 330 may transmit or receive control information to or from the base station 110. For example, the controller 330 may control a terminal to perform operations according to an embodiment described later.

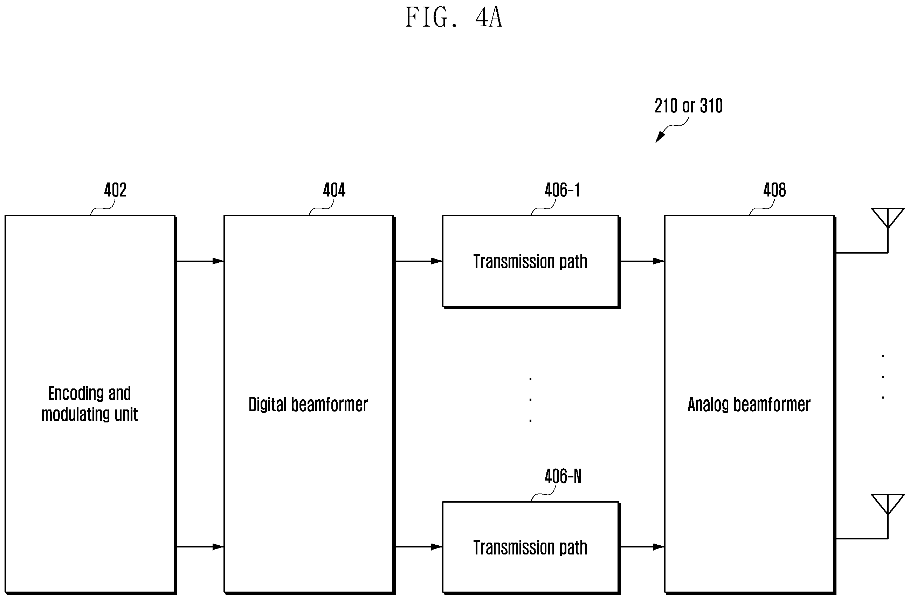

FIG. 4A to FIG. 4C illustrate a configuration of a communicator in a wireless communication system according to an embodiment of the disclosure. FIG. 4A to FIG. 4C illustrate an example of a specific configuration of the wireless communicator 210 illustrated in FIG. 2 or the communicator 310 illustrated in FIG. 3. Specifically, FIG. 4A to FIG. 4C illustrate elements configured to perform beamforming, which are a part of the wireless communicator 210 in FIG. 2 or the communicator 310 in FIG. 3.

Referring to FIG. 4A, the wireless communicator 210 or the communicator 310 includes an encoding and modulating unit 402, a digital beamformer 404, a plurality of transmission paths 406-1 to 406-N, and an analog beamformer 408.

The encoding and modulating unit 402 performs channel encoding. For channel encoding, at least one of a low density parity check (LDPC) code, a convolution code, and a polar code may be used. The encoding and modulating unit 402 generates modulation symbols by performing constellation mapping.

The digital beamformer 404 performs beamforming for a digital signal (e.g., modulation symbols). To this end, the digital beamformer 404 multiplies beamforming weights to modulation symbols. The beamforming weights are used for changing the size and the phase of signals, and may be called "a precoding matrix", "a precoder", etc. The digital beamformer 404 outputs, to the plurality of transmission paths 406-1 to 406-N, modulation symbols which have been digital-beamformed. According to a multiple input multiple output (MIMO) transmission technique, the modulation symbols may be multiplexed, or the same modulation symbols may be provided to the plurality of transmission paths 406-1 to 406-N.

The plurality of transmission paths 406-1 to 406-N convert, into analog signals, digital-beamformed digital signals. To this end, each of the plurality of transmission paths 406-1 to 406-N may include an inverse fast Fourier transform (IFFT) operator, a cyclic prefix (CP) inserter, a DAC, and an upconverter. The CP inserter is designed for an orthogonal frequency division multiplexing (OFDM) scheme, and may be excluded in a case where a different physical layer scheme (e.g., filter bank multi-carrier (FBMC)) is applied. That is, the plurality of transmission paths 406-1 to 406-N provide independent signal processing processes for multiple streams generated through digital beamforming, respectively. However, according to an implementation method, a part of the elements of each of the plurality of transmission paths 406-1 to 406-N may be shared.

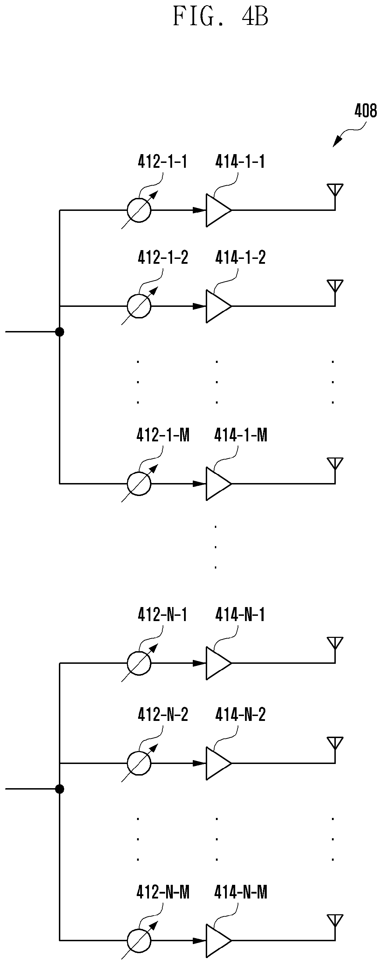

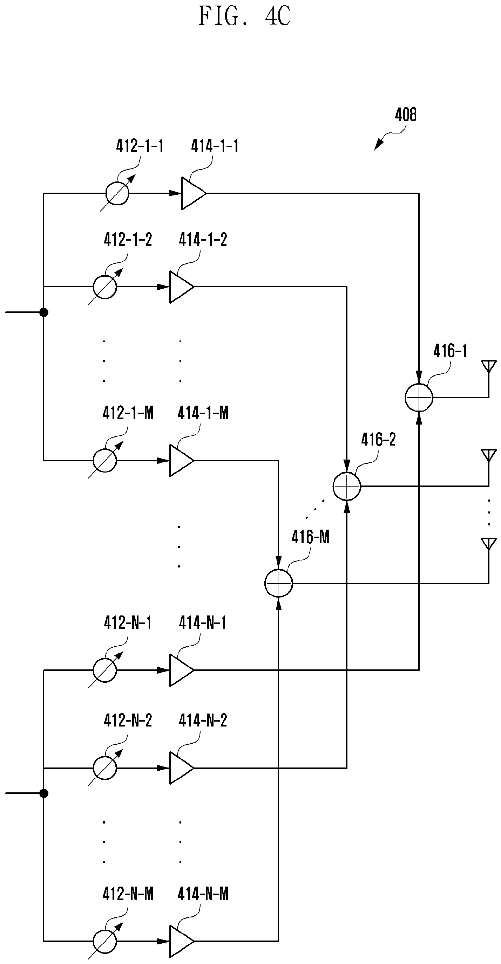

The analog beamformer 408 performs beamforming on an analog signal. To this end, the digital beamformer 404 multiplies beamforming weights to analog signals. The beamforming weights are used for changing the size and the phase of a signal. Specifically, according to a connection structure between the plurality of transmission paths 406-1 to 406-N and antennas, the analog beamformer 408 may be configured as illustrated in FIG. 4B or FIG. 4C.

Referring to FIG. 4B, signals input to the analog beamformer 408 undergo phase/size conversion and amplification operations, and are then transmitted through antennas. The signals in the paths are transmitted through different antenna sets, that is, antenna arrays, respectively. In relation to processing of a signal input through a first path, the signal is converted into a signal stream including signals having an identical phase or size or different phases or sizes by phase/size converters 412-1-1 to 412-1-M, the converted signal stream is amplified by amplifiers 414-1-1 to 414-1-M, and then the amplified signal stream is transmitted through antennas, respectively.

Referring to FIG. 4C, signals input to the analog beamformer 408 undergo phase/size conversion and amplification operations, and are then transmitted through antennas. The signals in the paths are transmitted through an identical antenna set, that is, an antenna array. In relation to processing of a signal input through a first path, the signal is converted into a signal stream including signals having an identical phase or size or different phases or sizes by phase/size converters 412-1-1 to 412-1-M, and the converted signals are amplified by amplifiers 414-1-1 to 414-1-M.

In order to be transmitted through a single antenna array, amplified signals are added together based on antenna elements by adding units 416-1-1 to 416-1-M, and then the added signals are transmitted through the antennas, respectively.

FIG. 4B illustrates an example of using independent antenna arrays for transmission paths, and FIG. 4C illustrates an example of sharing a single antenna array between transmission paths. However, according to another embodiment, some transmission paths may use independent antenna arrays, and the remaining transmission paths may share a single antenna array. Furthermore, according to yet other embodiment, a switchable structure between transmission paths and antenna arrays may be applied to allow use of a structure which is changeable adaptively according to a situation.

A long term evolution (LTE) system, which is a representative example of a broadband wireless communication system, employs an orthogonal frequency division multiplexing (OFDM) scheme for downlink, and employs a single carrier frequency division multiple access (SC-FDMA) scheme for uplink. In the multi-access schemes described above, time-frequency resources for transmitting data or control information are allocated and managed to prevent overlapping between users, that is, to accomplish the orthogonality, thereby distinguishing data or control information according to each user.

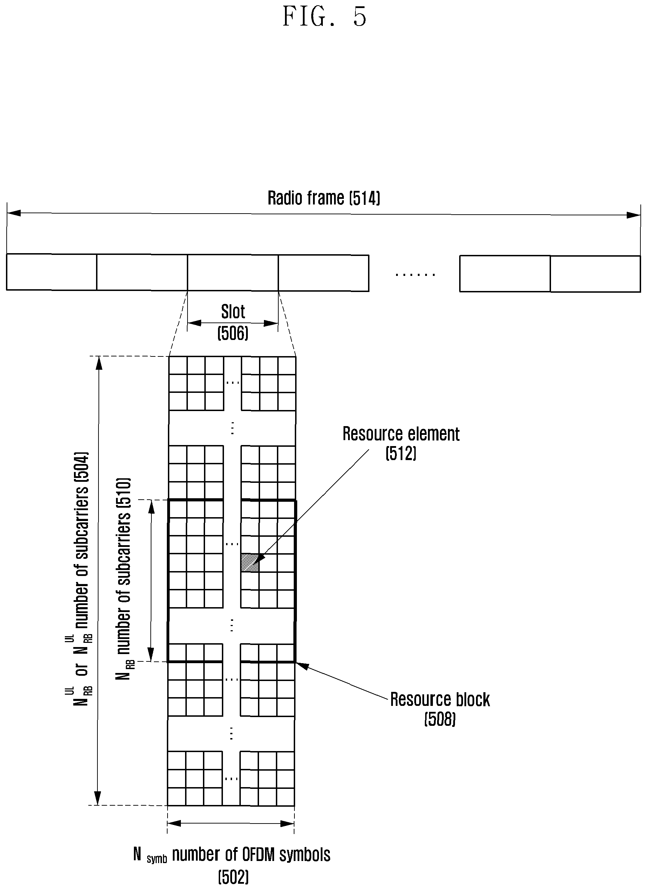

FIG. 5 illustrates a resource structure of a time-frequency domain in a wireless communication system according to an embodiment of the disclosure. FIG. 5 shows an example of a basic structure of a time-frequency domain which is a wireless resource area in which data or a control channel is transmitted in downlink or uplink.

In FIG. 5, the transverse axis indicates a time domain, and the longitudinal axis indicates a frequency domain. In the time domain, the minimum transmission unit is an OFDM symbol, and $N_{symb}$ number of OFDM symbols 502 constitute one slot 506. The length of a subframe may be defined as 1 ms, and the length of a radio frame 514 may be defined as 10 ms. In the frequency domain, the minimum transmission unit is a subcarrier and the bandwidth of the entire system transmission band is configured by a total of $N_{BW}$ subcarriers 504. Specific numerical values, such as $N_{symb}$ and $N_{BW}$, may be variably applied according to a system.

In the time-frequency domain, a basic unit of resources is a resource element (hereinafter, "RE") 512, and may be represented by an OFDM symbol index and a subcarrier index. A resource block (RB or physical resource block, hereinafter, "PRB") 508 is defined as $N_{symb}$ number of consecutive OFDM symbols 502 in the time domain and $N_{RB}$ number of consecutive subcarriers 510 in the frequency domain. Therefore, one RB 508 includes $N_{symb} X N_{RB}$ number of REs 512. Generally, a minimum transmission unit of data is an RB. In an NR system, generally, $N_{symb}$ is equal to 14, $N_{RB}$ is equal to 12, and $N_{BW}$ and $N_{RB}$ are proportional to the bandwidth of a system transmission band. A data transmission rate (data rate) may increase in proportional to the number of RBs scheduled to a terminal. In an NR system, in a case of frequency division duplex (FDD) system operating an uplink and a downlink by distinguishing them according to frequency, a downlink transmission bandwidth and an uplink transmission bandwidth may be different from each other. A channel bandwidth indicates a radio frequency (RF) bandwidth corresponding to a system transmission bandwidth.

[Table 1] and [Table 2] show a part of a correlation between a system transmission bandwidth, a subcarrier spacing

(SCS), and a channel bandwidth defined in an NR system in a frequency band lower than 6 GHz and a frequency band higher than 6 GHz. For example, a transmission bandwidth is configured by 273 RBs in an NR system having a 100 MHz channel bandwidth at a 30 kHz subcarrier spacing. In [Table 1] and [Table 2], N/A may be a bandwidth-subcarrier combination not supported in an NR system.

[Table 1]

| Channel bandwidth [MHz] | SCS | 5 | 10 | 20 | 50 | 80 | 100 |
|---|---|---|---|---|---|---|---|
| Transmission bandwidth configuration ($N_{RB}$) | 15 kHz | 25 | 52 | 106 | 207 | N/A | N/A |
| | 30 kHz | 11 | 24 | 51 | 133 | 217 | 273 |
| | 60 kHz | N/A | 11 | 24 | 65 | 107 | 135 |

[Table 2]

| Channel bandwidth [MHz] | SCS | 50 | 100 | 200 | 400 |
|---|---|---|---|---|---|
| Transmission bandwidth configuration ($N_{RB}$) | 60 kHz | 66 | 132 | 264 | N/A |
| | 120 kHz | 32 | 66 | 132 | 264 |

In an NR system, scheduling information for downlink data or uplink data is transferred from a base station to a terminal through downlink control information (hereinafter, "DCI"). DCI is defined in various formats. According to each format, whether the DCI is an uplink grant that is scheduling information for uplink data, or a downlink grant that is scheduling information for downlink data, whether the DCI is compact DCI having small size control information, whether spatial multiplexing using multiple antennas is applied, or whether the DCI is DCI used for power control may be determined. For example, DCI format 1-1 that is scheduling control information for downlink data may include at least one of items as shown in [Table 3] below.

[Table 3]

| Items | Contents |
|---|---|
| Carrier indicator | This indicates a frequency carrier on which transmission is performed. |
| DCI format indicator | This is an indicator for distinguishing whether corresponding DCI is used for downlink or uplink. |
| Bandwidth part (BWP) indicator | This indicates a BWP in which transmission is performed. |
| Frequency domain resource allocation | This indicates an RB in the frequency domain, allocated for data transmission. A represented resource is determined according to a system bandwidth and a resource allocation scheme. |
| Time domain resource allocation | This indicates an OFDM symbol and a slot on which a data-related channel is to be transmitted. |
| VRB-to-PRB mapping | This indicates a method in which a virtual RB (VRB) index and a physical RB (PRB) index are to be mapped. |
| Modulation and coding scheme (MCS) | This indicates a modulation scheme and a coding rate used for data transmission. That is, this may indicates a coding rate value providing a TBS and channel coding information together with information indicating whether the modulation scheme is QPSK, 16QAM, 64QAM, or 256QAM. |
| Codeblock group (CBG) transmission information | This indicates information on a CBG to be transmitted in case that CBG retransmission is configured. |
| HARQ process number | This indicates a process number of HARQ. |
| New data indicator (NDI) | This indicates HARQ initial transmission or retransmission. |
| Redundancy version (RV) | This indicates a redundancy version of HARQ. |
| Transmit power control command (TPC) for physical uplink control channel (PUCCH) | This indicates a transmit power control command for a PUCCH that is an uplink control channel. |

In [Table 3], in a case of physical downlink shared channel (PDSCH) transmission, the time domain resource assignment may be represented by information on a slot on which a PDSCH is transmitted, S indicating the position of a starting symbol in the slot, and L indicating the number of symbols to which the PDSCH is mapped. Here, S may be a relative position from the start of the slot, L may be the number of consecutive symbols, and S and L may be determined from a start and length indicator value (SLIV) defined as below.

```
if (L-1) ≤ 7 then
              SLIV=14 · (L-1)+S
        else
              SLIV=14 · (14-L+11)+(14-1-S)
        where 0<L ≤ 14-S
```

In an NR system, information on a correlation between a SLIV value, a PDSCH or physical uplink shared channel (PUSCH) mapping type, and information on a slot on which a PDSCH or a PUSCH is transmitted may be constructed or configured in one row through radio resource control (RRC) configuration in general. Then, the time domain resource assignment of DCI is used to indicate an index value defined in the configured correlation, whereby a base station may transfer, to a terminal, a SLIV value, a PDSCH or PUSCH mapping type, and information on a slot on which a PDSCH or PUSCH is transmitted.

In a case of an NR system, a PDSCH or PUSCH mapping type is defined as type A and type B. In a case of PDSCH or PUSCH mapping type A, a demodulation reference signal (DMRS) symbol starts on the second or third OFDM symbol in a slot. In a case of PDSCH or PUSCH mapping type B, a DMRS symbol starts on the first OFDM symbol of a time domain resource allocated through PUSCH transmission.

DCI may undergo channel coding and modulation, and then be transmitted through a physical downlink control channel (PDCCH) that is a downlink control channel. In the disclosure, a PDCCH may also be used to refer to control information itself rather than a channel. Generally, DCI is scrambled using a particular radio network temporary identifier (RNTI) or a terminal identifier independently for each terminal, obtains a cyclic redundancy check (CRC) thereto and is channel-coded, and then is configured to be an independent PDCCH to be transmitted. A PDCCH is mapped to a control resource set (CORESET) configured for a terminal.

Downlink data may be transmitted through a PDSCH that is a physical channel for downlink data transmission. A PDSCH may be transmitted after a control channel transmission interval, and scheduling information, such as a specific mapping position in the frequency domain and a modulation scheme, is indicated by DCI transmitted through a PDCCH. Through an MCS among pieces of control information included in and configuring DCI, a base station may notify a terminal of a target code rate and a modulation scheme applied to a PDSCH to be transmitted to the terminal, or a size (e.g., a transport block size (TBS)) of data to be transmitted. In an embodiment, an MCS may be configured by 5 bits or larger or smaller. A TBS corresponds to a size before channel coding for error correction is applied to a transport block (TB) that is data to be transmitted by a base station.

In the disclosure, a transport block (TB) may include a medium access control (MAC) header, a MAC control element (MAC CE), one or more MAC service data units (SDUs), and padding bits. In addition, a TB may indicate an MAC protocol data unit (PDU) or a unit of data delivered (or submitted) down from an MAC layer to a physical layer.

A modulation scheme supported by an NR system is quadrature phase shift keying (QPSK), 16 quadrature amplitude modulation (QAM), 64 QAM, and 256 QAM, and the modulation orders (Qm) thereof may be 2, 4, 6, and 8, respectively. That is, two bits per symbol may transmitted in a case of QPSK, four bits per symbol may transmitted in a case of 16 QAM, and six bits per symbol may transmitted in a case of 64 QAM. In a case of 256 QAM, eight bits per symbol may transmitted, and in case that 1024 QAM is supported, 10 bits for each symbol of 1024 QAM are mapped and then transmitted.

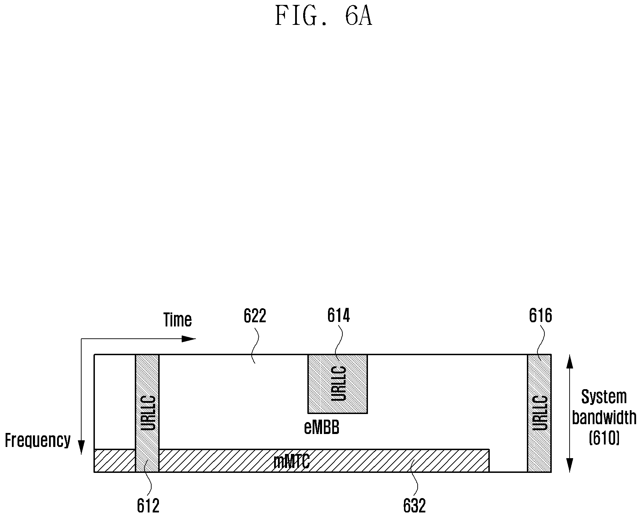

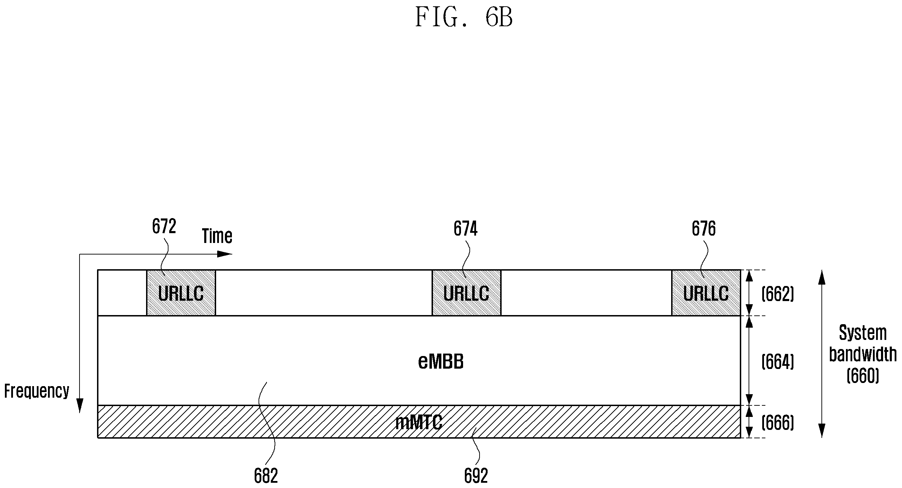

In view of service, an NR system is designed to allow various services to be freely multiplexed in time and frequency resources, and accordingly, waveform/numerology and reference signals may be dynamically or freely adjusted as needed. In order to provide an optimal service to a terminal in wireless communication, it is important to perform optimized data transmission through measurement of a channel quality and an interference amount, and accurate measurement of a channel state is indispensable accordingly. However, unlike 4G communication in which channel and interference characteristics do not largely change according to frequency resources, in a case of 5G channels, channel and interference characteristics largely change according to services. Therefore, support of a subset is required at the level of frequency resource groups (FRGs) allowing separate measurement. The types of services supported in an NR system may be divided into enhanced mobile broadband (eMBB), massive machine type communications (mMTC), and ultra-reliable and low-latency communications (URLLC). The service eMBB is a service aiming for high-speed transmission of a large amount of data, mMTC is a service aiming for terminal power minimization and access of multiple terminals, and URLLC is a service aiming for high reliability and low latency. Different requirements may be applied according to the type of a service applied to a terminal. Examples of resource distribution for each service are as shown in FIG. 6A and FIG. 6B described below. Hereinafter, referring to FIG. 6a and FIG. 6B, a scheme in which frequency and time resources are allocated for information transmission in each system is illustrated.

FIG. 6A illustrates an example of allocation of pieces of service-specific data to frequency-time resources in a wireless communication system according to an embodiment of the disclosure.

Referring to FIG. 6A, resources are allocated for eMBB 622, URLLC 612, 614, and 616, and mMTC 632 in an entire system frequency band 610. In case that data of URLLC 612, 614, and 616 is generated while data of eMBB 622 and data of mMTC 632 are assigned and transmitted in a particular frequency band, parts pre-allocated for eMBB 622 and mMTC 632 may be emptied, or the data of URLLC 612, 614, and 616 may be transmitted without transmission of the data of eMBB 622 and mMTC 632. URLLC requires reduced latency time, and thus resources for transmission of the data of URLLC 612, 614, and 616 may be allocated to some of resources allocated to eMBB 622. When URLLC 612, 614, and 616 is additionally assigned to the resources to which eMBB 622 is assigned, and then is transmitted, the data of eMBB 622 may not be transmitted and may exhibit lowered transmission performance in overlapped frequency-time resources. That is, in the above case, transmission of the data of eMBB 622 may fail due to resource allocation for URLLC 612, 614, and 616. A scheme as in FIG. 6A may be called a preemption scheme.

FIG. 6B illustrates another example of allocation of pieces of service-specific data to frequency-time resources in a wireless communication system according to an embodiment of the disclosure.

FIG. 6B shows an example in which services are provided in subbands 662, 664, and 666 obtained by dividing an entire system frequency band 660, respectively. Specifically, the subband 662 may be used for data transmission of URLLC 672, 674, and 576, the subband 664 may be used for data transmission of eMBB 682, and the subband 666 may be used for data transmission of mMTC 692. Information related to a configuration of the subbands 662, 664, and 666 may be determined in advance, or may be transmitted from a base station to a terminal through higher signaling. Alternatively, without separate transmission of, to a terminal, subband configuration information, a base station or a network node may randomly divide the subbands 662, 664, and 666 and provide services.

According to an embodiment, the length of a transmission time interval (TTI) used for URLLC transmission may be shorter than the length of a TTI used for eMBB or mMTC transmission. In addition, response of information related to URLLC may be transmitted faster compared to eMBB or mMTC, and accordingly, a terminal using URLLC service may transmit or receive information with low latency. Structures of physical layer channels used for respective types to transmit three services or data described above may be different from each other. For example, at least one of the length of a TTI, an allocation unit of frequency resource, a structure of a control channel, and a data mapping method may be different therebetween. So far, three services and three data types have been described, more types of services and data types corresponding thereto may exist. Even in this case, various embodiments described later may be carried out.

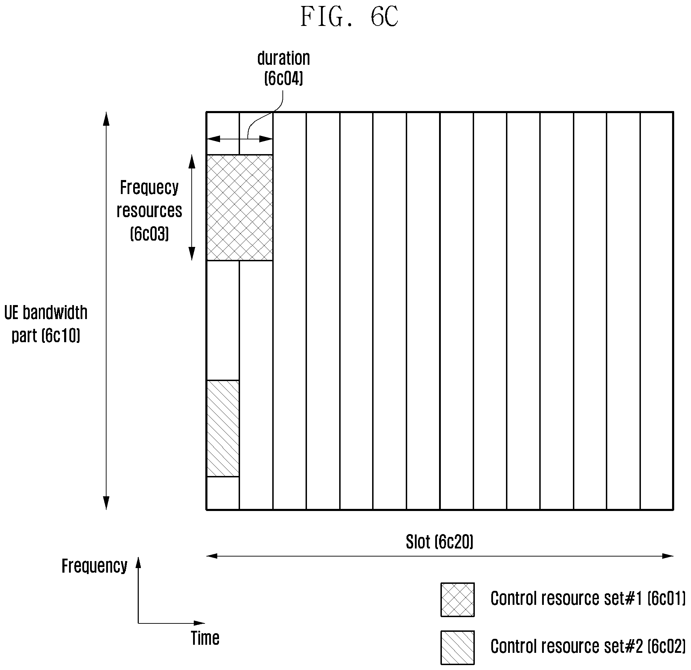

FIG. 6C illustrates an example of a control resource set on which a downlink control channel is transmitted in a wireless communication system according to an embodiment of the disclosure. FIG. 6C is a diagram showing an example in which a bandwidth part (UE bandwidth part) 6c10 of a terminal is configured along a frequency axis, and two control resource sets (control resource set #1 6c01 and control resource set #2 6c02) are configured in one slot 6c20 along a time axis. The control resource sets 6c01 and 6c02 may be configured on particular frequency resources 6c03 within the entire terminal bandwidth part 6c10 along the frequency axis. The control resource sets may be configured by one or multiple OFDM symbols along the time axis, and the symbols may be defined as a control resource set duration 6c04. With reference to the example illustrated in FIG. 6C, control resource set #1 6c01 may be configured to have a control resource set duration of two symbols, and control resource set #2 6c02 may be configured to have a control resource set duration of one symbol.

A control resource set in 5G, described above may be configured for a terminal by a base station through higher layer signaling (e.g., system information, master information block (MIB), and radio resource control (RRC) signaling). Configuring a control resource set for a terminal means providing information such as a control resource set identifier (identity), the frequency position of the control resource set, the symbol length of the control resource set, etc. For example, pieces of information provided to configure a control resource set are as below.

```
ControlResourceSet ::=                SEQUENCE {
    -- Corresponds to L1 parameter 'CORESET-ID'
    controlResourceSetId              ControlResourceSetId,
    frequencyDomainResources          BIT STRING (SIZE (45)),
    duration                          INTEGER (1..maxCoReSetDuration),
    cce-REG-MappingType               CHOICE {
        interleaved                   SEQUENCE {
            reg-BundleSize            ENUMERATED {n2, n3, n6},
            precoderGranularity       ENUMERATED {sameAsREG-bundle,
        allContiguousRBs},
            interleaverSize           ENUMERATED {n2, n3, n6}
            shiftIndex
            INTEGER(0..maxNrofPhysicalResourceBlocks-1)
            OPTIONAL
        },
        nonInterleaved                NULL
    },
    tci-StatesPDCCH                   SEQUENCE(SIZE (1..maxNrofTCI-StatesPDCCH))
        OF TCI-StateId                OPTIONAL,
    tci-PresentInDCI                  ENUMERATED {enabled}
}
```

In 5G, a control resource set may be configured by $N_{RB}^{CORESET}$ RBs in the frequency domain and $N_{symb}^{CORESET} \in \{1,2,3\}$ symbols in the time axis. One CCE may be configured by six REGs, and each REG may be defined as one RB for one OFDM symbol. In one control resource set, REGs may be indexed in a time-first sequence, starting from REG index 0 for the first OFDM symbol and the lowest RB in the control resource set.

5G supports an interleaving scheme and a non-interleaving scheme as a method for PDCCH transmission. A base station may configure, for a terminal through higher layer signaling, whether interleaving or non-interleaving transmission is performed for each control resource set. Interleaving may be performed in the unit of REG bundles. A REG bundle may be defined as a set of one or multiple REGs. A terminal may determine a scheme of CCE-to-REG mapping in a corresponding control resource set, based on whether interleaving or non-interleaving transmission is performed, which has been configured by a base station, as in the following scheme.

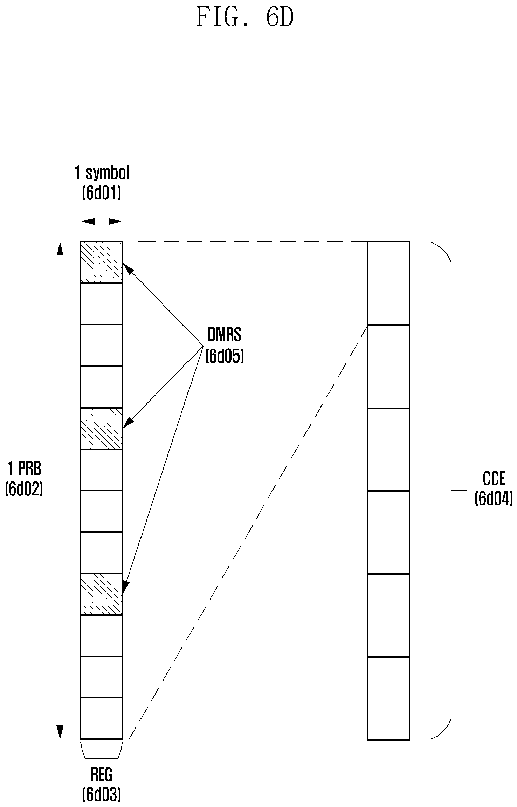

The basic unit of a downlink control channel, illustrated in FIG. 6D, that is, the REG 6d03, may include both: REs to which DCI is mapped; and an area to which a DMRS 6d05 that is a reference signal for decoding same is mapped. As illustrated in FIG. 6D, three DMRSs 6d05 may be transmitted in one REG 6d03. The number of CCEs required for transmitting a PDCCH may be 1, 2, 4, 8, and 16 according to aggregation levels (ALs), and different numbers of CCEs may be used to implement the link adaptation of a downlink control channel. For example, in case that AL is equal to L (AL=L), one downlink control channel may be transmitted through L number of CCEs. A terminal is required to detect a signal in the state where the terminal does not know information about a downlink control channel, and a search space indicating a set of CCEs is defined for blind decoding. A search space is a set of downlink control channel candidates configured by CCEs to which a terminal is required to attempt to decode at a given aggregation level. Since there are various aggregation levels grouping 1, 2, 4, 8, and 16 CCEs into one, a terminal may have a plurality of search spaces. A search space set may be defined as a set of search spaces at all configured aggregation levels.

Search spaces may be classified into a common search space and a terminal (UE)-specific search space. A particular group of terminals or all terminals may search a common search space of a PDCCH to receive cell-common control information such as a paging message or dynamic scheduling for system information. For example, PDSCH scheduling assignment information for transmission of an SIB including service provider information of a cell may be received by searching a common search space for a PDCCH. In the case of a common search space, a particular group of terminals or all terminals are required to receive a PDCCH, and thus the common search space may be defined as a pre-promised set of CCEs. Scheduling assignment information for a terminal-specific PDSCH or PUSCH may be received by searching a terminal-specific search space of a PDCCH. A terminal-specific search space may be defined terminal-specifically by using the identity of a terminal and a function of various system parameters.

In 5G, a parameter for a search space for a PDCCH may be configured for a terminal by a base station through higher layer signaling (e.g., SIB, MIB, and RRC signaling) For example, a base station may configure, for a terminal, the number of PDCCH candidates at each aggregation level L, a monitoring period for a search space, a monitoring occasion in the units of symbols in a slot of a search space, a search space type (common search space or terminal-specific search space), a combination of an RNTI and a DCI format to be monitored in a corresponding search space, and the index of a control resource set in which a search space is to be monitored. For example, a parameter for a search space for a PDCCH may include pieces of information below.

```
SearchSpace ::=                        SEQUENCE {
    -- Identity of the search space. SearchSpaceId = 0 identifies the SearchSpace configured
    via PBCH (MIB) or ServingCellConfigCommon.
    searchSpaceId                      SearchSpaceId,
    controlResourceSetId               ControlResourceSetId,
    monitoringSlotPeriodicityAndOffset CHOICE {
        sl1                            NULL,
        sl2                            INTEGER (0..1),
        sl4                            INTEGER (0..3),
        sl5                            INTEGER (0..4),
        sl8                            INTEGER (0..7),
        sl10                           INTEGER (0..9),
        sl16                           INTEGER (0..15),
        sl20                           INTEGER (0..19),
        sl40                           INTEGER (0..39),
        sl80                           INTEGER (0..79),
        sl160                          INTEGER (0..159),
        sl320                          INTEGER (0..319),
        sl640                          INTEGER (0..639),
        sl1280                         INTEGER (0..1279),
        sl2560                         INTEGER (0..2559)
    }
    duration                INTEGER (2..2559)
    monitoringSymbolsWithinSlot        BIT STRING (SIZE (14))
    nrofCandidates                     SEQUENCE {
        aggregationLevel1              ENUMERATED {n0, n1, n2, n3, n4, n5, n6, n8},
        aggregationLevel2              ENUMERATED {n0, n1, n2, n3, n4, n5, n6, n8},
        aggregationLevel4              ENUMERATED {n0, n1, n2, n3, n4, n5, n6, n8},
        aggregationLevel8              ENUMERATED {n0, n1, n2, n3, n4, n5, n6, n8},
        aggregationLevel16             ENUMERATED {n0, n1, n2, n3, n4, n5, n6, n8}
    },


    searchSpaceType                    CHOICE {
        -- Configures this search space as common search space (CSS) and DCI formats to monitor.
        common                         SEQUENCE {
    }
        ue-Specific                    SEQUENCE {
        -- Indicates whether the UE monitors in this USS for DCI formats 0-0 and 1-0 or for
        formats 0-1 and 1-1.
        formats                        ENUMERATED {formats0-0-And-1-0,
        formats0-1-And-1-1},

        ...
    }
```

A base station may configure one or multiple search space sets for a terminal according to configuration information. According to an embodiment, a base station may configure search space set 1 and search space set 2 for a terminal. Search space set 1 may be configured to allow the terminal to monitor DCI format A scrambled by an X-RNTI in a common search space, and search space set 2 may be configured to allow the terminal to monitor DCI format B scrambled by a Y-RNTI in a terminal-specific search space.

According to configuration information, one or multiple search space sets may exist in a common search space or a terminal-specific search space. For example, search space set #1 and search space set #2 may be configured to be a common search space, and search space set #3 and search space set #4 may be configured to be a terminal-specific search space.

In a common search space, the following combinations of a DCI format and an RNTI below may be monitored. However, the disclosure is not limited to the example below. That is, a DCI format and an RNTI used for CRC scrambling may be combined in various methods.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI
- DCI format 2_4 with CRC scrambled by CI-RNTI
- DCI format 2_5 with CRC scrambled by AI-RNTI
- DCI format 2_6 with CRC scrambled by PS-RNTI

In a terminal-specific search space, the following combinations of a DCI format and an RNTI may be monitored. However, the disclosure is not limited to the example below. That is, a DCI format and an RNTI used for CRC scrambling may be combined in various methods.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The mentioned RNTIs may follow the definitions and purposes below.

Cell RNTI (C-RNTI): for the purpose of scheduling a terminal-specific PDSCH

Temporary Cell RNTI (TC-RNTI): for the purpose of scheduling a terminal-specific PDSCH

Configured Scheduling RNTI (CS-RNTI): for the purpose of scheduling a semi-statically configured terminal-specific PDSCH

Random Access RNTI (RA-RNTI): for the purpose of scheduling a PDSCH in a random access stage

Paging RNTI (P-RNTI): for the purpose of scheduling a PDSCH on which paging is transmitted

System Information RNTI (SI-RNTI): for the purpose of scheduling a PDSCH on which system information is transmitted

Interruption RNTI (INT-RNTI): for the purpose of notifying of whether a PDSCH is punctured

Transmit Power Control for PUSCH RNTI (TPC-PUSCH-RNTI): for the purpose of indicating a power control command for a PUSCH

Transmit Power Control for PUCCH RNTI (TPC-PUCCH-RNTI): for the purpose of indicating a power control command for a PUCCH

Transmit Power Control for SRS RNTI (TPC-SRS-RNTI): for the purpose of indicating a power control command for an SRS

Cancellation indicator RNTI (CI-RNTI): for the purpose of indicating to cancel PUSCH transmission

Availability indicator RNTI (AI-RNTI): for the purpose of indicating whether soft resources are available

Power saving RNTI (PS-RNTI): for the purpose of indicating a command to reduce power consumption in DRX-inactivity interval

The specified DCI formats mentioned above may follow a definition in [Table 4] below.

[Table 4]

| DCI format | Usage |
| --- | --- |
| 0_0 | Scheduling of PUSCH in one cell |
| 0_1 | Scheduling of PUSCH in one cell |
| 1_0 | Scheduling of PDSCH in one cell |

(continued)

| DCI format | Usage |
|---|---|
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2 _2 | Transmission of TPC commands for PUCCH and PUSCH |
| 2_3 | Transmission of a group of TPC commands for SRS transmissions by one or more UEs |
| 2_4 | Notifying the PRB(s) and OFDM symbol(s) where UE cancels the corresponding UL transmission from the UE |
| 2_5 | Notifying the availability of soft resources |
| 2_6 | Notifying the power saving information outside DRX Active Time for one or more UEs |

In 5G, a search space of the aggregation level L in the search space set s and the control resource set p may be expressed as in an equation below.

$$L \cdot \left\{ \left( Y_{p,n_{s,f}^{\mu}} + \left\lfloor \frac{m_{s,n_{CI}} \cdot N_{\mathrm{CCE},p}}{L \cdot M_{p,s,\mathrm{max}}^{(L)}} \right\rfloor + n_{CI} \right) \bmod \left\lfloor N_{\mathrm{CCE},p}/L \right\rfloor \right\} + i$$

- L: aggregation level
- $n_{CI}$: carrier index
- $N_{\mathrm{CCE},p}$: the total number of CCEs existing in control resource set p
- $n_{s,f}^{\mu}$: slot index
- $M(L)_{p,s,max}$: the number of PDCCH candidates at aggregation level L
- $m_{snCI}= 0,..., M^{(L)}_{p,s,max}$ -1: The index of PDCCH candidates at aggregation level L
- i = 0,..., L-1
- $Y_{p,n_{s,f}^{\mu}} = \left( A_p \cdot Y_{p,n_{s,f}^{\mu}-1} \right) \bmod D$ , $Y_{p,-1}=n_{RNTI}\neq 0$, $A_0$=39827, $A_1$=39829, $A_2$=39839, D=65537
- $n_{RNTI}$: Terminal identifier

In a case of a common search space, $Y_{\_}(p,n^{\mu}_{s,f})$ may be 0.

In a case of a terminal-specific search space, $Y_{\_}(p,n^{\mu}_{s,f})$ may be changed according to a time index and the identity (C-RNTI or ID configured for a terminal by a base station) of a terminal.

Hereinafter, a method for allocating time domain resources for a data channel in a 5G communication system will be described.

A base station may configure, for a terminal, a table for time domain resource allocation information for a downlink data channel (PDSCH) and an uplink data channel (PUSCH) through higher layer signaling (e.g., RRC signaling). The base station may configure, for a PDSCH, a table configured by a maximum of 16 entries (maxNrofDL-Allocations=16), and may configure, for a PUSCH, a table configured by a maximum of 16 entries (maxNrofUL-Allocations=16). Time domain resource allocation information may include, for example, a PDCCH-to-PDSCH slot timing (this corresponds to a time interval expressed in the units of slots, between a time point of reception of a PDCCH and a time point of transmission of a PDSCH scheduled by the received PDCCH, the timing being indicated by K0) or a PDCCH-to-PUSCH slot timing (this corresponds to a time interval expressed in the units of slots, between a time point of reception of a PDCCH and a time point of transmission of a PUSCH scheduled by the received PDCCH, the timing being indicated by K2), information on the starting symbol position and the length of a PDSCH or a PUSCH scheduled in a slot, a mapping type of a PDSCH or a PUSCH, and the like. For example, a terminal may be notified of pieces of information as below from a base station.

```
        PDSCH-TimeDomainResourceAllocationList information element

PDSCH-TimeDomainResourceAllocationList ::=  SEQUENCE (SIZE(1..maxNrofDL-Allocations)) OF
PDSCH-TimeDomainResourceAllocation


PDSCH-TimeDomainResourceAllocation ::=      SEQUENCE {
     k0                                     INTEGER(0..32)
OPTIONAL,    -- Need S
     mappingType                            ENUMERATED {typeA, typeB},
     startSymbolAndLength                   INTEGER (0..127)
}
```

```
        PUSCH-TimeDomainResourceAllocation information element

PUSCH-TimeDomainResourceAllocationList ::=    SEQUENCE (SIZE(1..maxNrofUL-Allocations)) OF
PUSCH-TimeDomainResourceAllocation


PUSCH-TimeDomainResourceAllocation ::=     SEQUENCE {
     k2                                    INTEGER(0..32)         OPTIONAL,    -- Need S
     mappingType                           ENUMERATED {typeA, typeB},
     startSymbolAndLength                  INTEGER (0..127)
}
```

The base station may notify the terminal of one of the entries of the table relating to the time domain resource allocation information through L1 signaling (e.g., DCI) (e.g., the base station may indicate one of the entries to the terminal through a time domain resource allocation field in DCI). The terminal may obtain time domain resource allocation information for a PDSCH or PUSCH, based on the DCI received from the base station.

Hereinafter, a method for allocating frequency domain resources for a data channel in a 5G communication system will be described.

5G supports two types including resource allocation type 0 and resource allocation type 1, as a method for indicating frequency domain resource allocation information for a downlink data channel (PDSCH) and an uplink data channel (a physical uplink shared channel (PUSCH)).

Resource Allocation Type 0

- RB allocation information may be notified from a base station to a terminal in a type of a bitmap for resource block groups (RBGs). The RBG may be configured by a set of consecutive virtual RBs (VRBs), and the size P of the RBG may be determined based on a value configured as a higher layer parameter (*rbg-Size*), and the size of a bandwidth part defined in [Table 5] below.

[Table 5] Nominal RBG size P

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

- A total number ($N_{RBG}$) of RBGs of the bandwidth part i having a size of $N_{BWP,i}^{size}$ may be defined as below.

■

$$N_{RBG} = \left\lceil \left( N_{BWP,i}^{size} + \left( N_{BWP,i}^{start} \bmod P \right) \right) / P \right\rceil$$

where

♦ the size of the first RBG is $RBG_0^{size} = P - N_{BWP,i}^{start} \bmod P$.

♦ the size of last RBG is $RBG_{last}^{size} = \left( N_{BWP,i}^{start} + N_{BWP,i}^{size} \right) \bmod P$ if $\left( N_{BWP,i}^{start} + N_{BWP,i}^{size} \right) \bmod P > 0$ and $P$ otherwise.

♦ the size of all other RBGs is P.

Each bit of a bitmap having a size of $N_{RBG}$ bits may correspond to each RBG. RBGs may be assigned indexes according to a sequence in which the frequency increases from the lowest frequency position of a bandwidth part. With respect to $N_{RBG}$ number of RBGs in a bandwidth part, RBG #0 to RBG #($N_{RBG}$-1) may be mapped from an MSB to an LSB of an RBG bitmap. In case that a particular bit value in a bitmap is 1, a terminal may determine that an RBG corresponding to the bit value has been assigned, and in case that a particular bit value in a bitmap is 0, the terminal may determine that an RBG corresponding to the bit value has not been assigned.

Resource Allocation Type 1

- RB allocation information may be notified from a base station to a terminal by information on the starting position and length of consecutively assigned VRBs. Interleaving or non-interleaving may be additionally applied to the consecutively assigned VRBs. A resource allocation field of resource allocation type 1 may be configured by a resource indication value (RIV), and the RIV may be configured by the starting point ($RB_{start}$) of a VRB and the length ($L_{RBs}$) of consecutively assigned RBs. More specifically, an RIV of a bandwidth part having a size of $N_{BWP}^{size}$ may be defined as follows.

$$\text{if } (L_{RBs} - 1) \le \left\lfloor N_{BWP}^{size} / 2 \right\rfloor \text{ then}$$
$$RIV = N_{BWP}^{size}(L_{RBs} - 1) + RB_{start}$$
$$\text{else}$$
$$RIV = N_{BWP}^{size}(N_{BWP}^{size} - L_{RBs} + 1) + (N_{BWP}^{size} - 1 - RB_{start})$$
$$\text{where } L_{RBs} \ge 1 \text{ and shall not exceed } N_{BWP}^{size} - RB_{start}.$$

Hereinafter, a method for measuring and reporting a channel state in a 5G communication system will be described in detail.

Channel state information (CSI) may include a channel quality indicator (CQI), a precoding matrix index (PMI), a CSI-RS resource indicator (CRI), a SS/PBCH block resource indicator (SSBRI), a layer indicator (LI), a rank indicator (RI), and/or L1-reference signal received power (RSRP). A base station may control time and frequency resources for measuring and reporting the above CSI of a terminal.

In order to measure and report of the CSI, as described above, N(≥1) pieces of setting information (CSI-ReportConfig) for CSI reporting, M(≥1) pieces of setting information (CSI-ResourceConfig) for RS transmission resources, and one or two pieces of trigger state (CSI-AperiodicTriggerStateList, CSI-SemiPersistentOnPUSCH-TriggerStateList) list information may be configured for the terminal through higher layer signaling.

With respect to the above CSI reporting setting (*CSI-ReportConfig*), each reporting setting (CSI-ReportConfig) may be associated with a downlink (DL) bandwidth part identified by a higher layer parameter bandwidth part identifier (bwp-id) and given by a CSI resource setting (CSI-ResourceConfig) associated with the each reporting setting. As a time domain reporting operation for each reporting setting (CSI-ReportConfig), "aperiodic", "semi-persistent", and "periodic" schemes may be supported, and the schemes may be configured for a terminal by a base station through a reportConfigType parameter configured from a higher layer. A semi-persistent CSI reporting method supports a method for "PUCCH-based semi-persistent (semi-PersistentOnPUCCH)", and "PUSCH-based semi-persistent (semi-PersistentOnPUSCH)"reporting. In a periodic or semi-persistent CSI reporting method, PUCCH or PUSCH resources on which CSI is to be transmitted, may be configured for a terminal by a base station through higher layer signaling. The period and slot offset of PUCCH or PUSCH resources on which CSI is to be transmitted, may be given by the numerology of an uplink (UL) bandwidth part configured to transmit CSI reporting. In an aperiodic CSI reporting method, PUSCH resources on which CSI is to be transmitted, may be scheduled for a terminal by a base station through L1 signaling (the above DCI format 0_1).

With respect to the above CSI resource setting (*CSI-ResourceConfig*), each CSI resource setting (CSI-ReportConfig) may include S(≥1) pieces of CSI resource sets (given by a higher layer parameter, csi-RS-ResourceSetList). A CSI resource set list may include a non-zero power (NZP) CSI-RS resource set and a SS/PBCH block set, or may include a CSI-interference measurement (CSI-IM) resource set. Each CSI resource setting may be positioned in a downlink (DL) bandwidth part identified by a higher layer parameter, bwp-id, and may be connected to a CSI reporting setting in the same downlink bandwidth part. A time domain operation of CSI-RS resources in a CSI resource setting may be configured to one of an aperiodic, periodic, or semi-persistent scheme by a higher layer parameter, resourceType. With respect to a periodic or semi-persistent CSI resource setting, the number of CSI-RS resource sets may be limited to be S=1, and a configured period and slot offset may be given by the numerology of a downlink bandwidth part identified by a bwp-id. One or more CSI resource settings for channel and interference measurement may be configured for a terminal by a base station through higher layer signaling, and for example, may include the following CSI resources.

- CSI-IM resource for interference measurement
- NZP CSI-RS resource for interference measurement
- NZP CSI-RS resource for channel measurement

With respect to CSI-RS resource sets associated with resource settings having a higher layer parameter, resourceType, configured to "aperiodic", "periodic", or "semi-persistent", the trigger state of a CSI reporting setting having reportType configured to "aperiodic", and a resource setting for channel or interference measurement on one or multiple component cells (CCs) may be configured by a higher layer parameter, CSI-AperiodicTriggerStateList.

A terminal may use a PUSCH for aperiodic CSI reporting, may use a PUCCH for periodic CSI reporting, and may perform semi-persistent CSI reporting by using a PUSCH when the reporting is triggered or activated by DCI, and using a PUCCH after the reporting is activated by an MAC control element (MAC CE). As described above, a CSI resource setting may be also configured to aperiodic, periodic, and semi-persistent. A combination of a CSI reporting setting and a CSI resource configuration may be supported based on [Table 6] below.

[Table 6] Triggering/Activation of CSI Reporting for the possible CSI-RS Configurations.

| CSI-RSConfiguration | Periodic CSI Reporting | Semi-Persistent CSI Reporting | Aperiodic CSI Reporting |
|---|---|---|---|
| Periodic CSI-RS | No dynamic triggering /activation | For reporting on PUCCH, the UE receives an activation command [10, TS 38.321] : for reporting on PUSCH. the UE receives triggering on DCI | Triggered by DCI: additionally. activation command [10. TS 38.321] possible as defined in Subclause 5.2.1.5.1. |
| Semi-Persistent CSI-RS | Not Supported | For reporting on PUCCH. the UE receives an activation command [10, TS 38.321] : for report ing on PUSCH, the UE receives triggering on DCI | Triggered by DCI: additionally. activation command [10. TS 38.321] possible is defined in Subclause 5.2.1.5.1. |
| Aperiodic CSI-RS | Not Supported | Not Supported | Triggered by DCI: additionally. activation command [10, TS 38.321] possible as defined in Subclause 5.2.1.5.1. |

Aperiodic CSI reporting may be triggered by a "CSI request" field in DCI format 0_1 described above, corresponding to scheduling DCI for a PUSCH. A terminal may monitor a PDCCH, obtain DCI format 0_1, and obtain scheduling information for a PUSCH and a CSI request indicator. A CSI request indicator may be configured to have $N_{TS}$ (=0, 1, 2, 3, 4, 5, or 6) number of bits, and may be determined by a higher layer signaling (reportTriggerSize). One trigger state among one or multiple aperiodic CSI reporting trigger states which may be configured by higher layer signaling (CSI-AperiodicTriggerStateList), may be triggered by a CSI request indicator.

- In case that the bits in a CSI request field are 0, the bit values may imply CSI reporting is not requested.
- If the number (M) of configured CSI trigger states in a CSI-AperiodicTriggerStateList is larger than $2^{N_{TS}}-1$, M number of CSI trigger states may be mapped to $2^{N_{TS}}-1$ trigger states according to a pre-defined mapping relation, and one trigger state among the $2^{N_{TS}}-1$ trigger states may be indicated by a CSI request field.
- If the number (M) of configured CSI trigger states in a CSI-AperiodicTriggerStateLite is smaller than or equal to $2^{N_{TS}}-1$, one of M number of CSI trigger states may be indicated by a CSI request field.

[Table 7] below shows an example of a relation between a CSI request indicator and a CSI trigger state indicated by a corresponding indicator.

[Table 7]

| CSI request field | CSI trigger state | CSI-ReportConfigId | CSI-ResourceConfigId |
|---|---|---|---|
| 00 | no CSI request | N/A | N/A |
| 01 | CSI trigger state#1 | CSI report#1 | CSI resource#1 |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

A terminal may measure a CSI resource in a CSI trigger state triggered by a CSI request field, and may generate CSI (including at least one of CQI, PMI, CRI, SSBRI, LI, RI, or L1-RSRP described above) based on the measurement. The terminal may transmit obtained CSI by using a PUSCH scheduled by a corresponding DCI format 0_1. In case that one bit corresponding to an uplink data indicator (UL-SCH indicator) in the DCI format 0_1 indicates "1", the terminal may perform multiplexing of the obtained CSI and uplink data (UL-SCH) with PUSCH resources scheduled by the DCI format 0_1, to transmit the CSI. In case that one bit corresponding to an uplink data indicator (UL-SCH indicator) in the DCI format 0_1 indicates "0", the terminal may map only the CSI to PUSCH resources scheduled by the DCI format 0_1 without uplink data (UL-SCH), to transmit the CSI.

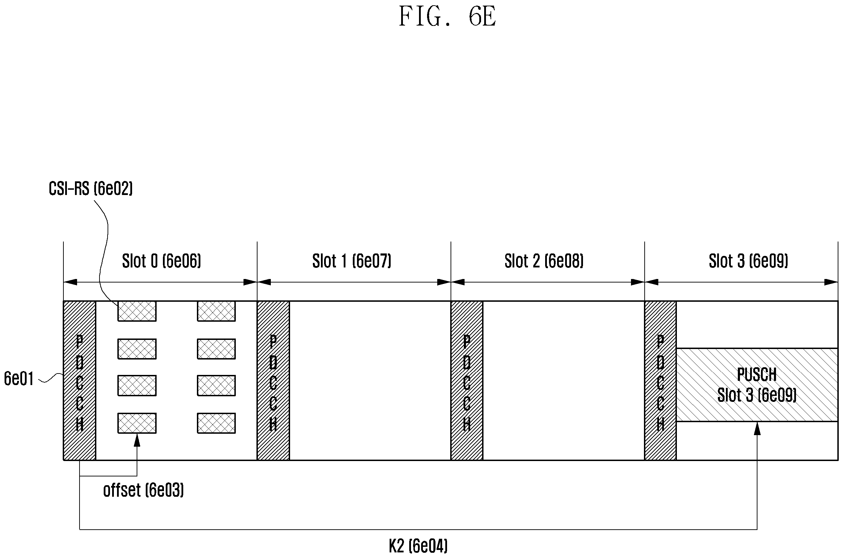

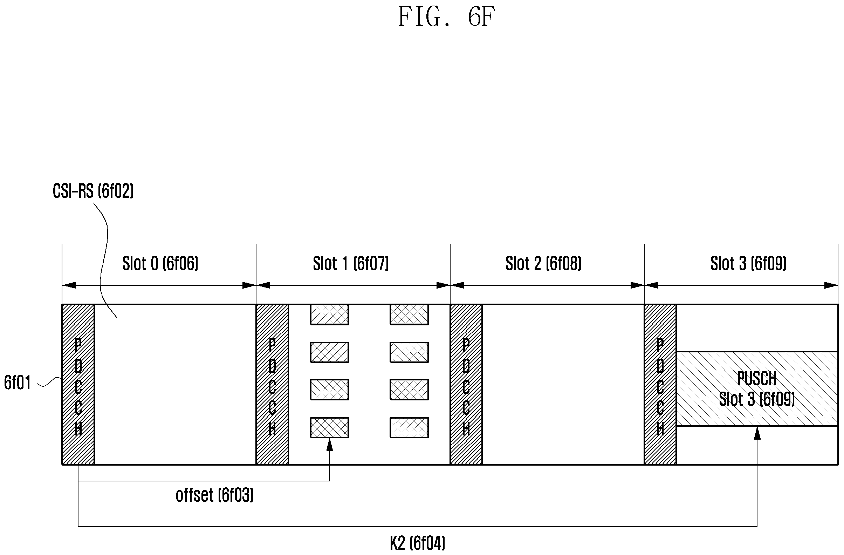

FIG. 6E and FIG. 6F illustrates an example of an aperiodic CSI reporting method according to an embodiment of the disclosure.

In an example in FIG. 6E, a terminal may obtain a DCI format 0_1 by monitoring a PDCCH 6e01, and obtain CSI request information and scheduling information for a PUSCH 6e05, based on the DCI. The terminal may obtain resource information for a CSI-RS 6e02 to be measured, from a received CSI request indicator. The terminal may determine a time point at which the terminal should measure a resource of the CSI-RS 6e02 transmitted, the determining being based on a time point at which DCI format 0_1 is received, and an offset-related parameter (*aperiodicTriggeringOffset* described above) in a CSI resource set configuration (e.g., NZP CSI-RS resource set configuration (NZP-CSI-RS-ResourceSet)). More specifically, the terminal may receive an offset value X of the parameter aperiodicTriggeringOffset in a NZP-CSI-RS resource set configuration from a base station by higher layer signaling, and the configured offset value X may be an offset between a slot on which DCI triggering aperiodic CSI reporting is received, and a slot on which a CSI-RS resource is transmitted. For example, the value of a aperiodicTriggeringOffset parameter and an offset value X may have a mapping relation therebetween as shown in [Table 8] below.

[Table 8]

| aperiodicTriggeringOffset | Offset X |
|---|---|
| 0 | 0 slots |
| 1 | 1 slot |
| 2 | 2 slots |

(continued)

| aperiodicTriggeringOffset | Offset X |
|---|---|
| 3 | 3 slots |
| 4 | 4 slots |
| 5 | 16 slots |
| 6 | 24 slots |

In the example in FIG. 6E, an offset value 6e03 as described above is configured to be 0 (X=0). A terminal may receive a CSI-RS 6e02 in a slot (corresponding to slot 0 6e06 in FIG. 6E) having received DCI format 0_1 triggering aperiodic CSI reporting, and may report CSI information measured by the received CSI-RS 6e02, through a PUSCH 6e05 to the base station. The terminal may obtain scheduling information (the above described pieces of information corresponding to individual fields of DCI format 0_1) for the PUSCH 6e05 for CSI reporting from DCI format 0_1. For example, the terminal may obtain information about a slot in which the PUSCH 6e05 is to transmitted, from time domain resource allocation information for the PUSCH 6e05, as described above, in the DCI format 0_1. In the example in FIG. 6, the terminal may obtain 3 as a K2 value 6e04 corresponding to a slot offset value for PDCCH-to-PUSCH, and accordingly, the PUSCH 6e05 may be transmitted in slot 3 6e09 spaced 3 slots apart from slot 0 6e06, that is, a time point at which a PDCCH 6e01 is received. In an example in FIG. 6F, a terminal may obtain a DCI format 0_1 by monitoring a PDCCH 6f01, and obtain CSI request information and scheduling information for a PUSCH 6f05, based on the DCI. The terminal may obtain resource information for a CSI-RS 6f02 to be measured, from a received CSI request indicator. In the example in FIG. 6F, an offset value 6f03 for a CSI-RS as described above is configured to be 1 (X=1). A terminal may receive a CSI-RS 6f02 in a slot (corresponding to slot 0 6f06 in FIG. 6F) having received a DCI format 0_1 triggering aperiodic CSI reporting, and may report, to the base station, CSI information measured by the received CSI-RS, through a PUSCH 6f05 in slot 3 6f09 spaced 3 slots apart from slot 0 6f06 according to a K2 value 6f04 corresponding to a slot offset value for PDCCH-to-PUSCH.

Control information is transmitted within first N number of OFDM symbols in a subframe. The control channel transmission interval N is generally represented by N = {1, 2, 3}. Therefore, the N value changes every subframe according to the amount of control information required to be transmitted in a current subframe. For example, control information may include an indicator indicating how many OFDM symbols the control information is transmitted over, scheduling information for uplink or downlink data, and a hybrid automatic repeat request (HARQ) acknowledgement (ACK)/negative ACK (NACK) signal.

A wireless communication system employs a HARQ scheme of, when a decoding failure has occurred in an initial transmission, retransmitting corresponding data on a physical layer. The HARQ scheme means that, in case that a receiver fails to correctly decode data, the receiver transmits information (e.g., NACK) notifying a decoding failure to a transmitter, so as to allow the transmitter to retransmit corresponding data on a physical layer. Then, the receiver combines the data retransmitted by the transmitter with the existing data failed to be decoded, to improve data reception performance. Furthermore, in case that the receiver correctly decodes data, the receiver may transmit information (e.g., ACK) notifying a decoding success to the transmitter, so as to allow the transmitter to transmit new data.

In a communication system, one of the important things to provide a high-speed data service is support of a scalable bandwidth. In some embodiment, a system transmission band of an LTE system is possible to have various bandwidths including 20/15/10/5/3/1.4 MHz. Therefore, service providers may select a particular bandwidth among various bandwidths to provide a service. In addition, a terminal (e.g., the terminal 120) may be various types from a type enabling support of a maximum 20 MHz bandwidth to a type enabling support of only a minimum 1.4 MHz bandwidth.

In a wireless communication system, a base station (e.g., the base station 110) may inform a terminal of scheduling information for downlink data or uplink data through downlink control information (DCI). An uplink implies a wireless link through which a terminal transmits data or a control signal to a base station, and a downlink implies a wireless link through which a base station transmits data or a control signal to a terminal. DCI may be defined in various formats. A determined DCI format is applied and operated according to whether the DCI is scheduling information (e.g., uplink (UL) grant) for uplink data, or scheduling information (e.g., downlink (DL) grant) for downlink data, whether the DCI is compact DCI having small size control information, whether spatial multiplexing using multiple antennas is applied, or whether the DCI is DCI used for power control. For example, DCI format 1, which is scheduling control information (e.g., DL grant) for downlink data, may be configured to include control information as follows.

- Resource allocation type 0/1 flag: Resource allocation type 0/1 flag notifies whether a resource allocation scheme is type 0 or type 1. Type 0 flag may allocate resources in an RBG unit by applying a bitmap scheme. In an LTE system, a basic unit for scheduling is an RB represented by time and frequency domain resources, and an RBG may be configured by multiple RBs and may be a basic unit for scheduling in the type 0 scheme. Type 1 flag may allocate a particular RB in an RBG.

- Resource block assignment: Resource block assignment notifies an RB allocated for data transmission. A represented resource is determined according to a system bandwidth and a resource allocation scheme.
- MCS: MCS notifies a target code rate and a modulation scheme used for data transmission, or a size of a transport block to be transmitted.
- HARQ process number: HARQ process number notifies a process number of HARQ.
- New data indicator: New data indicator notifies HARQ initial transmission or retransmission.
- Redundancy version: Redundancy version notifies a redundancy version (RV) of HARQ.
- TPC command for PUCCH: TPC command for physical uplink control channel (PUCCH) notifies a power control command for a PUCCH that is an uplink control channel.

DCI may undergo channel coding and modulation, and then be transmitted through a PDCCH that is a downlink physical control channel.

Generally, DCI is channel-coded independently for each terminal and then is configured to be an independent PDCCH to be transmitted. In the time domain, a PDCCH is mapped and transmitted for the control channel transmission interval. A frequency domain mapping position of a PDCCH is determined by an identifier (ID) of each terminal, and is distributed over the entire system transmission band.

Downlink data is transmitted through a PDSCH that is a physical channel for downlink data transmission. A PDSCH is transmitted after the control channel transmission interval, and scheduling information, such as a specific mapping position in the frequency domain, a modulation scheme, etc., may be notified to a terminal by a base station through DCI transmitted through the PDCCH.

Through MCS configured by five bits among pieces of control information configuring the DCI, a base station notifies a terminal of a modulation scheme applied to a PDSCH to be transmitted, and the size (e.g., TBS) of data to be transmitted. The TBS corresponds to the size of data, which a base station is to transmit, before channel coding for error correction is applied to the data.

In a cellular system such as a 5G NR or LTE/LTE-A system, a base station (e.g., the base station 110) may transmit a reference signal to measure a downlink channel state. For example, in a case of an LTE-advanced (LTE-A) system of 3GPP, a terminal (e.g., the terminal 120) may measure a channel state between a base station and the terminal itself by using a channel status information reference signal (CSI-RS) transmitted by the base station. The channel state may be measured considering basically several factors, and an interference amount in downlink may be included therein. The interference amount in the downlink includes a heat noise and an interference signal generated by an antenna belong to a neighboring base station, and may be used for a terminal to determine a channel situation of the downlink. For example, in case that a base station having one transmission antenna transmits a reference signal to a terminal having one reception antenna, the terminal may use the reference signal received from the base station to determine energy per symbol which may be received through a downlink, and an interference amount to be received simultaneously in an interval receiving a corresponding symbol, so as to determine energy per symbol to interference density ratio (Es/Io). The determined Es/Io may be notified to the base station and used for the base station to determine a transmission speed of data to transmit to the terminal through the downlink.

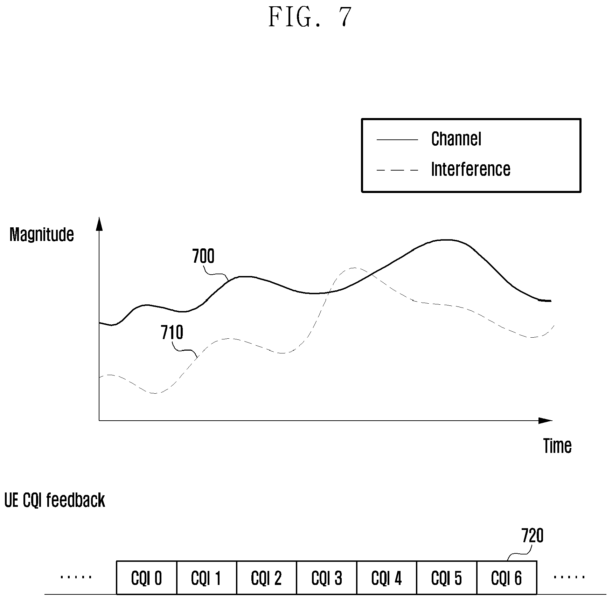

FIG. 7 illustrates an example of transmission of a channel quality indicator (CQI), one of pieces of channel state information of a terminal according to interference strength and signal energy measured by the terminal according to an embodiment of the disclosure.

Referring to FIG. 7, a terminal (e.g., the terminal 120) may measure a downlink reference signal such as a CSI-RS to perform channel estimation, and use same to determine (or calculate) Es (reception signal energy) 700 according to a wireless channel. In addition, the terminal may use a separate resource for measurement of interference and noise or a downlink reference signal to determine (or calculate) a strength 710 of interference and noise. In LTE, a base station uses a CRS that is a downlink reference signal, to measure interference and noise, or configures an interference measurement resource for a terminal so that the terminal assumes that a signal measured in a corresponding wireless resource is interference and noise. By using a reception signal energy and a strength of interference and noise obtained in the above method, a terminal determines a maximum data transmission speed at which reception at a particular success rate is possible at a corresponding signal-to-interference noise ratio calculated by the terminal, and notifies a base station of same.

The base station having been notified of the maximum data transmission speed supportable at the corresponding signal-to-interference noise ratio of the terminal uses same to determine an actual data transmission rate of a downlink data signal to transmit to the terminal. As described above, a maximum data transmission speed at which a terminal is able to receive the data from a base station at a particular success rate is called a CQI in the LTE/NR standard. Generally, a wireless channel changes over time, and thus a terminal may periodically notify a base station of a CQI, or may notify same every time the base station requests same from the terminal. The requesting from a terminal by a base station may be performed through one or more methods among periodic and aperiodic methods.

As CQI information described above is precisely measured by a terminal or a base station and is precisely transmitted or received, an MCS suitable for a channel environment is configured so that efficient transmission or reception becomes possible while following a target error probability configured in a system. Therefore, the more the wireless communication system evolves, the more the definition for a method for generating and applying CQI and MCS tables suitable for services supporting various reliabilities is needed.

Hereinafter, in the disclosure, a method for designing a new channel quality indicator (CQI) table and modulation and coding (MCS) table to precisely report a channel quality according to a target transmission/reception error probability required for efficient communication in a 4G or 5G communication system, or determine a modulation-and-coding technique combination will be described.

In addition, a method for adjusting a code rate or a spectral efficiency, based on an existing CQI table and MCS table, to precisely report a channel quality according to a target transmission/reception error probability required for efficient communication in a 4G or 5G communication system, or determine a modulation-and-coding technique combination will be described. For reference, the spectral efficiency may be expressed as a modulation order product rate (MPR).

In addition, a method and an apparatus for reporting an accurate channel quality, based on multiple CQI tables according to a target transmission/reception error probability required for efficient communication in a 4G or 5G communication system, or determining an efficient modulation-and-coding technique combination, based on multiple MCS tables will be described.

In a case of a current 5G NR system, a different CQI table and MCS table are applied according to a maximum modulation order or a target block error rate (BLER) configured in the system. A BLER value may indicate a probability of error occurrence after decoding of a received transport block is completed. In some embodiments, a terminal may determine a BLER value through proper calculation after decoding a large number of transport blocks, but may also determine an approximately expected BLER value through a reception signal-to-noise ratio (SNR). In this case, even when a terminal does not perform actual decoding, the terminal may measure a reception SNR to predict a decoding success probability and report a CQI index to a base station, based on the SNR.

<Description for CSI reference resource>

In order to report a CQI index to a base station, a terminal may report the CQI index, based on a CSI reference resource. The following items may be an example of elements configuring the CSI reference resource, and items not mentioned below may also be elements configuring the CSI reference resource.

- First two OFDM symbols are used as a control signal
- The number of PDSCH and DMRS symbols is 12 symbols
- A CP length and a subcarrier spacing, such as a bandwidth part (BWP) configured for PDSCH reception
- A bandwidth size configured for CQI reporting
- RV 0
- There is no RE allocated for NZP CSI-RS and ZP CSI-RS
- A PDSCH symbol does not include a DMRS.
- A PRB bundling size in the unit of two PRBs.
- PDSCH transmission is possible by a maximum of eight transmission layers.

[Table 9] or [Table 11] may be used in a case of reporting a CQI when a maximum of 64 QAM is available, and [Table 10] may be used in a case of reporting a CQI when a maximum of 256 QAM is available. Furthermore, [Table 12] or [Table 14] may be used in a case of determining or configuring an MCS when a maximum of 64 QAM is available for a PDSCH or PUSCH, and [Table 13] may be used in a case of determining or configuring an MCS when a maximum of 256 QAM is available for a PDSCH or PUSCH. [Table 15] and [Table 16] may be used in a case of determining or configuring an MCS for a PUSCH to which transform precoding and 64 QAM are applied. (A q value in [Table 15] and [Table 16] is a value determined according to whether pi/2-BPSK is indicated, and when tp-pi2BPSK is configured through higher layer signaling, this implies $q = 1$, and otherwise, implies $q = 2$). In addition, values in a CQI table of [Table 9] to [Table 14] may be configured through a four-bit indicator, and values in a CQI table of [Table 15] and [Table 16] may be configured through a five-bit indicator.

[Table 9]

| CQI index | modulation | code rate x 1024 | efficiency |
|-----------|------------|------------------|------------|
| 0 | out of range | | |

(continued)

| CQI index | modulation | code rate x 1024 | efficiency |
|---|---|---|---|
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

[Table 10]

| CQI index | modulation | code rate x 1024 | efficiency |
|---|---|---|---|
| 0 | out of range | | |
| 1 | QPSK | 78 | 0.1523 |
| 2 | QPSK | 193 | 0.3770 |
| 3 | QPSK | 449 | 0.8770 |
| 4 | 16QAM | 378 | 1.4766 |
| 5 | 16QAM | 490 | 1.9141 |
| 6 | 16QAM | 616 | 2.4063 |
| 7 | 64QAM | 466 | 2.7305 |
| 8 | 64QAM | 567 | 3.3223 |
| 9 | 64QAM | 666 | 3.9023 |
| 10 | 64QAM | 772 | 4.5234 |
| 11 | 64QAM | 873 | 5.1152 |
| 12 | 256QAM | 711 | 5.5547 |
| 13 | 256QAM | 797 | 6.2266 |
| 14 | 256QAM | 885 | 6.9141 |
| 15 | 256QAM | 948 | 7.4063 |

[Table 11]

| CQI index | modulation | code rate x 1024 | efficiency |
|---|---|---|---|
| 0 | out of range | | |
| 1 | QPSK | 30 | 0.0586 |
| 2 | QPSK | 50 | 0.0977 |
| 3 | QPSK | 78 | 0.1523 |
| 4 | QPSK | 120 | 0.2344 |
| 5 | QPSK | 193 | 0.3770 |
| 6 | QPSK | 308 | 0.6016 |
| 7 | QPSK | 449 | 0.8770 |
| 8 | QPSK | 602 | 1.1758 |
| 9 | 16QAM | 378 | 1.4766 |
| 10 | 16QAM | 490 | 1.9141 |
| 11 | 16QAM | 616 | 2.4063 |
| 12 | 64QAM | 466 | 2.7305 |
| 13 | 64QAM | 567 | 3.3223 |
| 14 | 64QAM | 666 | 3.9023 |
| 15 | 64QAM | 772 | 4.5234 |

[Table 12]

| MCS Index $I_{MCS}$ | Modulation Order Qm | Target code Rate [R x 1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |

(continued)

| MCS Index $I_{MCS}$ | Modulation Order Qm | Target code Rate [R x 1024] | Spectral efficiency |
|---|---|---|---|
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

[Table 13]

| MCS Index $I_{MCS}$ | Modulation Order Qm | Target code Rate [R x 1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |

(continued)

| MCS Index $I_{MCS}$ | Modulation Order Qm | Target code Rate [R x 1024] | Spectral efficiency |
|---|---|---|---|
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | reserved | |
| 29 | 4 | reserved | |
| 30 | 6 | reserved | |
| 31 | 8 | reserved | |

[Table 14]

| MCS Index $I_{MCS}$ | Modulation Order Qm | Target code Rate [R x 1024] | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |

(continued)

| MCS Index $I_{MCS}$ | Modulation Order Qm | Target code Rate [R x 1024] | Spectral efficiency |
|---|---|---|---|
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | reserved | |
| 30 | 4 | reserved | |
| 31 | 6 | reserved | |

[Table 15]

| MCS Index $I_{MCS}$ | Modulation Order Qm | Target code Rate [R x 1024] | Spectral efficiency |
|---|---|---|---|
| 0 | q | 240/ q | 0.2344 |
| 1 | q | 314/ q | 0.3770 |
| 2 | 2 | 193 | 0.6016 |
| 3 | 2 | 251 | 0.8770 |
| 4 | 2 | 308 | 1.1758 |
| 5 | 2 | 379 | 1.4766 |
| 6 | 2 | 449 | 1.6953 |
| 7 | 2 | 526 | 1.9141 |
| 8 | 2 | 602 | 2.1602 |
| 9 | 2 | 679 | 2.4063 |
| 10 | 4 | 340 | 2.5703 |
| 11 | 4 | 378 | 2.7305 |
| 12 | 4 | 434 | 3.0293 |
| 13 | 4 | 490 | 3.3223 |
| 14 | 4 | 553 | 3.6094 |
| 15 | 4 | 616 | 3.9023 |
| 16 | 4 | 658 | 4.2129 |
| 17 | 6 | 466 | 4.5234 |
| 18 | 6 | 517 | 4.8164 |
| 19 | 6 | 567 | 5.1152 |
| 20 | 6 | 616 | 5.3320 |
| 21 | 6 | 666 | 5.5547 |
| 22 | 6 | 719 | 5.8906 |
| 23 | 6 | 772 | 6.2266 |
| 24 | 6 | 822 | 6.5703 |

(continued)

| MCS Index $I_{MCS}$ | Modulation Order Qm | Target code Rate [R x 1024] | Spectral efficiency |
|---|---|---|---|
| 25 | 6 | 873 | 6.9141 |
| 26 | 6 | 910 | 7.1602 |
| 27 | 6 | 948 | 7.4063 |
| 28 | q | reserved | |
| 29 | 2 | reserved | |
| 30 | 4 | reserved | |
| 31 | 6 | reserved | |

[Table 16]

| MCS Index $I_{MCS}$ | Modulation Order Qm | Target code Rate [R x 1024] | Spectral efficiency |
|---|---|---|---|
| 0 | q | 60/q | 0.2344 |
| 1 | q | 80/q | 0.3770 |
| 2 | q | 100/q | 0.6016 |
| 3 | q | 128/q | 0.8770 |
| 4 | q | 156/q | 1.1758 |
| 5 | q | 198/q | 1.4766 |
| 6 | 2 | 120 | 1.6953 |
| 7 | 2 | 157 | 1.9141 |
| 8 | 2 | 193 | 2.1602 |
| 9 | 2 | 251 | 2.4063 |
| 10 | 2 | 308 | 2.5703 |
| 11 | 2 | 379 | 2.7305 |
| 12 | 2 | 449 | 3.0293 |
| 13 | 2 | 526 | 3.3223 |
| 14 | 2 | 602 | 3.6094 |
| 15 | 2 | 679 | 3.9023 |
| 16 | 4 | 378 | 4.2129 |
| 17 | 4 | 434 | 4.5234 |
| 18 | 4 | 490 | 4.8164 |
| 19 | 4 | 553 | 5.1152 |
| 20 | 4 | 616 | 5.3320 |
| 21 | 4 | 658 | 5.5547 |
| 22 | 4 | 699 | 5.8906 |
| 23 | 4 | 772 | 6.2266 |
| 24 | 6 | 567 | 6.5703 |
| 25 | 6 | 616 | 6.9141 |
| 26 | 6 | 666 | 7.1602 |

(continued)

| MCS Index $I_{MCS}$ | Modulation Order Qm | Target code Rate [R x 1024] | Spectral efficiency |
|---|---|---|---|
| 27 | 6 | 772 | 7.4063 |
| 28 | q | reserved | |
| 29 | 2 | reserved | |
| 30 | 4 | reserved | |
| 31 | 6 | reserved | |

More specifically in a process of determining a CQI index, a terminal may derive or determine the highest CQI index satisfying the following conditions for a CQI value reported in uplink slot n:

[CQI determination-1]

- A single PDSCH transport block having a combination of a modulation order (or technique), a target code rate, and a TBS corresponding to a CQI index is required to be received at a transport block error probability not exceeding the following probability:

  * If the CSI-higher layer parameter cqi-Table included in CSI-ReportConfig configures (or indicates) [Table 9] or [Table 10] above, a target transport block error rate is 0.1.
  * If the CSI-higher layer parameter cqi-Table included in CSI-ReportConfig configures (or indicates) Table 11 above, a target transport block error rate is 0.00001.

The above conditions for the transport block error probability may also mean an approximated or substantial value. Therefore, a BLER value satisfied in an actual communication system may have a value in a range which is a little smaller or larger than the values of 0.1 and 0.00001 defined in a protocol at least temporarily. However, a system is operated such that an average transport block error probability is a value close to the defined value of 0.1 and 0.00001. The close value may indicate a value within 10%-50% of the configured target BLER value or may indicate a different range value configured in a system.

According to an embodiment, in order to derive a proper target BLER value determined for CQI index reporting, at least one of parameters including a resource usage rate such as the number of RE resources, implementation capability of a terminal for estimation of a precise CQI index, an SNR difference for each target BLER in the case of presence of multiple target BLERs, whether different CQI index reporting for each target BLER is possible due to the SNR difference for each target BLER in various wireless communication environments, or terminal implementation complexity in case that the number of types of multiple target BLERs is increased may be considered. However, this is merely an example of a parameter for determining a target BLER, and a parameter other than the parameters described above may be used.

In case that there are multiple target BLERs, a terminal may report a CQI index estimated based on at least one target BLER, and a value of the target BLER may be configured by a higher signal or L1 signal.

A current 5G NR system considers 0.1 and 0.00001 as target BLER values, and the latter may be configured in consideration of a service requiring high reliability or low latency, for example, a service scenario such as URLLC. However, as an LTE or 5G NR system becomes widely used, a wider variety of services having different purposes are required. Such various services may require various system conditions in consideration of even a place supporting the service, an average data traffic, and a terminal type as well as reliability or low-latency characteristics according to each service. However, efficient support of various services may be difficult only with two current BLER conditions, such as 0.1 and 0.00001, having a difference of 10000 times or more. Accordingly, the disclosure proposes a CQI table and an MCS table for efficiently supporting a target BLER other than target BLERs having the values of 0.1 and 0.00001.

In current 5G NR, in case that a maximum modulation order to be applied in a system is configured to 64-QAM, for CQI reporting, a CQI table in [Table 9] is used when a target BLER of a system is 0.1, and a CQI table in [Table 11] is used when a target BLER is 0.00001. In the disclosure, a method for determining a new CQI table in a case of using a separate CQI table for a target BLER between 0.1 and 0.00001 is proposed. Hereinafter, the disclosure provides a description is given under the assumption that most target BLERs are configured to $10^{-P}$ (P = 1, 2, 3, 4, 5, ...) for convenience of explanation. However, the disclosure is not limited thereto, and a target BLER may be configured to a value close to $10^{-P}$, such as 0.2, 0.002, 0.00002, 0.09, 0.009, and 0.000009, according to a system.

In addition, the following embodiments describe a method for designing a CQI table to transmit channel state information (CSI) by an apparatus including a transceiver and at least one processor associated with (coupled with) the transceiver in a communication system, or a method for using a designed CQI table. Particularly, the embodiments describe a method for designing a CQI table designed in case that support services or target BLERs are different from each other, or a method for using a designed CQI table. In addition, the disclosure describes a method for determining or configuring a proper MCS by using a designed MCS table or a suitable MCS table corresponding to the CQI table. For reference, in order to maintain signaling overhead in the same level in LTE, CQI and MCS indicators may be maintained to have four bits and five bits as conventional bits, respectively, and CQI index 0 may also be defined as "out of range".

[Embodiment 1]

In general, indexes included in a CQI table or an MCS table are determined to allow operation signal-to-noise ratio (SNR) intervals supporting a target BLER of a system to be as equivalent as possible. A channel capacity of an SNR reference is affected by a BLER or an error probability of a reception bit, which is allowed in a system. For example, in a case of applying channel coding having the code rate R, the channel capacity $C_{SNR}(R)$ assuming error free, and the channel capacity $C_{SNR,b}(R)$ in a case of the target bit error rate $P_b$ have a relation of $C_{SNR,b}(R) < C_{SNR}(R)$. This is because a required SNR level is low due to allowance of a certain bit error rate or BLER in a system, compared to a strong condition such as error free. Therefore, an operation SNR is also variable according to an allowed system target bit error rate or BLER, and thus an optimized modulation order-and-error rate combination or an optimized target spectral efficiency value may be changed according to a target bit error rate. In addition, a bit error rate exponentially reduces with an SNR increase in general. Therefore, in case that an optimal CQI table or MCS table is designed or configured, the table is required to be designed in consideration of a log scale for a target BLER or bit error rate. For example, the target BLER 0.001 corresponds to a middle value between the target BLERs 0.1 and 0.00001 on a log scale. Therefore, a CQI table for the target BLER 0.001 may be generated using the CQI table in [Table 9] and the CQI table in [Table 11]. For reference, the spectral efficiency may be simply represented by a modulation order product rate (MPR), such as, the multiplication R*Qm between the modulation order Qm and the code rate R.

[Table 9] and [Table 11] are CQI tables which considers a maximum modulation order of 6, that is, maximum 64QAMm, and have target BLERs of 0.1 and 0.00001, respectively. A CQI table or an MCS table may be designed in consideration of almost equivalent operation SNRs and target BLERs. Therefore, in case that a CQI table is newly generated based on two CQI tables having the target BLERs of 0.1 and 0.00001, respectively, a modulation-and-code rate combination of an existing table or a spectral efficiency corresponding thereto may be maximally reused.

First, there is an assumption that a first CQI table and a second CQI table having the same maximum modulation scheme or order exist, and the target BLERs are different from each other, for example, $10^{-P1}$ and $10^{-P2}$. A new third CQI table having a target BLER of $10^{-P}$ and the same maximum modulation order may be generated to satisfy at least some or all of the following conditions. (Assume P1 < P < P2)

Condition 1) The spectral efficiency corresponding to the modulation-and-code rate combination of index I in the third CQI table is equal to or smaller than the spectral efficiency corresponding to the modulation-and-code rate combination corresponding to index I in the first CQI table, and is equal to or greater than the spectral efficiency corresponding to the modulation-and-code rate combination corresponding to index I in the second CQI table.

Condition 2) The same modulation-and-code rate combinations commonly included in the first CQI table and the second CQI table are all included in the third CQI table. Hereinafter, a set including all the same modulation-and-code rate combinations is called set S for convenience.

Condition 3) If P is equal to a *(P1 + P2) (P = a *(P1 + P2)) and the number of the same combinations in condition 2) is X, the index for the combination having the lowest spectral efficiency among the commonly included same combinations is determined by $g_{CQI}(a)$ - floor(X/2) or $g_{CQI}(a)$ - ceil(X/2), and the remaining commonly included same combinations are sequentially indexed. Here, floor(x) denotes the greatest integer smaller than or equal to the real number x, ceil(x) denotes the smallest integer greater than or equal to the real number x, and $g_{CQI}(a)$ denotes an integer determined according to the alphabet a. The alphabet a is a number properly selectable according to a target BLER. In a case of P1=1 and P2=5, a may be equal to 1/3 (a = 1/3) to configure P=2, a may be equal to 1/2 (a = 1/2) to configure P=3, and a may be equal to 2/3 (a = 2/3) to configure P=4. In the disclosure, for convenience, a description will be given under the configuration of $g_{CQI}(1/3) = 5$ (or 4), $g_{CQI}(1/2) = 8$, and $g_{CQI}(2/3) = 10$ (or 11 or 12), but other values are possible. If $g_{CQI}(a)$ - floor(X/2) < 1, $g_{CQI}(a)$ - ceil(X/2) < 1, $g_{CQI}(a)$ - floor(X/2) + X > 15, or $g_{CQI}(a)$ - ceil(X/2) + X > 15 are true, a modulation-and-code rate combination corresponding to an index smaller than index 1 or greater than index 15 is excluded.

Condition 4) When an index assigned to the combination having the lowest spectral efficiency among the combinations included in set S is J, (J-1) number of combinations having high spectral efficiencies among modulation-and-code rate combinations which are not included in set S while having a lower spectral efficiency than that of a modulation-and-code rate combination included in set S, among the modulation-and-code rate combinations of the second CQI table are sequentially assigned to index 1 to (J-1).

Condition 5) When an index assigned to the combination having the highest spectral efficiency among the same combinations included in set S is K, (15-K) number of combinations having low spectral efficiencies among modulation-and-code rate combinations which are not included in set S while having a higher spectral efficiency than that of a modulation-and-code rate combination included in set S, among the modulation-and-code rate combinations of the first CQI table are sequentially assigned to index (K+1) to 15.

As a specific embodiment considering the above conditions, a method for generating a new CQI table having a target BLER of $10^{-3}$ by using [Table 9] and [Table 11] will be described as follows. First, modulation-and-code rate combinations commonly included in [Table 9] and [Table 11] above are determined according to condition 2). The common combinations are (QPSK, 78/1024), (QPSK, 120/1024), (QPSK, 193/1024), (QPSK, 308/1024),

(QPSK, 449/1024), (QPSK, 602/1024), (16QAM, 378/1024), (16QAM, 490/1024), (16QAM, 616/1024), (64QAM, 466/1024), (64QAM, 567/1024),

(64QAM, 666/1024), and (64QAM, 772/1024), and the number thereof may be identified as a total of 13 (X = 13).

By condition 3), a is equal to 1/2, and thus if $g_{CQI}(1/2)$ is equal to 8, $g_{CQI}(a)$ - floor(X/2) is eight minus six (8-6), that is, 2. Therefore, the 13 combinations are sequentially assigned to index 2 to 14. Next, by condition 4), the combination (QPSK, 50/1024) is assigned to index 1 in [Table 11], and (64QAM, 873/1024) is assigned to index 15 in [Table 9]. A CQI table generated as described above is as shown in [Table 17].

[Table 17]

| CQI index | modulation | code rate x 1024 | efficiency |
|---|---|---|---|
| 0 | out of range | | |
| 1 | QPSK | 50 | 0.0977 |
| 2 | QPSK | 78 | 0.1523 |
| 3 | QPSK | 120 | 0.2344 |
| 4 | QPSK | 193 | 0.3770 |
| 5 | QPSK | 308 | 0.6016 |
| 6 | QPSK | 449 | 0.8770 |
| 7 | QPSK | 602 | 1.1758 |
| 8 | 16QAM | 378 | 1.4766 |
| 9 | 16QAM | 490 | 1.9141 |
| 10 | 16QAM | 616 | 2.4063 |
| 11 | 64QAM | 466 | 2.7305 |
| 12 | 64QAM | 567 | 3.3223 |
| 13 | 64QAM | 666 | 3.9023 |
| 14 | 64QAM | 772 | 4.5234 |
| 15 | 64QAM | 873 | 5.1152 |

[Embodiment 2] In a case of embodiment 1, $g_{CQI}(a)$ - floor(X/2) < 2 or $g_{CQI}(a)$ - ceil(X/2) < 2 may be true with respect to (P1=1, P2=5, P=2) or (P1=1, P2=5, P=4). Therefore, in this case, a new third CQI table may be generated through another method.

First, with respect to index J (J=1, 2, ...) of two given CQI tables including first CQI and second CQI tables, spectral efficiencies are assumed to be $A_J$ and $B_J$, respectively. When the spectral efficiency for index J of a new third CQI table is $C_J$, $C_J$ may be represented by [Table 18] and as follows by using the function F(A, B) defining a new value, based on $A_J$ and $B_J$: $C_J = F(A_J, B_J)$. Here, the function F(A, B) may be defined in various forms, and for example, may be defined as a function considering a target BLER such as F(A, B) = (1-a)*A + a*B (wherein a indicates a value defined in condition 3 of embodiment 1 above). In addition, generally, in a case of having the same modulation scheme or order for the same index, $C_J$ may be defined according to a code rate rather than spectral efficiency. Moreover, a value of $C_J$

= F(A$_J$, B$_J$) may be expressed by a different close value. For example, when C$_J$ is equal to 0.1934, 1024*R is equal to 1024*0.1934/(2 to 99). In order to express same simply by 1024*R = 100, C$_J$ may be changed to a close value such as 0.1953. A close value of a given value may commonly indicate values within a range of 10-20%.

[Table 18]

| CQI index | modulation | code rate x 1024 | efficiency |
|---|---|---|---|
| 0 | out of range | | |
| 1 | QPSK | 1024 x F(A1, B1)/2 | F(A1, B1) |
| 2 | QPSK | 1024 x F(A2, B2)/2 | F(A2, B2) |
| 3 | QPSK | 1024 x F(A3, B3)/2 | F(A3, B3) |
| 4 | QPSK | 1024 x F(A4, B4)/2 | F(A4, B4) |
| 5 | QPSK | 1024 x F(A5, B5)/2 | F(A5, B5) |
| 6 | QPSK | 1024 x F(A6, B6)/2 | F(A6, B6) |
| 7 | QPSK | 1024 x F(A7, B7)/2 | F(A7, B7) |
| 8 | 16QAM | 1024 x F(A8, B8)/4 | F(A8, B8) |
| 9 | 16QAM | 1024 x F(A9, B9)/4 | F(A9, B9) |
| 10 | 16QAM (or 64QAM) | 1024 x F(A10, B10)/4 (or 1024 x F(A10, B10)/6) | F(A10, B10) |
| 11 | 64QAM | 1024 x F(A11, B11)/6 | F(A11, B11) |
| 12 | 64QAM | 1024 x F(A12, B12)/6 | F(A12, B12) |
| 13 | 64QAM | 1024 x F(A13, B13)/6 | F(A13, B13) |
| 14 | 64QAM | 1024 x F(A14, B14)/6 | F(A14, B14) |
| 15 | 64QAM | 1024 x F(A15, B15)/6 | F(A15, B15) |

A new CQI table having a target BLER of $10^{-2}$, $10^{-3}$, and $10^{-4}$ (target BLER= $10^{-2}$, $10^{-3}$, $10^{-4}$), which is generated using a method of generating [Table 18], based on [Table 9] and [Table 11], may be represented as shown in [Table 19], [Table 20], and [Table 21].

[Table 19]

| CQI index | modulation | code rate x 1024 | efficiency |
|---|---|---|---|
| 0 | out of range | | |
| 1 | QPSK | 62 | 0.1211 |
| 2 | QPSK | 97 | 0.1895 |
| 3 | QPSK | 155 | 0.3027 |
| 4 | QPSK | 245 | 0.4785 |
| 5 | QPSK | 364 | 0.7109 |
| 6 | QPSK | 504 | 0.9844 |
| 7 | QPSK | 654 | 1.2773 |
| 8 | 16QAM | 427 | 1.6680 |
| 9 | 16QAM | 537 | 2.0977 |
| 10 | 16QAM | 629 | 2.4570 |
| 11 | 64QAM | 515 | 3.0176 |
| 12 | 64QAM | 599 | 3.5098 |
| 13 | 64QAM | 704 | 4.1250 |

(continued)

| CQI index | modulation | code rate x 1024 | efficiency |
|---|---|---|---|
| 14 | 64QAM | 804 | 4.7109 |
| 15 | 64QAM | 889 | 5.2090 |

[Table 20]

| CQI index | modulation | code rate x 1024 | efficiency |
|---|---|---|---|
| 0 | out of range | | |
| 1 | QPSK | 54 | 0.1055 |
| 2 | QPSK | 85 | 0.1660 |
| 3 | QPSK | 136 | 0.2656 |
| 4 | QPSK | 214 | 0.4180 |
| 5 | QPSK | 321 | 0.6270 |
| 6 | QPSK | 455 | 0.8887 |
| 7 | QPSK | 602 | 1.1758 |
| 8 | 16QAM | 396 | 1.5469 |
| 9 | 16QAM | 497 | 1.9414 |
| 10 | 16QAM | 595 | 2.3242 |
| 11 | 64QAM | 489 | 2.8652 |
| 12 | 64QAM | 566 | 3.3164 |
| 13 | 64QAM | 670 | 3.9258 |
| 14 | 64QAM | 770 | 4.5117 |
| 15 | 64QAM | 856 | 5.0156 |

[Table 21]

| CQI index | modulation | code rate x 1024 | efficiency |
|---|---|---|---|
| 0 | out of range | | |
| 1 | QPSK | 46 | 0.08984375 |
| 2 | QPSK | 73 | 0.142578125 |
| 3 | QPSK | 116 | 0.2265625 |
| 4 | QPSK | 182 | 0.35546875 |
| 5 | QPSK | 278 | 0.54296875 |
| 6 | QPSK | 406 | 0.79296875 |
| 7 | QPSK | 551 | 1.076171875 |
| 8 | 16QAM | 364 | 1.421875 |
| 9 | 16QAM | 457 | 1.78515625 |
| 10 | 16QAM | 560 | 2.1875 |
| 11 | 64QAM | 463 | 2.712890625 |
| 12 | 64QAM | 533 | 3.123046875 |

(continued)

| CQI index | modulation | code rate x 1024 | efficiency |
|---|---|---|---|
| 13 | 64QAM | 635 | 3.720703125 |
| 14 | 64QAM | 735 | 4.306640625 |
| 15 | 64QAM | 831 | 4.869140625 |

An example of a new CQI table having a target BLER of $10^{-2}$, which is generated using a method of [Table 18], based on [Table 9] and [Table 17], is shown in [Table 22], and an example of a new CQI table having a target BLER of $10^{-4}$, which is generated using a method of [Table 18], based on [Table 11] and [Table 17], is shown in [Table 23]. In a case of using [Table 9] and [Table 17], in the equation P = a *(P1 + P2), P1 = 1, P2 = 3, and a = 1/2 are used, and in a case of using [Table 11] and [Table 17], P1 = 3, P2 = 5, and a = 1/2 are used.

[Table 22]

| CQI index | modulation | code rate x 1024 | efficiency |
|---|---|---|---|
| 0 | out of range | | |
| 1 | QPSK | 64 | 0.1250 |
| 2 | QPSK | 99 | 0.1934 |
| 3 | QPSK | 157 | 0.3066 |
| 4 | QPSK | 251 | 0.4902 |
| 5 | QPSK | 379 | 0.7402 |
| 6 | QPSK | 526 | 1.0273 |
| 7 | 16QAM (or QPSK) | 340 (or 679) | 1.3281 (or 1.3262) |
| 8 | 16QAM | 434 | 1.6953 |
| 9 | 16QAM | 553 | 2.1602 |
| 10 | 64QAM (or 16QAM) | 438 (or 658) | 2.5664 (or 2.5703) |
| 11 | 64QAM | 517 | 3.0293 |
| 12 | 64QAM | 616 | 3.6094 |
| 13 | 64QAM | 719 | 4.2129 |
| 14 | 64QAM | 822 | 4.8164 |
| 15 | 64QAM | 910 | 5.3320 |

[Table 23]

| CQI index | modulation | code rate x 1024 | efficiency |
|---|---|---|---|
| 0 | out of range | | |
| 1 | QPSK | 40 | 0.0781 |
| 2 | QPSK | 64 | 0.1250 |
| 3 | QPSK | 99 | 0.1934 |
| 4 | QPSK | 157 | 0.3066 |
| 5 | QPSK | 251 | 0.4902 |
| 6 | QPSK | 379 | 0.7402 |
| 7 | QPSK | 526 | 1.0273 |
| 8 | 16QAM(or QPSK) | 340 (or 679) | 1.3281 (or 1.3262) |

(continued)

| CQI index | modulation | code rate x 1024 | efficiency |
|---|---|---|---|
| 9 | 16QAM | 434 | 1.6953 |
| 10 | 16QAM | 553 | 2.1602 |
| 11 | 64QAM(or 16QAM) | 438 (or 658) | 2.5664 (or 2.5703) |
| 12 | 64QAM | 517 | 3.0293 |
| 13 | 64QAM | 616 | 3.6094 |
| 14 | 64QAM | 719 | 4.2129 |
| 15 | 64QAM | 822 | 4.8164 |

In the above description, a method of newly determining a spectral efficiency in consideration of a target BLER and a spectral efficiency for each index in two different tables including the first CQI table and the second CQI table, thereby determining the third CQI table has been described, and the CQI tables of [Table 18] to [Table 23] may be determined according to the described method. In addition, a code rate or a spectral efficiency in each CQI table may be determined by the value of a determined according to a target BLER. In other words, a code rate or a spectral efficiency for each CQI index J of the third CQI table may have a value of $(1-a)*R_1(J) + a*R_2(J)$ or $(1-a)*SE_1(J) + a*SE_2(J)$ for the code rates $R_1(J)$ and $R_2(J)$ or the spectral efficiencies $SE_1(J)$ and $SE_2(J)$ corresponding to the first CQI table and the second CQI table, or a value close thereto. [Embodiment 3]

In 5G NR, in case that a maximum modulation order is equal to 8, that is, a 256QAM modulation scheme is allowed, there may exist only one CQI table for a target BLER of 0.1 corresponding to [Table 10]. In this case, the following method may be applied to generate a third CQI table having a target BLER of 0.001.

First, (QPSK, 50/1024) or (QPSK, 54/1024) may be identified to be suitable as a modulation-and-code rate combination for index 1 in a case of a target BLER of 0.001 from [Table 17] of embodiment 1 or [Table 20] of embodiment 2. As described above, combinations suitable for initial indexes in a CQI table having a target BLER of 0.001 may be configured first (methods of other embodiments may be used to configure the combinations, or an operation SNR may be determined through simulation, and then the combinations may be determined.). Next, combinations corresponding to spectral efficiency values lower than the lowest spectral efficiency of [Table 10] among the combinations suitable for the initial indexes are sequentially assigned to indexes from index 1, and modulation-and-code rate combinations in [Table 10] are sequentially assigned to the remaining indexes. For example, when a combination suitable for an initial index of a CQI table for a BLER of 0.001 is (QPSK, 50/1024), the combination (QPSK, 50/1024) has a lower spectral efficiency than that of the combination (QPSK, 78/1024) corresponding to the lowest spectral efficiency of [Table 10]. Therefore, as shown in [Table 24], the same combination is assigned to index 1, and existing combinations in [Table 10] are sequentially assigned to subsequent indexes. If the number of selected combinations suitable for initial indexes is X, X indexes among combinations of [Table 10] are replaced with combinations for the initial indexes.

[Table 24]

| CQI index | modulation | code rate x 1024 | efficiency |
|---|---|---|---|
| 0 | out of range | | |
| 1 | QPSK | 50 | 0.0977 |
| 2 | QPSK | 78 | 0.1523 |
| 3 | QPSK | 193 | 0.3770 |
| 4 | QPSK | 449 | 0.8770 |
| 5 | 16QAM | 378 | 1.4766 |
| 6 | 16QAM | 490 | 1.9141 |
| 7 | 16QAM | 616 | 2.4063 |
| 8 | 64QAM | 466 | 2.7305 |
| 9 | 64QAM | 567 | 3.3223 |
| 10 | 64QAM | 666 | 3.9023 |

(continued)

| CQI index | modulation | code rate x 1024 | efficiency |
|-----------|-----------|------------------|------------|
| 11 | 64QAM | 772 | 4.5234 |
| 12 | 64QAM | 873 | 5.1152 |
| 13 | 256QAM | 711 | 5.5547 |
| 14 | 256QAM | 797 | 6.2266 |
| 15 | 256QAM | 885 | 6.9141 |

The CQI tables in [Table 17] to [Table 24] designed above merely correspond to an example. In some cases, a table may be configured by other modulation-and-code rate combinations having a value close to each code rate or spectral efficiency within 10-20%.

[Embodiment 4]

This embodiment describes a method for using an existing CQI table without change, and determining a modulation-and-code rate combination according to a CQI index, based on a pre-promised rule. In general, in case that a newly designed CQI table is applied to a system as in embodiment 1 to embodiment 3, a parameter indicating corresponding CQI tables may be defined through higher layer signaling. For example, in 5G NR, the parameter cqi-Table included in CSI-ReportConfig configures may be used to indicate corresponding CQI tables. In addition, it is also possible to indirectly indicating the tables by directly indicating a target BLER or a parameter corresponding thereto through RRC.

For example, in case that a particular CQI table is indicated through cqi-Table included in CSI-ReportConfig configures and a target BLER or a user category is indicated separately, a proper CQI index may be determined based on a rule pre-determined in the CQI table, by using the CQI table, the BLER, or the user category indicated according to the indicators. A terminal may transmit CQI indexes determined based on the target BLER or user category, the CQI table, and a measured reception SNR, to a base station through a proper parameter to report CSI to the base station.

First, a code rate* 1024 and a spectral efficiency according to each index J in a CQI table are called $R(J)$ and $SE(J)$, a modulation order is called $Q(J)$, and a target BLER is called $10^{-P}$. A method for determining the proper value $F(Q(J), P)$, based on the target BLER and the modulation order, determining a final code rate in a scheme of subtracting or adding the determined proper value $F(Q(J), P)$ from or to the code rate $R(J)$ will be described. In other words, in case that a target BLER is indicated through higher layer signaling and a CQI table to be used is indicated, the actual code rate $R_{eff}(J)$* 1024 may be calculated using a method as [Equation 1] for example (In the disclosure, for convenience, a value obtained by multiplying a code rate by 1024 is used, but the code rate may be used without change).

$$[Equation\ 1]$$
$$R_{eff}(J) = R(J) - F(Q(J), P).$$

In [Equation 1] above, $F(Q(J), P)$ may be a function complexly determined for the modulation order $Q(J)$ and P corresponding to a target BLER. In addition, $F(Q(J), P)$ may be separated into mutually independent functions including $F_1(Q(J))$ meaning a value determined based on a modulation order and $F_2(P)$ meaning a value determined according to a target BLER as shown in $F(Q(J), P) = F_1(Q(J)) + F_2(P)$. Moreover, in some cases, $F_1(Q(J)) = 0$ is configured, so that $R_{eff}(J)$ may be configured to a value unaffected by a modulation order. For example, in case that $F_1(Q(J)) = 0$ and $F_2(P) = (P - 1)*c$ are configured, it may be noted according to [Equation 1] above that, if a target BLER is $10^{-2}$, $R_{eff}(J) = R(J) - c$, if a target BLER = $10^{-3}$, $R_{eff}(J) = R(J) - 2*c$, if a target BLER = $10^{-4}$, $R_{eff}(J) = R(J) - 3*c$, and if a target BLER = $10^{-5}$, $R_{eff}(J) = R(J) - 4*c$. In [Equation 1] above, as the constant c, a proper value may be selected according to a system. For example, the constant c may be configured to 12 by equivalently dividing the difference 48 between 78 and 30 for index 1 with reference to [Table 9] and [Table 11], or may be configured by considering the average of differences between modulation-and-code rate combinations. Equation 1 shown above merely corresponds to an embodiment for calculating an actual code rate in the disclosure. That is, according to the disclosure, an actual code rate may be determined based on a modulation order, a value corresponding to a target BLER, and a spectral efficiency value, and Equation 1 is an embodiment for determining an actual code rate by using the parameters.

[Equation 1] shows subtracting or adding particular values from or to an existing code rate according to a pre-determined rule. However, in general, a method using particular ratio values by multiplying or dividing an existing code rate by a proper value according to a pre-determined rule may also be used.

[Embodiment 5]

In embodiment 1 to embodiment 4, a method for designing or determining a CQI table has been discussed. CQI tables designed by the above method may be stored in a base station or a terminal and be used for CQI index determination or CSI reporting.

For example, CQI tables designed for a target BLER of 0.001 as newly designed [Table 17] as well as [Table 9], [Table 10], and [Table 11] may be used as follows for CQI index determination or CSI reporting.

[CQI determination-2]

-    A single PDSCH transport block having a combination of a modulation order (or technique), a target code rate, and a TBS corresponding to a CQI index is required to be received at a transport block error probability not exceeding the following probability:

> * If the CSI-higher layer parameter cqi-Table included in CSI-ReportConfig configures (or indicates) [Table 9] or [Table 10] above, a target transport block error rate is 0.1.
> * If the CSI-higher layer parameter cqi-Table included in CSI-ReportConfig configures (or indicates) Table 17 above, a target transport block error rate is 0.001.
> * If the CSI-higher layer parameter cqi-Table included in CSI-ReportConfig configures (or indicates) Table 11 above, a target transport block error rate is 0.00001.

The above example shows a case of four CQI tables including a case of a target BLER of 0.001 added thereto. However, in general, when more target BLERs and a wider variety of service scenarios are considered, a part of [Table 19] to [Table 24] may be used additionally.

In embodiment 1 to embodiment 5, newly generating of a CQI table or a feature of a generated CQI table and a use method thereof have been discussed. Next, a method for designing an MCS table according to a target BLER will be described.

[Embodiment 6]

An error probability exponentially reduces with an SNR increase. Therefore, also in case that an optimal MCS table is designed or configured, the table is required to be designed in consideration of a log scale for a target BLER or bit error rate. For example, the target BLER 0.001 corresponds to a middle value between the target BLERs 0.1 and 0.00001 on a log scale. Therefore, an MCS table for the target BLER 0.001 may be generated properly using the MCS table in [Table 12] to the MCS table in [Table 16].

There is an assumption that a first MCS table and a second MCS table having the same maximum modulation scheme or order exist, and the target BLERs are different from each other, for example, $10^{-P1}$ and $10^{-P2}$. A new third MCS table having a target BLER of $10^{-P}$ and the same maximum modulation order may be generated to satisfy at least some or all of the following conditions (Assume P1 < P < P2).

Condition 1) The spectral efficiency corresponding to the modulation-and-code rate combination of index I in the third MCS table is equal to or smaller than the spectral efficiency corresponding to the modulation-and-code rate combination corresponding to index I in the first MCS table, and is equal to or greater than the spectral efficiency corresponding to the modulation-and-code rate combination corresponding to index I in the second MCS table.

Condition 2-1) The same modulation-and-code rate combinations commonly included in the first MCS table and the second MCS table are all included in the third MCS table. Hereinafter, a set including all the same modulation-and-code rate combinations is called set S1 for convenience.

Condition 2-2) When a combination having the lowest spectral efficiency among the same modulation-and-code rate combinations commonly included in the first MCS table and the second MCS is C1, and a combination having the highest spectral efficiency is C2, the third MCS table includes all modulation-and-code rate combinations equal to or higher than C1 and equal to or lower than C2 in the first MCS table and the second MCS. Hereinafter, all the same modulation-and-code rate combinations are called set S2 for convenience.

Condition 3) If P = a *(P1 + P2) and the number of the same combinations in condition 2) is X, the index for the combination having the lowest spectral efficiency among the commonly included same combinations is determined by $g_{MCS}(a)$ - floor(X/2) or $g_{MCS}(a)$ - ceil(X/2), and the remaining commonly included same combinations are sequentially indexed. Here, floor(x) denotes the greatest integer smaller than or equal to the real number x, ceil(x) denotes the smallest integer greater than or equal to the real number x, and $g_{MCS}(a)$ denotes an integer determined according to the alphabet a. The alphabet a is a number properly selectable according to a target BLER. In a case of P1=1 and P2=5, a may be equal to 1/3 (a = 1/3) to configure P=2, a may be equal to 1/2 (a = 1/2) to configure P=3, and a may be equal to 2/3 (a = 2/3) to configure P=4. In the disclosure, for convenience, a description will be given under the configuration of $g_{MCS}(1/2)$ = 14 or 15, but other values are possible. If $g_{MCS}(a)$ - floor(X/2) < 0, $g_{MCS}(a)$ - ceil(X/2) < 0, $g_{MCS}(a)$ - floor(X/2) + X > 28 (or 27), or $g_{MCS}(a)$ - ceil(X/2) + X > 28 (or 27) are true, a modulation-and-code rate combination corresponding to an index smaller than index 0 or greater than index 28 (or 27) is excluded.

Condition 4) When an index assigned to the combination having the lowest spectral efficiency among the same combinations included in set S1 or S2 is J, J number of combinations having high spectral efficiencies among modulation-and-code rate combinations which are not included in set S1 or S2 while having a lower spectral efficiency than that of a modulation-and-code rate combination included in set S1 or S2, among the modulation-and-code rate combinations of the second MCS table are sequentially assigned to index 0 to (J-1).

Condition 5) When an index assigned to the combination having the highest spectral efficiency among the same combinations included in set S1 or S2 is K, (28-K) or (27-K) number of combinations having low spectral efficiencies among modulation-and-code rate combinations which are not included in set S1 or S2 while having a higher spectral efficiency than that of a modulation-and-code rate combination included in set S1 or S2, among the modulation-and-code rate combinations of the first MCS table are sequentially assigned to index (K+1) to 28 or 27. The value of 28 or 27 may change according to the number of reserved indexes in a given MCS table (e.g., 31-(the number of reserved indexes)).

As a specific embodiment considering the above conditions, a method for generating a new MCS table having a target BLER of $10^{-3}$ by using [Table 12] and [Table 14] will be described as follows. First, a set S1 of modulation-and-code rate combinations commonly included in [Table 12] and [Table 14] above are determined according to condition 2-1). The common combinations are (QPSK, 120/1024), (QPSK, 157/1024), (QPSK, 193/1024), (QPSK, 251/1024),

(QPSK, 308/1024), (QPSK, 379/1024), (QPSK, 449/1024), (QPSK, 526/1024),
(QPSK, 602/1024), (16QAM, 340/1024), (16QAM, 378/1024), (16QAM, 434/1024),
(16QAM, 490/1024), (16QAM, 553/1024), (16QAM, 616/1024),
(64QAM, 438/1024), (64QAM, 466/1024), (64QAM, 517/1024),
(64QAM, 567/1024), (64QAM, 616/1024), (64QAM, 666/1024),
(64QAM, 719/1024), and (64QAM, 772/1024), and the number thereof may be identified as a total of 23 (X1 = 23).

If a set S2 of modulation-and-code rate combinations is determined according to condition 2-2) for [Table 12] and [Table 14], the common combinations included in the set S2 are

(QPSK, 120/1024), (QPSK, 157/1024), (QPSK, 193/1024), (QPSK, 251/1024),
(QPSK, 308/1024), (QPSK, 379/1024), (QPSK, 449/1024), (QPSK, 526/1024),
(QPSK, 602/1024), (QPSK, 679/1024), (16QAM, 340/1024), (16QAM, 378/1024),
(16QAM, 434/1024), (16QAM, 490/1024), (16QAM, 553/1024),
(16QAM, 616/1024), (16QAM, 658/1024), (64QAM, 438/1024),
(64QAM, 466/1024), (64QAM, 517/1024), (64QAM, 567/1024),
(64QAM, 616/1024), (64QAM, 666/1024), (64QAM, 719/1024), and (64QAM, 772/1024), and
the number thereof may be identified as a total of 25 (X2 = 25).

Next, by condition 3), a is equal to 1/2, and thus if $g_{MCS}(1/2)$ is equal to 14, $g_{MCS}(a)$ - floor(X/2) is 14 - 12, that is, 2. Therefore, the 23 combinations included in the set S1 are sequentially assigned to index 2 to 24. Next, by condition 4), the combinations (QPSK, 78/1024) and (QPSK, 99/1024) in [Table 14] are sequentially assigned to index 0 and index 1, and (64QAM, 822/1024), (64QAM, 873/1024), (64QAM, 910/1024), and (64QAM, 948/1024) in [Table 12] are sequentially assigned to indexes 25, 26, 27, and 28, respectively.

An MCS table generated as described above is as shown in [Table 25].

[Table 25]

| MCS Index $I_{MCS}$ | Modulation Order Qm | Target code Rate [R x 1024] | Spectral efficiency |
|---|---|---|---|
| 0 | 2 | 78 | 0.1523 |
| 1 | 2 | 99 | 0.1934 |
| 2 | 2 | 120 | 0.2344 |
| 3 | 2 | 157 | 0.3066 |

(continued)

| MCS Index $I_{MCS}$ | Modulation Order Qm | Target code Rate [R x 1024] | Spectral efficiency |
|---|---|---|---|
| 4 | 2 | 193 | 0.3770 |
| 5 | 2 | 251 | 0.4902 |
| 6 | 2 | 308 | 0.6016 |
| 7 | 2 | 379 | 0.7402 |
| 8 | 2 | 449 | 0.8770 |
| 9 | 2 | 526 | 1.0273 |
| 10 | 2 | 602 | 1.1758 |
| 11 | 4 | 340 | 1.3281 |
| 12 | 4 | 378 | 1.4766 |
| 13 | 4 | 434 | 1.6953 |
| 14 | 4 | 490 | 1.9141 |
| 15 | 4 | 553 | 2.1602 |
| 16 | 4 | 616 | 2.4063 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

If $g_{MCS}(1/2)$ is equal to 15 in condition 3), $g_{MCS}(a)$ - floor(X/2) is equal to 15 - 12, that is, 3. Therefore, the 23 combinations included in the set S1 are sequentially assigned to index 3 to 25. In addition, by condition 4), the combinations (QPSK, 64/1024), (QPSK, 78/1024), and (QPSK, 99/1024) in [Table 14] are sequentially assigned to indexes 0, 1, and 2, and (64QAM, 822/1024), (64QAM, 873/1024), and (64QAM, 910/1024) in [Table 12] are sequentially assigned to indexes 26, 27, and 28, respectively. An MCS table generated as described above is as shown in [Table 26].

[Table 26]

| MCS Index $I_{MCS}$ | Modulation Order Qm | Target code Rate [R x 1024] | Spectral efficiency |
|---|---|---|---|
| 0 | 2 | 64 | 0.1250 |
| 1 | 2 | 78 | 0.1523 |
| 2 | 2 | 99 | 0.1934 |

(continued)

| MCS Index $I_{MCS}$ | Modulation Order Qm | Target code Rate [R x 1024] | Spectral efficiency |
|---|---|---|---|
| 3 | 2 | 120 | 0.2344 |
| 4 | 2 | 157 | 0.3066 |
| 5 | 2 | 193 | 0.3770 |
| 6 | 2 | 251 | 0.4902 |
| 7 | 2 | 308 | 0.6016 |
| 8 | 2 | 379 | 0.7402 |
| 9 | 2 | 449 | 0.8770 |
| 10 | 2 | 526 | 1.0273 |
| 11 | 2 | 602 | 1.1758 |
| 12 | 4 | 340 | 1.3281 |
| 13 | 4 | 378 | 1.4766 |
| 14 | 4 | 434 | 1.6953 |
| 15 | 4 | 490 | 1.9141 |
| 16 | 4 | 553 | 2.1602 |
| 17 | 4 | 616 | 2.4063 |
| 18 | 6 | 438 | 2.5664 |
| 19 | 6 | 466 | 2.7305 |
| 20 | 6 | 517 | 3.0293 |
| 21 | 6 | 567 | 3.3223 |
| 22 | 6 | 616 | 3.6094 |
| 23 | 6 | 666 | 3.9023 |
| 24 | 6 | 719 | 4.2129 |
| 25 | 6 | 772 | 4.5234 |
| 26 | 6 | 822 | 4.8164 |
| 27 | 6 | 873 | 5.1152 |
| 28 | 6 | 910 | 5.3320 |
| 29 | 2 | reserved | |
| 30 | 4 | reserved | |
| 31 | 6 | reserved | |

If $g_{MCS}(1/2)$ is equal to 14 in condition 3) and an MCS table is generated based on the set S2, $g_{MCS}(a)$ - floor(X/2) is equal to fourteen minus twelve (14-12), that is, 2. Therefore, the 25 combinations included in the set S2 are sequentially assigned to index 2 to 26. In addition, by condition 4), the combinations (QPSK, 78/1024) and (QPSK, 99/1024) in [Table 14] are sequentially assigned to indexes 0 and 1, and (64QAM, 822/1024) and (64QAM, 873/1024) in [Table 12] are sequentially assigned to indexes 27 and 28, respectively. An MCS table generated as described above is as shown in [Table 27].

[Table 27]

| MCS Index $I_{MCS}$ | Modulation Order Qm | Target code Rate [R x 1024] | Spectral efficiency |
|---|---|---|---|
| 0 | 2 | 78 | 0.1523 |

(continued)

| MCS Index $I_{MCS}$ | Modulation Order Qm | Target code Rate [R x 1024] | Spectral efficiency |
|---|---|---|---|
| 1 | 2 | 99 | 0.1934 |
| 2 | 2 | 120 | 0.2344 |
| 3 | 2 | 157 | 0.3066 |
| 4 | 2 | 193 | 0.3770 |
| 5 | 2 | 251 | 0.4902 |
| 6 | 2 | 308 | 0.6016 |
| 7 | 2 | 379 | 0.7402 |
| 8 | 2 | 449 | 0.8770 |
| 9 | 2 | 526 | 1.0273 |
| 10 | 2 | 602 | 1.1758 |
| 11 | 2 | 679 | 1.3262 |
| 12 | 4 | 340 | 1.3281 |
| 13 | 4 | 378 | 1.4766 |
| 14 | 4 | 434 | 1.6953 |
| 15 | 4 | 490 | 1.9141 |
| 16 | 4 | 553 | 2.1602 |
| 17 | 4 | 616 | 2.4063 |
| 18 | 4 | 658 | 2.5703 |
| 19 | 6 | 438 | 2.5664 |
| 20 | 6 | 466 | 2.7305 |
| 21 | 6 | 517 | 3.0293 |
| 22 | 6 | 567 | 3.3223 |
| 23 | 6 | 616 | 3.6094 |
| 24 | 6 | 666 | 3.9023 |
| 25 | 6 | 719 | 4.2129 |
| 26 | 6 | 772 | 4.5234 |
| 27 | 6 | 822 | 4.8164 |
| 28 | 6 | 873 | 5.1152 |
| 29 | 2 | reserved | |
| 30 | 4 | reserved | |
| 31 | 6 | reserved | |

As described above, another MCS table may be generated using the set S1 or set S2 while changing a value of $g_{MCS}(a)$ and a calculation value of floor(X/2) or ceil(X/2). [Embodiment 7]

In 5G NR, in case that a maximum modulation order is equal to 8, that is, a 256QAM modulation scheme is allowed, there exists only one MCS table for a target BLER of 0.1 corresponding to [Table 10]. In this case, the following method may be applied to generate a third MCS table having a target BLER of 0.001.

First, it may be noted from [Table 25] to [Table 27] of embodiment 6 above that (QPSK, 64/1024) or (QPSK, 78/1024) is suitable as a modulation-and-code rate combination for index 0 in a case of a target BLER of 0.001, and (QPSK, 64/1024), (QPSK, 78/1024), and (QPSK, 99/1024) may be configured as combinations suitable for initial indexes in a CQI table having a target BLER of 0.001 (methods of other embodiments may be used to configure the combinations, or an operation SNR may be determined through simulation, and then the combinations may be determined.). Next, combinations corresponding to spectral efficiency values lower than the lowest spectral efficiency of [Table 13] among the combinations suitable for the initial indexes are sequentially assigned to indexes from index 0, and modulation-and-code rate combinations existing in [Table 10] are sequentially assigned to the remaining indexes. For example, the combinations (QPSK, 64/1024), (QPSK, 78/1024), and (QPSK, 99/1024) have lower spectral efficiencies than that of the combination (QPSK, 120/1024) corresponding to the lowest spectral efficiency of [Table 13]. Therefore, as shown in [Table 28], the same combinations are assigned to indexes 0, 1, and 2, respectively, and existing combinations in [Table 13] are sequentially assigned to subsequent indexes. In the same method, in case that combinations suitable for initial indexes are configured to (QPSK, 78/1024) and (QPSK, 99/1024), an MCS table as shown in [Table 29] may be obtained. If the number of selected combinations suitable for initial indexes is X, X indexes among combinations of [Table 13] are replaced with combinations for the initial indexes.

[Table 28]

| MCS Index $I_{MCS}$ | Modulation Order Qm | Target code Rate [R x 1024] | Spectral efficiency |
|---|---|---|---|
| 0 | 2 | 64 | 0.1250 |
| 1 | 2 | 78 | 0.1523 |
| 2 | 2 | 99 | 0.1934 |
| 3 | 2 | 120 | 0.2344 |
| 4 | 2 | 193 | 0.3770 |
| 5 | 2 | 308 | 0.6016 |
| 6 | 2 | 449 | 0.8770 |
| 7 | 2 | 602 | 1.1758 |
| 8 | 4 | 378 | 1.4766 |
| 9 | 4 | 434 | 1.6953 |
| 10 | 4 | 490 | 1.9141 |
| 11 | 4 | 553 | 2.1602 |
| 12 | 4 | 616 | 2.4063 |
| 13 | 4 | 658 | 2.5703 |
| 14 | 6 | 466 | 2.7305 |
| 15 | 6 | 517 | 3.0293 |
| 16 | 6 | 567 | 3.3223 |
| 17 | 6 | 616 | 3.6094 |
| 18 | 6 | 666 | 3.9023 |
| 19 | 6 | 719 | 4.2129 |
| 20 | 6 | 772 | 4.5234 |
| 21 | 6 | 822 | 4.8164 |
| 22 | 6 | 873 | 5.1152 |
| 23 | 8 | 682.5 | 5.3320 |
| 24 | 8 | 711 | 5.5547 |
| 25 | 8 | 754 | 5.8906 |
| 26 | 8 | 797 | 6.2266 |
| 27 | 8 | 841 | 6.5703 |
| 28 | 2 | reserved | |

(continued)

| MCS Index $I_{MCS}$ | Modulation Order Qm | Target code Rate [R x 1024] | Spectral efficiency |
|---|---|---|---|
| 29 | 4 | reserved | |
| 30 | 6 | reserved | |
| 31 | 8 | reserved | |

[Table 29]

| MCS Index $I_{MCS}$ | Modulation Order Qm | Target code Rate [R x 1024] | Spectral efficiency |
|---|---|---|---|
| 0 | 2 | 78 | 0.1523 |
| 1 | 2 | 99 | 0.1934 |
| 2 | 2 | 120 | 0.2344 |
| 3 | 2 | 193 | 0.3770 |
| 4 | 2 | 308 | 0.6016 |
| 5 | 2 | 449 | 0.8770 |
| 6 | 2 | 602 | 1.1758 |
| 7 | 4 | 378 | 1.4766 |
| 8 | 4 | 434 | 1.6953 |
| 9 | 4 | 490 | 1.9141 |
| 10 | 4 | 553 | 2.1602 |
| 11 | 4 | 616 | 2.4063 |
| 12 | 4 | 658 | 2.5703 |
| 13 | 6 | 466 | 2.7305 |
| 14 | 6 | 517 | 3.0293 |
| 15 | 6 | 567 | 3.3223 |
| 16 | 6 | 616 | 3.6094 |
| 17 | 6 | 666 | 3.9023 |
| 18 | 6 | 719 | 4.2129 |
| 19 | 6 | 772 | 4.5234 |
| 20 | 6 | 822 | 4.8164 |
| 21 | 6 | 873 | 5.1152 |
| 22 | 8 | 682.5 | 5.3320 |
| 23 | 8 | 711 | 5.5547 |
| 24 | 8 | 754 | 5.8906 |
| 25 | 8 | 797 | 6.2266 |
| 26 | 8 | 841 | 6.5703 |
| 27 | 8 | 885 | 6.9141 |
| 28 | 2 | reserved | |
| 29 | 4 | reserved | |
| 30 | 6 | reserved | |

(continued)

| MCS Index $I_{MCS}$ | Modulation Order Qm | Target code Rate [R x 1024] | Spectral efficiency |
|---|---|---|---|
| 31 | 8 | reserved | |

[Embodiment 8] This embodiment relates to a method for designing a proper MCS table in case that a 1024QAM modulation scheme having a maximum modulation order of 10 is allowed in a wireless communication system such as 5G NR, and a method for transmitting or receiving data, based on the MCS table.

First, a CQI table defined as [Table 30] below in a wireless communication system is assumed. In other words, there is an assumption that the CQI table of [Table 30] may be configured in a terminal or a base station as the cqi_table parameter in [CQI determination-1] or [CQI determination-2] (In the disclosure, a description is given, for convenience of explanation, based on a CQI table suitable for a target transport block error probability of 0.1, in case that the CSI-higher layer parameter cqi-Table included in CSI-ReportConfig configures (or indicates) [Table 30]. However, the disclosure is not limited thereto, and is possible to be applied to other CQI tables in the same way.)

[Table 30]

| CQI index | modulation | code rate x 1024 | Spectral efficiency |
|---|---|---|---|
| 0 | out of range | | |
| 1 | QPSK | 78 | 0.1523 |
| 2 | QPSK | 193 | 0.3770 |
| 3 | QPSK | 449 | 0.8770 |
| 4 | 16QAM | 378 | 1.4766 |
| 5 | 16QAM | 616 | 2.4063 |
| 6 | 64QAM | 567 | 3.3223 |
| 7 | 64QAM | 666 | 3.9023 |
| 8 | 64QAM | 772 | 4.5234 |
| 9 | 64QAM | 873 | 5.1152 |
| 10 | 256QAM | 711 | 5.5547 |
| 11 | 256QAM | 797 | 6.2266 |
| 12 | 256QAM | 885 | 6.9141 |
| 13 | 256QAM | 948 | 7.4063 |
| 14 | 1024QAM | 853 | 8.3321 |
| 15 | 1024QAM | 948 | 9.2578 |

A newly defined MCS table may be configured for a terminal or a base station, based on [Table 13] that is one of MCS tables of a 5G NR system, and for convenience, MCS indexes 23 to 26 of a newly defined MCS table are assumed to correspond to a 1024QAM modulation scheme, that is, a modulation order of 10. If MCS index 22 corresponds to 256QAM, MCS index 23 may be configured to have the average value of spectral efficiencies corresponding to CQI indexes 13 and 14 of the CQI table [Table 30], or a value close to the average. For example, the average value of the spectral efficiency 7.4063 of CQI index 13 in [Table 30] and the spectral efficiency 8.3321 of CQI index 14 in [Table 30] is 7.8692. Therefore, the spectral efficiency corresponding to index 23 of a newly defined MCS table may be configured to 7.8692 or an approximation thereof. The spectral efficiency 7.4063 of CQI index 13 in [Table 30] and the spectral efficiency 8.3321 of CQI index 14 in [Table 30] are approximations of an actual spectral efficiency, and thus a more accurate average value may be obtained as follows:

$$\frac{1}{2} \times \left( \frac{948}{1024} \times 8 + \frac{853}{1024} \times 10 \right) \cong 7.8682.$$

In some cases, a spectral efficiency may be defined (or determined) as an approximation of an average value instead of an accurate average value, and the meaning of the approximation may indicate a value within + 3% or - 3% of an accurate average value.

If a spectral efficiency is determined as 7.8682, [code rate (R) x 1024] has a value close to 805.7, and if a spectral efficiency is determined as 7.8692, [code rate (R) x 1024] has a value close to 805.8. Therefore, [code rate (R) x 1024] of MCS index 23 may be defined as 805, 805.5, 806, or 806.5. In addition, spectral efficiencies corresponding to 805, 805.5, 806, or 806.5 that are values of [code rate (R) x 1024] may be 7.8613, 7.8662, 7.8711, and 7.8760, respectively.

The values corresponding to CQI table index 14 of [Table 30] may be used without change as the spectral efficiency and the value [code rate (R) x 1024] corresponding to MCS index 24 of the newly defined MCS table. In the same way, the values corresponding to CQI table index 15 of [Table 30] may be used without change as the spectral efficiency and the value [code rate (R) x 1024] corresponding to MCS index 24.

The spectral efficiency corresponding to MCS index 25 of the newly defined MCS table may be determined as the average value of the values corresponding to CQI index 14 and CQI index 15 of [Table 30] above, or an approximation thereof (or may be determined as the average value of the values corresponding to MCS index 24 and MCS index 26, or an approximation thereof).

The spectral efficiency values corresponding to CQI index 14 and CQI index 15 of [Table 30] are 8.3321 and 9.2578, respectively, and thus the average value is close to 8.7950. Alternatively, an accurate average value may be obtained as follows.

$$\frac{1}{2} \times \left( \frac{853}{1024} \times 10 + \frac{948}{1024} \times 10 \right) \cong 8.7939$$

Therefore, the average value of the spectral efficiency may also be 8.7939. Therefore, the spectral efficiency value corresponding to MCS index 25 may be determined as an approximation, such as 8.7939 or 8.7950, of an accurate average value. The meaning of the approximation may indicate a value within + 3% or - 3% of an accurate average value.

If a spectral efficiency is determined as 8.7939, [code rate (R) x 1024] has a value close to 900.5, and if a spectral efficiency is determined as 8.7950, [code rate (R) x 1024] has a value close to 900.6. Therefore, [code rate (R) x 1024] of MCS index 25 may be defined as 900, 900.5, or 901. In addition, spectral efficiencies corresponding to 900, 900.5, or 901 that are values of [code rate (R) x 1024] may be 8.7891, 8.7939 (~8.7940), and 8.7988, respectively.

An example of an MCS table designed through the method described above is shown in [Table 31]. For reference, in [Table 31], indexes 27 to 31 sequentially correspond to the modulation orders 2, 4, 6, 8, and 10, and mean indexes which may be configured for retransmission of data.

[Table 31]

| MCS Index $I_{MCS}$ | Modulation Order Qm | Target Code Rate [R x 1024] | Spectral Efficiency |
|---|---|---|---|
| 0 | - | - | - |
| 1 | - | - | - |
| ... | ... | ... | ... |
| 22 | - | - | - |
| 23 | 10 | 805.5 | 7.8662 |
| 24 | 10 | 853 | 8.3321 |
| 25 | 10 | 900.5 | 8.7939 |
| 26 | 10 | 948 | 9.2578 |

(continued)

| MCS Index I_MCS | Modulation Order Qm | Target Code Rate [R x 1024] | Spectral Efficiency |
|---|---|---|---|
| 27 | 2 | reserved | |
| 28 | 4 | reserved | |
| 29 | 6 | reserved | |
| 30 | 8 | reserved | |
| 31 | 10 | reserved | |

[Table 31] above is an example of an MCS table obtained by removing four indexes for 1024QAM and one index for reserved indication from [Table 13]. Various MCS tables may be determined according to a method of determining an MCS combination to be removed from [Table 13] (However, a combination of MCS index 0 commonly implies the most robust modulation order-and-code rate combination that is tolerable in a system, and thus MCS index 0 may be configured identically). For example, a new MCS table may be configured by removing three modulation order-and-code rate combinations among MCS indexes corresponding to the modulation order 4 of [Table 13], and two modulation order-and-code rate combinations among MCS indexes corresponding to the modulation order 6, sequentially rearranging MCS indexes, and then combining an MCS index corresponding to 1024QAM in [Table 31] above. As a more specific example, [Table 32] shows an example of a case of removing, from [Table 13], the modulation order-and-code rate combinations (three combinations) of MCS indexes 5, 7, and 9 among MCS indexes corresponding to the modulation order 4, removing the modulation order-and-code rate combinations (two combinations) of MCS indexes 12 and 14 among MCS indexes corresponding to the modulation order 6, and then combining with [Table 31].

[Table 32]

| MCS Index I_MCS | Modulation Order Qm | Target code Rate [R x 1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 434 | 1.6953 |
| 6 | 4 | 553 | 2.1602 |
| 7 | 4 | 658 | 2.5703 |
| 8 | 6 | 466 | 2.7305 |
| 9 | 6 | 567 | 3.3223 |
| 10 | 6 | 666 | 3.9023 |
| 11 | 6 | 719 | 4.2129 |
| 12 | 6 | 772 | 4.5234 |
| 13 | 6 | 822 | 4.8164 |
| 14 | 6 | 873 | 5.1152 |
| 15 | 8 | 682.5 | 5.3320 |
| 16 | 8 | 711 | 5.5547 |
| 17 | 8 | 754 | 5.8906 |
| 18 | 8 | 797 | 6.2266 |
| 19 | 8 | 841 | 6.5703 |
| 20 | 8 | 885 | 6.9141 |

(continued)

| MCS Index $I_{MCS}$ | Modulation Order Qm | Target code Rate [R x 1024] | Spectral efficiency |
|---|---|---|---|
| 21 | 8 | 916.5 | 7.1602 |
| 22 | 8 | 948 | 7.4063 |
| 23 | 10 | 805.5 | 7.8662 |
| 24 | 10 | 853 | 8.3321 |
| 25 | 10 | 900.5 | 8.7939 |
| 26 | 10 | 948 | 9.2578 |
| 27 | 2 | reserved | |
| 28 | 4 | reserved | |
| 29 | 6 | reserved | |
| 30 | 8 | reserved | |
| 31 | 10 | reserved | |

As another example, [Table 33] shows an example of a case of removing, from [Table 13], the modulation order-and-code rate combinations of MCS indexes 5, 7, and 9 among MCS indexes corresponding to the modulation order 4, MCS index 11 among MCS indexes corresponding to the modulation order 6, and MCS index 20 among MCS indexes corresponding to the modulation order 8, and then combining with [Table 31].

[Table 33]

| MCS Index $I_{MCS}$ | Modulation Order Qm | Target code Rate [R x 1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 434 | 1.6953 |
| 6 | 4 | 553 | 2.1602 |
| 7 | 4 | 658 | 2.5703 |
| 8 | 6 | 517 | 3.0293 |
| 9 | 6 | 567 | 3.3223 |
| 10 | 6 | 616 | 3.6094 |
| 11 | 6 | 666 | 3.9023 |
| 12 | 6 | 719 | 4.2129 |
| 13 | 6 | 772 | 4.5234 |
| 14 | 6 | 822 | 4.8164 |
| 15 | 6 | 873 | 5.1152 |
| 16 | 8 | 711 | 5.5547 |
| 17 | 8 | 754 | 5.8906 |
| 18 | 8 | 797 | 6.2266 |
| 19 | 8 | 841 | 6.5703 |

(continued)

| MCS Index $I_{MCS}$ | Modulation Order Qm | Target code Rate [R x 1024] | Spectral efficiency |
|---|---|---|---|
| 20 | 8 | 885 | 6.9141 |
| 21 | 8 | 916.5 | 7.1602 |
| 22 | 8 | 948 | 7.4063 |
| 23 | 10 | 805.5 | 7.8662 |
| 24 | 10 | 853 | 8.3321 |
| 25 | 10 | 900.5 | 8.7939 |
| 26 | 10 | 948 | 9.2578 |
| 27 | 2 | reserved | |
| 28 | 4 | reserved | |
| 29 | 6 | reserved | |
| 30 | 8 | reserved | |
| 31 | 10 | reserved | |

As another example, [Table 34] shows an example of a case of removing, from [Table 13], the modulation order-and-code rate combinations of MCS index 4 among MCS indexes corresponding to the modulation order 2, MCS indexes 7 and 9 among MCS indexes corresponding to the modulation order 4, and MCS indexes 12 and 14 among MCS indexes corresponding to the modulation order 6, and then combining with [Table 31].

[Table 34]

| MCS Index $I_{MCS}$ | Modulation Order Qm | Target code Rate [R x 1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 4 | 378 | 1.4766 |
| 5 | 4 | 434 | 1.6953 |
| 6 | 4 | 553 | 2.1602 |
| 7 | 4 | 658 | 2.5703 |
| 8 | 6 | 466 | 2.7305 |
| 9 | 6 | 567 | 3.3223 |
| 10 | 6 | 666 | 3.9023 |
| 11 | 6 | 719 | 4.2129 |
| 12 | 6 | 772 | 4.5234 |
| 13 | 6 | 822 | 4.8164 |
| 14 | 6 | 873 | 5.1152 |
| 15 | 8 | 682.5 | 5.3320 |
| 16 | 8 | 711 | 5.5547 |
| 17 | 8 | 754 | 5.8906 |
| 18 | 8 | 797 | 6.2266 |

(continued)

| MCS Index I$_{MCS}$ | Modulation Order Qm | Target code Rate [R x 1024] | Spectral efficiency |
|---|---|---|---|
| 19 | 8 | 841 | 6.5703 |
| 20 | 8 | 885 | 6.9141 |
| 21 | 8 | 916.5 | 7.1602 |
| 22 | 8 | 948 | 7.4063 |
| 23 | 10 | 805.5 | 7.8662 |
| 24 | 10 | 853 | 8.3321 |
| 25 | 10 | 900.5 | 8.7939 |
| 26 | 10 | 948 | 9.2578 |
| 27 | 2 | reserved | |
| 28 | 4 | reserved | |
| 29 | 6 | reserved | |
| 30 | 8 | reserved | |
| 31 | 10 | reserved | |

In a method for configuring a new MCS table, based on the MCS table of [Table 13] as described above, if a reserved field corresponding to 1024QAM is added when D number of modulation order-and-code rate combinations corresponding to 1024QAM are added, removal of (D+1) number of combinations among the MCS combinations of [Table 13] is required. [Table 32] to [Table 34] are an example of a case of D=4. For reference, indexes for reserved indication are commonly used for retransmission, and thus, it is preferred that an MCS index corresponding to each modulation order is included in an MCS table. However, in some cases, a reserved field corresponding to a particular modulation order may be omitted. In addition, [Table 31] to [Table 34] above merely correspond to an example, and modulation-and-code rate combinations corresponding to some MCS levels in each MCS table may be removed or changed. In addition, modulation-and-code rate combinations of MCS tables may be properly combined to determine (or generate) a new MCS table.

For example, in case that an MCS table is configured to maximally include a modulation order-and-code rate combination and a spectral efficiency corresponding thereto included in a CQI table, an MCS table different from the MCS tables of [Table 31] to [Table 34] above may be defined. The meaning of maximally including a modulation order-and-code rate combination and a spectral efficiency corresponding thereto included in a CQI table may be that the modulation order-and-code rate combinations remaining after excluding a predetermined number (e.g., within one to three) of combinations from the modulation order-and-code rate combinations included in the CQI table are all included in an MCS table.

As a specific example, when an MCS table is configured to maximally include a combination of the modulation order 4 among the modulation-and-code rate combinations included in the CQI table of [Table 32], all or at least one of (4, 378, 1.4766) and (4, 616, 2.4063) that are (modulation order, [code rate (R) x 1024], spectral efficiency) are required to be included in an MCS table. As an example of such an MCS table, the modulation order-and-code rate combinations remaining after excluding modulation order-and-code rate combinations corresponding to MCS indexes 6, 8, and 10 among the MCS indexes corresponding to the modulation order 4 from [Table 13] may be included in an MCS table. In other words, an MCS table may be defined as (modulation order, [code rate(R) x 1024], spectral efficiency) of (4, 378, 1.4766) for MCS index 5, (modulation order, [code rate(R) x 1024], spectral efficiency) of (4, 490, 1.9141) for MCS index 6, and (modulation order, [code rate(R) x 1024], spectral efficiency) of (4, 616, 2.4063) for MCS index 7 from [Table 32] and [Table 33]. This merely corresponds to an example, and an MCS table including at least one or maximum two of (4, 434, 1.6953), (4, 490, 1.9141), (4, 553, 2.1602), or (4, 658, 2.5703) while necessarily including all or at least one of (4, 378, 1.4766) and (4, 616, 2.4063) that are (modulation order, [code rate(R) x 1024], spectral efficiency) may be defined. Therefore, as an MCS table supporting 1024QAM according to the disclosure, various MCS tables supporting 1024QAM, which include an MCS table supporting 1024QAM such as [Table 35] and [Table 36] below, may be used.

[Table 35] shows an example of an MCS table obtained by replacing information indicated by an MCS index corresponding to the modulation order 4 in [Table 32] in the scheme described above. [Table 36] shows an example of an MCS table obtained by replacing information indicated by an MCS index corresponding to the modulation order 4 in [Table 33] in the scheme described above.

[Table 35]

| MCS Index $I_{MCS}$ | Modulation Order Qm | Target code Rate [R x 1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 490 | 1.9141 |
| 7 | 4 | 616 | 2.4063 |
| 8 | 6 | 466 | 2.7305 |
| 9 | 6 | 567 | 3.3223 |
| 10 | 6 | 666 | 3.9023 |
| 11 | 6 | 719 | 4.2129 |
| 12 | 6 | 772 | 4.5234 |
| 13 | 6 | 822 | 4.8164 |
| 14 | 6 | 873 | 5.1152 |
| 15 | 8 | 682.5 | 5.3320 |
| 16 | 8 | 711 | 5.5547 |
| 17 | 8 | 754 | 5.8906 |
| 18 | 8 | 797 | 6.2266 |
| 19 | 8 | 841 | 6.5703 |
| 20 | 8 | 885 | 6.9141 |
| 21 | 8 | 916.5 | 7.1602 |
| 22 | 8 | 948 | 7.4063 |
| 23 | 10 | 805.5 | 7.8662 |
| 24 | 10 | 853 | 8.3321 |
| 25 | 10 | 900.5 | 8.7939 |
| 26 | 10 | 948 | 9.2578 |
| 27 | 2 | reserved | |
| 28 | 4 | reserved | |
| 29 | 6 | reserved | |
| 30 | 8 | reserved | |
| 31 | 10 | reserved | |

[Table 36]

| MCS Index $I_{MCS}$ | Modulation Order Qm | Target code Rate [R x 1024] | Spectral efficiency |
|---|---|---|---|
| 0 | 2 | 120 | 0.2344 |

(continued)

| MCS Index $I_{MCS}$ | Modulation Order Qm | Target code Rate [R x 1024] | Spectral efficiency |
|---|---|---|---|
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 490 | 1.9141 |
| 7 | 4 | 616 | 2.4063 |
| 8 | 6 | 517 | 3.0293 |
| 9 | 6 | 567 | 3.3223 |
| 10 | 6 | 616 | 3.6094 |
| 11 | 6 | 666 | 3.9023 |
| 12 | 6 | 719 | 4.2129 |
| 13 | 6 | 772 | 4.5234 |
| 14 | 6 | 822 | 4.8164 |
| 15 | 6 | 873 | 5.1152 |
| 16 | 8 | 711 | 5.5547 |
| 17 | 8 | 754 | 5.8906 |
| 18 | 8 | 797 | 6.2266 |
| 19 | 8 | 841 | 6.5703 |
| 20 | 8 | 885 | 6.9141 |
| 21 | 8 | 916.5 | 7.1602 |
| 22 | 8 | 948 | 7.4063 |
| 23 | 10 | 805.5 | 7.8662 |
| 24 | 10 | 853 | 8.3321 |
| 25 | 10 | 900.5 | 8.7939 |
| 26 | 10 | 948 | 9.2578 |
| 27 | 2 | reserved | |
| 28 | 4 | reserved | |
| 29 | 6 | reserved | |
| 30 | 8 | reserved | |
| 31 | 10 | reserved | |

With reference to [Table 35] and [Table 36], an example in which information indicated by an MCS index corresponding to the modulation order 4 in [Table 32] and [Table 33] is replaced has been described, but embodiments of the disclosure are not limited thereto. In [Table 32] and [Table 33], rows corresponding to MCS indexes corresponding to a modulation order other than the modulation order 4 may be replaced. For example, one or more modulation order-and-code rate combinations in one of CQI or MCS tables of [Table 9] to [Table 16] substitute for some of the modulation order-and-code rate combinations corresponding to the same modulation order in [Table 32] to [Table 36], whereby new MCS tables may be defined. Similarly, with respect to indexes 5, 6, and 7 even in a case of [Table 34], an MCS table having the feature wherein at least one of index 6 or index 7 is (modulation order, [code rate(R) x 1024], spectral efficiency) of (4, 616, 2.4063), and the remaining two indexes correspond to at least one two of (4, 434, 1.6953), (4, 490, 1.9141), (4, 553, 2.1602), or (4, 658, 2.5703) that is (modulation order, [code rate(R) x 1024], spectral efficiency) may be defined. Therefore, as an MCS table according to the disclosure, an MCS table obtained by changing, to have a different value, the set (modulation order, [code rate(R) x 1024], spectral efficiency) corresponding to one or more indexes of [Table 31] as described above may be used.

In addition, in case that an MCS table includes as many modulation order-and-code rate combinations having the modulation order 6 as possible in the CQI table of [Table 30], all or at least some of combinations corresponding to (modulation order, [code rate(R) x 1024], spectral efficiency) = (6, 567, 3.3223), (6, 666, 3.9023), (6, 772, 4.5234), and (6, 873, 5.1152) are included in the MCS table. On the contrary, at least some of combinations corresponding to (modulation order, [code rate(R) x 1024], spectral efficiency) = (6, 466, 2.7305), (6, 517, 3.0293), (6, 616, 3.6094), (6, 719, 4.2129), and (6, 822, 4.8164) are required to be excluded from the MCS table.

As a specific example, in consideration of the gap between spectral efficiencies, (6, 466, 2.7305) in [Table 35] and (6, 517, 3.0293) in [Table 36] are selected as a modulation order-code rate combination between (4, 616, 2.4063) and (6, 567, 3.3223) as (modulation order, [code rate(R) x 1024], spectral efficiency). In [Table 35], (6, 517, 3.0293) and (6, 616, 3.6094) are excluded, and (6, 719, 4.2129) and (6, 822, 4.8164) are included. [Table 35] is an MCS table having a maximum modulation order of 1024QAM, and thus may be suitable for a system supporting a relatively high spectral efficiency. In a system requiring a higher spectral efficiency, (6, 517, 3.0293) may be selected for MCS index 8 instead of (6, 466, 2.7305). In a system in which robustness is more important than spectral efficiency, both or at least one of (6, 719, 4.2129) and (6, 822, 4.8164) are excluded and replaced with both or at least one of (6, 517, 3.0293) and (6, 616, 3.6094) (Here, MCS indexes are properly arranged in the sequence of spectral efficiencies). Modulation order-and-code rate combinations as described above may be similarly changed even in a case of [Table 30-1].

For reference, in [Table 13] and [Table 31] to [Table 36], the pairs (modulation order, [code rate(R) x 1024], spectral efficiency) corresponding to indexes 1, 2, and 3 is the same as (2, 193, 0.3770), (2, 308, 0.6016), and (2, 449, 0.8770). However, the spectral efficiency 0.6016 deviates from the approximation 0.6082 to 0.6458 within -3% to +3% of the average value 0.6270 between 0.3770 and 0.8770 which are spectral efficiencies corresponding to index 1 and index 3. That is, the modulation order-and-code rate combination of index 2 may be considered as a combination which does not exist in the CQI table of [Table 10] or [Table 30] and is not based on the average value between two particular modulation order-and-code rate combinations, or the approximation thereof. However, the combination (2, 308, 0.6016) may be identified as a combination included in a CQI table, the maximum modulation order of which is different from that of [Table 9] and [Table 11], that is, is not 8. In a case of defining an MCS table, it is commonly preferred that spectral efficiencies are as equivalent as possible. However, as described in the above case, an MCS table may include, as many as possible, modulation order-and-code rate combinations included in a CQI table corresponding to the maximum order value among the modulation orders included in the MCS table. In some cases, the MCS table may include at least one of modulation order-and-code rate combinations included in a CQI table corresponding to a maximum modulation order different from the maximum order value.

For reference, the spectral efficiency for index 2 may be configured to the average value 0.6270 or the approximation thereof. If 0.6270 is configured, the pair (modulation order, [code rate(R) x 1024], spectral efficiency) may be determined as (2, 321, 0.6270).

In addition, spectral efficiency values included in [Table 31] to [Table 36] may be replaced with the approximations thereof. In a specific example, ([code rate(R) x 1024], spectral efficiency) for index 23 in [Table 31] to [Table 36] may be replaced with (805, 7.8613), (806, 7.8711), or (806.5, 7.8760). In the same way, ([code rate(R) x 1024], spectral efficiency) for index 25 in [Table 31] to [Table 36] may be replaced with (900, 8.7891) or (901, 8.7988). In addition, the spectral efficiencies 7.8662, 8.3321, 8.7939, and 9.2578 corresponding to MCS indexes 23, 24, 25, and 26 in [Table 31] to [Table 36] may be replaced with approximations within - 3% to + 3%. When the spectral efficiencies are SE(23), SE(24), SE(25), and SE(26), [code rate(R) x 1024] may be generally configured to one of the value

$$\lfloor SE(i)/10 \times 1024 \rfloor \ , \quad \lceil SE(i)/10 \times 1024 \rceil \ , \quad \lfloor SE(i)/10 \times 1024 \rfloor \pm 0.5 \quad , \quad \text{or}$$

$$\lceil SE(i)/10 \times 1024 \rceil \pm 0.5$$

for i = 23, 24, 25, and 26 (Here, $\lfloor \cdot \rfloor$ indicates a flooring calculation, and $\lceil \cdot \rceil$ indicates a ceiling calculation).

The MCS tables in [Table 25] to [Table 36] designed above merely correspond to an example. In some cases, a table may be configured by other modulation-and-code rate combinations having a value close to each code rate or spectral efficiency within 10-20%.

[Embodiment 9]

This embodiment describes a method for using an existing MCS table without change, and determining a modulation-and-code rate combination according to an MCS index, based on a pre-promised rule. In general, in case that a newly designed MCS table is applied to a system as in embodiment 6 and embodiment 7, corresponding MCS tables may be indicated using a parameter corresponding to the MCS tables through higher layer signaling. In addition, it is also possible to indirectly indicating the tables by directly indicating a target BLER or a parameter corresponding thereto through RRC.

For example, in case that a particular MCS table is indicated through higher layer signaling and a target BLER or a user category is indicated separately, a proper MCS index may be determined based on a rule pre-determined in the MCS table, by using the MCS table, the BLER, or the user category indicated according to the indicators. When a base station indicates a target BLER or a user category, and an MCS table to a terminal, the terminal may determine an MCS index according to the target BLER, that is, determine a modulation scheme and a code rate, or a spectral efficiency.

First, a code rate* 1024 and a spectral efficiency according to each index J in an MCS table are called $R(J)$ and $SE(J)$, a modulation order is called $Q(J)$, and a target BLER is called $10^{-P}$. A method for determining the proper value $F(Q(J), P)$, based on the target BLER and the modulation order, determining a final code rate in a scheme of subtracting or adding the determined proper value $F(Q(J), P)$ from or to the code rate $R(J)$ will be described. In other words, in case that a target BLER is indicated through higher layer signaling and a CQI table to be used is indicated, in general the actual code rate $R_{eff}(J)* 1024$ may be calculated using a method as [Equation 1] described above (In the disclosure, for convenience, a value obtained by multiplying a code rate by 1024 is used, but the code rate may be used without change).

In [Equation 1] above, $F(Q(J), P)$ may be a function complexly determined for the modulation order $Q(J)$ and P corresponding to a target BLER. In addition, $F(Q(J), P)$ may be separated into mutually independent functions including $F_1(Q(J))$ meaning a value determined based on a modulation order and $F_2(P)$ meaning a value determined according to a target BLER as shown in $F(Q(J), P) = F_1(Q(J)) + F_2(P)$. Moreover, in some cases, $F_1(Q(J)) = 0$ is configured, so that $R_{eff}(J)$ may be configured to a value unaffected by a modulation order. For example, in case that $F_1(Q(J)) = 0$ and $F_2(P) = (P - 1)*c$ are configured, it is noted according to [Equation 1] above that, if a target BLER is $10^{-2}$, $R_{eff}(J) = R(J) - c$, if a target BLER = $10^{-3}$, $R_{eff}(J) = R(J) - 2*c$, if a target BLER = $10^{-4}$, $R_{eff}(J) = R(J) - 3*c$, and if a target BLER = $10^{-5}$, $R_{eff}(J) = R(J) - 4*c$. In [Equation 1] above, as the constant c, a proper value may be selected according to a system. For example, the constant c may be configured to a value (e.g., a value, such as 22.5, between 22 and 23) obtained by approximately equivalently dividing the difference 90 between 120 and 30 for index 1 with reference to [Table 12] and [Table 14], or may be configured by considering the average of differences between modulation-and-code rate combinations.

[Equation 1] shows subtracting or adding particular values from or to an existing code rate according to a pre-determined rule. However, in general, a method using particular ratio values by multiplying or dividing an existing code rate by a proper value according to a pre-determined rule may also be used.

[Embodiment 10]

In embodiment 6 to embodiment 9, a method for designing or determining an MCS table has been discussed. MCS tables designed by the above method may be stored in a base station or a terminal and be used for MCS index determination.

A modulation scheme supported in a current 5G NR system includes QPSK, 16QAM, 64QAM, and 256QAM. In addition, different CQI tables and different MCS tables may be used according to the order of a maximum modulation scheme supported by a terminal. A terminal applies different CQI tables according to a maximum modulation order and a target BLER required in a system to determine or indicate a proper CQI index and transmit the same value to a base station. Accordingly, the base station may configure or indicate an MCS index, that is, a combination of a modulation scheme and a target code rate, based on a proper MCS table, based on the corresponding CQI index or a CQI value corresponding thereto. An MCS index may be determined based on an MCS table designed for a target BLER of 0.001, such as newly designed [Table 25] to [Table 29], as well as [Table 12] to [Table 16].

As an example of a specific method, in a 5G NR system, an MCS index for a PDSCH, that is, the modulation order (or scheme) Qm and the target code rate R are determined through the following process.

- With respect to a PDSCH scheduled through a PDCCH including DCI format 1_0 or format 1_1 with a CRC scrambled by a C-RNTI, an MCS-C-RNTI, a TC-RNTI, a CS-RNTI, an SI-RNTI, an RA-RNTI, or a P-RNTI, or a PDSCH scheduled using the PDSCH configuration SPS-Config provided from a higher layer without transmission of a corresponding PDCCH,

(a) In case that the higher layer parameter mcs-Table given by PDSCH-Config is set to "qam256"and a PDSCH is scheduled by a PDCCH having DCI format 1_1 with a CRC scrambled by a C-RNTI, a UE uses a value of MCS index $I_{MCS}$ in [Table 13] to determine the modulation order Qm and the target code rate R.

(b) In case that the condition of (a) is not established, a UE is not configured with an MCS-C-RNTI, the higher layer parameter mcs-Table given by PDSCH-Config is set to "qam64LowSE", and a PDSCH is scheduled by a PDCCH in a UE-specific search space with a CRC scrambled by a C-RNTI, the UE uses a value of MCS index $I_{MCS}$ in [Table 14] to determine the modulation order Qm and the target code rate R.

(c) In case that the conditions of (a) and (b) are not established, s UE is configured with an MCS-C-RNTI, and a PDSCH is scheduled by a PDCCH to which a CRC scrambled by an MCS-C-RNTI is applied, the UE uses a value of MCS index $I_{MCS}$ in [Table 14] to determine the modulation order Qm and the target code rate R.

(d) In case that the conditions of (a), (b), and (c) are not established, a UE is not configured by the higher layer parameter mcs-Table given by SPC-Config, and the higher layer parameter mcs-Table given by PDSCH-Config is set to "qam256",

(d-1) when a PDSCH is scheduled by a PDCCH having DCI format 1_1 to which a CRC scrambled by a CS-RNTI is applied, or
(d-2) when a PDSCH is scheduled without transmission of a corresponding SPDCCH using SPS-Config, the UE uses a value of MCS index $I_{MCS}$ in [Table 13] to determine the modulation order Qm and the target code rate R.

(e) In case that the conditions of (a), (b), (c), and (d) are not established, and a UE is configured with the higher layer parameter mcs-Table that is given by SPS-Config and is set to "qam64LowSE",

(e-1) when a PDSCH is scheduled by a PDCCH to which a CRC scrambled by a CS-RNTI is applied, or
(e-2) when a PDSCH is scheduled without transmission of a corresponding PDSSH using SPS-Config, the UE uses a value of MCS index $I_{MCS}$ in [Table 14] to determine the modulation order Qm and the target code rate R.

(f) In case that the conditions of (a), (b), (c), (d), and (e) are not established, the UE uses a value of MCS index $I_{MCS}$ in [Table 12] to determine the modulation order Qm and the target code rate R.

The description for determination of the MCS index for the PDSCH, that is, the modulation order (or scheme) Qm and the target code rate R corresponds to a description for the following standard protocol.

For the PDSCH scheduled by a PDCCH with DCI format 1_0 or format 1_1 with CRC scrambled by C-RNTI, MCS-C-RNTI, TC-RNTI, CS-RNTI, SI-RNTT, RA-RNTI, or P-RNTT, or for the PDSCH scheduled without corresponding PDCCH transmissions using the higher-layer-provided PDSCH configuration *SPS-Config,*

(a) if the higher layer parameter *mcs-Table* given by *PDSCH-Config* is set to 'qam256', and the PDSCH is scheduled by a PDCCH with DCI format 1_1 with CRC scrambled by C-RNTI

- the UE shall use $I_{MCS}$ and Table 5 to determine the modulation order ($Q_m$) and Target code rate (R) used in the physical downlink shared channel.

(b) elseif the UE is not configured with MCS-C-RNTI, the higher layer parameter *mcs-Table* given by *PDSCH-Config* is set to 'qam64LowSE'. and the PDSCH is scheduled by a PDCCH in a UE-specific search space with CRC scrambled by C-RNTI

- the UE shall use $I_{MCS}$ and Table 6 to determine the modulation order ($Q_m$) and Target code rate (R) used in the physical downlink shared channel.

(c) elseif the UE is configured with MCS-C-RNTI, and the PDSCH is scheduled by a PDCCH with CRC scrambled by MCS-C-RNTI

- the UE shall use $I_{MCS}$ and Table 6 to determine the modulation order ($Q_m$) and Target code rate (R) used in the physical downlink shared channel.

(d) elseif the UE is not configured with the higher layer parameter *mcs-Table* given by *SPS-Config,* the higher layer parameter *mcs-Table* given by *PDSCH-Config* is set to 'qam256',

- if the PDSCH is scheduled by a PDCCH with DCI format 1_1 with CRC scrambled by CS-RNTI or
- if the PDSCH is scheduled without corresponding PDCCH transmission using *SPS-Config,*

(continued)

| |
|---|
| - the UE shall use $I_{MCS}$ and Table 5 to determine the modulation order ($Q_{m,}$) and Target code rate ($R$) used in the physical downlink shared channel. |
| (e) elseif the UE is configured with the higher layer parameter *mcs-Table* given by *SPS-Config* set to 'qam64LowSE' |
|     - if the PDSCH is scheduled by a PDCCH with CRC scrambled by CS-RNTI or |
|     - if the PDSCH is scheduled without corresponding PDCCH transmission using *SPS-Config,* |
|     - the UE shall use $I_{MCS}$ and Table 6 to determine the modulation order ($Q_m$) and Target code rate ($R$) used in the physical downlink shared channel. |
| (f) else |
|     - the UE shall use $I_{MCS}$ and Table 4 to determine the modulation order ($Q_m$) and Target code rate ($R$) used in the physical downlink shared channel. |
| end |

If [Table 25] to [Table 36] are used for a particular service scenario, a particular condition may be added and used between the conditions (a), (b), (c), (d), (e), and (f) or before/after them. For example, according to a configuration value of mcs-Table of the higher layer signaling PDSCH-Config or mcs-Table of SPS-Config, or whether a PDCSH is scheduled based on a PDCCH to which a CRC scrambled by a particular RNTI (e.g., C-RNTI, MCS-C-RNTI, TC-RNTI, CS-RNTI, SI-RNTI, RA-RNTI, or P-RNTI) is applied, a condition may be added or subdivided to allow use of an MCS table, such as at least one of [Table 25] to [Table 36]. The parameter mcs-Table value may be set to a value other than "qam256" or "qam64LowSE". For example, in case that a parameter with a different name, such as "qam64MidSE", is configured, at least one of the MCS tables of [Table 25] to [Table 27], which have a target BLER lower than 0.1 and higher than 0.00001 (e.g., the target BLER is close to 0.001) and are defined to have a maximum modulation scheme of 64QAM, may be configured to be used. In general, when more target BLERs and a wider variety of service scenarios are considered, more MCS tables may be used additionally. In addition, in case that 256QAM is defined as a maximum modulation scheme, a parameter with a different name, such as "qam256MidSE", is configured, and the MCS tables of [Table 28] or [Table 29] may be configured to be used. Similarly, in case that 1024QAM is defined as a maximum modulation scheme, a parameter with a different name, such as "qam1024" or "qam1024MidSE", is configured according to a target BLER, and at least one of the MCS tables of [Table 31] or [Table 36] may be configured to be used.

An example of another specific method relates to, in a 5G NR system, a PUSCH scheduled by an RAR UL grant, a PUSCH scheduled by a PUSCH scheduled by DCI format 0_0 scrambled by CRC-scrambled by a C-RNTI, an MCS-C-RNTI, a TC-RNTI, or a CS-RNTI, a PUSCH scheduled by DCI format 0_1 scrambled by CRC-scrambled by a C-RNTI, an MCS-C-RNTI, a CS-RNTI, or an SP-CSI-RNTI, or a PUSCH having a grant configured using a CS-RNTI (a PUSCH with configured grant using CS-RNTI).

- A type in which a PUSCH is scheduled
- Whether "transform precoding" is deactivated or activated (disabled or not)
- A set value (e.g., "qam256" or "qam64LowSE")of the parameter mcs-Table or mcs-TableTransformPrecoder of the higher layer signaling pusch-Config
- A set value (e.g., or "qam64LowSE")of the parameter mcs-Table or mcs-TableTransformPrecoder of the higher layer signaling configuredGrantConfig
- Whether scheduling is based on a PDCCH to which a CRC scrambled by a particular RNTI is applied

According to the conditions described above, an MCS index for a PUSCH, that is, the modulation order (or scheme) Qm and the target code rate R are determined. The conditions may be added or subdivided according to a service to allow additional use of MCS tables, such as [Table 25] to [Table 36]. In this case, the value of the parameter mcs-Table may be set to a value other than "qam256" or "qam64LowSE". For example, in case that a parameter with a different name, such as "qam64MidSE", is configured, at least one of the MCS tables of [Table 25] to [Table 27], which have a target BLER lower than 0.1 and higher than 0.00001 (e.g., the target BLER is close to 0.001) and are defined to have a maximum modulation scheme of 64QAM, may be configured to be used. In general, when more target BLERs and a wider variety of service scenarios are considered, a wider variety of MCS tables may be used additionally. In addition, in case that 256QAM is defined as a maximum modulation scheme, a parameter with a different name, such as "qam256MidSE", is configured, and the MCS tables of [Table 28] or [Table 29] may be configured to be used. Similarly, in case that 1024QAM is defined as a maximum modulation scheme, a parameter with a different name, such as "qam1024" or "qam1024MidSE", is configured according to a target BLER, and at least one of the MCS tables of [Table 31] or [Table 36] may be configured to be used.

An optimized CQI table or MCS table may be differently configured according to a target BLER of a system. However, as in embodiments of the disclosure, many modulation scheme (or order)-and-code rate combinations are commonly shared and used. When a configuration of using at least one of a first CQI table or a first MCS table to determine a CQI or MCS is a first table configuration, and a configuration of using at least one of a second CQI table or a second MCS table is a second table configuration, an operation of a base station or a terminal and a feature between respective table configurations may be described as follows.

- A terminal capable of performing a first table configuration for wireless communication with one base station (or radio node) of a cellular network (UE being operable to apply a first table configuration in a ratio communication with a radio node of a cellular network) may receive an instruction to apply or perform a second table configuration from the base station. The first table configuration may include at least one of a first MCS table or a first CQI table, and imply a table configuration supporting a minimum spectral efficiency. In addition, the second table configuration may include at least one of a second MCS table or a second CQI table. The terminal may apply the second table configuration for wireless communication with the base station (or radio node), based on the instruction. The terminal may transmit control information (e.g., CQI information) or data to the base station, based on the second table configuration.
- The second MCS table or the second CQI table for the second table configuration supports a spectral efficiency lower than a minimum spectral efficiency of a first MCS table configuration.
- In case that the second table configuration is applied and it is preferable to use at least one of modulation order-and-code rate combinations for spectral efficiency included in at least one of the first MCS table or the first CQI table (as fall back), the at least one of combinations may be maintained in at least one of the second MCS table or the second CQI table.
- "Modulation order-and-code rate combinations for spectral efficiency included in at least one of the first MCS table or the first CQI table" which are maintained in at least one of the second MCS table or the second CQI table may include a modulation order-and-code rate combination for the lowest spectral efficiency in the first table configuration.
- A target BLER of a system applying the first table configuration may be higher than that of a system applying the second table configuration (Approximately, more than $10^P$ times, P = 1, 2, ..., 5).
- The terminal may transmit, to the base station, a proper CQI index, based on a CQI table determined according to a table configuration, or determine a modulation scheme and a code rate, based on a determined MCS table, determine a TBS for data transmission, encode the data, and transmit encoded bits to the base station. Alternatively, the terminal may determine a modulation scheme and a code rate, based on a determined MCS table, determine a TBS for data corresponding to encoded bits transmitted from the base station, and decode the received encoded bits to reconstruct the data.

The operation may be described in view of a base station as follows.

- A base station capable of performing a first table configuration to perform wireless communication with a terminal of a cellular network may transmit an instruction to apply or perform a second table configuration to the terminal. The first table configuration may include at least one of a first MCS table or a first CQI table, and imply a table configuration supporting a minimum spectral efficiency. In addition, the second table configuration may include at least one of a second MCS table or a second CQI table.

- The base station receives control information (e.g., CQI information) or data transmitted from the terminal, based on the second table configuration.

- The base station may determine a proper MCS, based on a CQI index transmitted from the terminal, based on a CQI table determined according to a table configuration, or determine a TBS of data corresponding to encoded bits received from the terminal, based on a modulation scheme and a code rate determined based on a determined MCS table, and properly decode the received encoded bits to reconstruct the data. In addition, the base station may determine a modulation scheme and a code rate, based on a determined MCS table, then determine a TBS for data transmission, then encode the data, and transmit encoded bits to the terminal.

- A feature related to the first table configuration and the second table configuration is the same as described above, and thus will be omitted in the following description.

A TBS may be determined based on a code rate indicated by an index included in an MCS table. In 5G NR, a TBS may be determined by the number of allocated REs, the number of used layers, a modulation order, and a code rate. A modulation order and a code rate among various factors determining a TBS may be determined through an MCS of signaling information. In some embodiments, a modulation order determined through an MCS may be used without change, and a code rate determined through an MCS may be used without change, or may be additionally adjusted according to RRC configuration information. In some embodiments, in case that only an MCS table for a service having a particular target BLER is defined and support of a service having the same maximum modulation order and a BLER different from the particular target BLER is configured through RRC signaling, a transceiver may determine a modulation order and a code rate from the defined MCS table, and use same through adjustment of only the code rate. As a method for adjusting a code rate, various methods may be applied other than a method of embodiment 9. For example, a method of subtracting or adding a predetermined constant from or to a code rate, or multiplying a particular ratio thereby may be used. The constant subtracted or added from or to a code rate or the particular ratio for multiplication may be the same for all CQI indexes, and may be changed according to a modulation order.

[Embodiment 11]

This embodiment proposes a TBS determination method of a case of applying 1024QAM in a wireless communication system.

First, with respect to a j-th serving cell, if the parameter processingType2Enabled of the higher layer signaling PDSCH-ServingCellConfig (PUSCH-ServingCellConfig in a case of a PUSCH) is configured to be "enabled", or an MCS table corresponding to 1024QAM, such as [Table 31] to [Table 36], and at least one MCS index $I_{MCS}$ is indicated for a PDSCH as a value greater than a predetermined value (e.g., 26) ($I_{MCS} > 27$ in case that a 256QAM MCS table is configured, and $I_{MCS} > 28$ in case that a 646QAM MCS table is configured), when a data rate, which may be determined based on the number of symbols allocated to a PDSCH (or PUSCH) and the size of scheduled codeblocks (or the size of TBs), is greater than a supported maximum (max) data rate determined based on a predetermined method, a UE may not process transmission/reception of the PDSCH (or transmission/reception of the PUSCH). For example, if a condition of [Equation 2] below is not satisfied, the UE does not need to handle corresponding PDSCH transmission/reception (or PUSCH transmission/reception):

[Equation 2]

$$\frac{\sum_{m=0}^{M-1} V_{j,m}}{L \times T_s^{\mu}} \leq DataRateCC$$

Here, L is the number of symbols allocated (assigned) to a corresponding PDSCH (or PUSCH), M denotes the

$$T_s^{\mu} = \frac{10^{-3}}{2^{\mu} \cdot N_{symb}^{slot}}$$

number of TB(s) in the PDSCH (or PUSCH), ( $\mu$ : the numerology of the PDSCH) is given, and

$$V_{j,m} = C' \cdot \lfloor \frac{A}{C} \rfloor$$

for the m-th TB is determined by the number A of bits included in the TB, the number C of codeblocks corresponding to the TB, and the number C'of codeblocks scheduled for the TB. In addition, DataRateCC [Mbps] is obtained by calculating an (approximated) maximum data rate for one carrier of a frequency band of a corresponding serving cell even with respect to a signaled band combination and feature set consistent with the serving cell, and the value thereof may be determined based on [Equation 3] below. However, [Equation 3] below merely corresponds to an example of the disclosure, and a maximum data rate according to the disclosure may be determined based on at least one parameter among the number of layers, a modulation order, a scaling factor, a subcarrier spacing, an overhead, the number of RBs in a bandwidth, and the length of OFDM symbols.

[Equation 3]

In an NR system, an (approximated) maximum data rate that a terminal supports for the number of given aggregation (or aggregated) carriers in a band or band combination may be determined through the following equation.

$$\text{data rate (in Mbps)} = 10^{-6} \cdot \sum_{j=1}^{J} \left( v_{Layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot (1 - OH^{(j)}) \right)$$

In [Equation 3], J may indicate the number of carriers (CCs) grouped through carrier aggregation, Rmax may be 948/1024, $v_{Layers}^{(j)}$ may be a maximum number of layers, $Q_m^{(j)}$ may be a maximum modulation order, $f^{(j)}$ may be a scaling factor, and $\mu$ may denote a subcarrier spacing. $f^{(j)}$ may be reported by a terminal as one of 1, 0.8, 0.75, and 0.4, and $\mu$ may be given by [Table 37] below. (j) is an index indicating the j-th component carrier (CC).

[Table 37]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

In addition, $T_s^{\mu}$ is an average OFDM symbol length, $T_s^{\mu}$ may be calculated by $\frac{10^{-3}}{14 \cdot 2^{\mu}}$, and $N_{PRB}^{BW(j),\mu}$ is a maximum number of RBs at BW(j). $OH^{(j)}$ is an overhead value, and may be given as 0.14 in a downlink of FR1 (a band below 6 GHz, also referred to as below 6GHz (B6G)) and 0.18 in an uplink of FR1, may be given as 0.08 in a downlink of FR2 (a band above 6 GHz, also referred to as above 6GHz (A6G)), and 0.10 in an uplink of FR2.

It is obvious that the overhead $OH^{(j)}$ values may be defined as a different value according to a service or a modulation order. For example, in a case where an MCS table supporting 1024QAM, such as [Table 31] to [Table 36], is configured in a wireless communication system, this case may imply a special situation in which a channel environment is very good. Therefore, the $OH^{(j)}$ value may also be differently configured. Smaller overhead values may be configured under the assumption of use in a very good channel environment. However, a 1024QAM modulation scheme is vulnerable to a peak-to-average power-ratio (PAPR) problem of an OFDM system or a phase error, and thus a value greater than the current reference may be configured.

In addition, when vehicle-to-Infra or vehicle-to-vehicle (V2X) service is supported, data transmission or reception through a physical sidelink shared channel (PSSCH) may have a symbol assignment method different from that for data transmission or reception through a PDSCH, and thus the $OH^{(j)}$ value may also be differently configured.

As a more specific example for V2X service, in a case of PSSCH data transmission or reception, at least the first symbol is assigned for an automatic gain control (AGC) and the last symbol is assigned as a gap symbol for gap measurement, and thus the number of maximum OFDM symbols for actual data transmission or reception may be twelve (or smaller). In this case, the $OH^{(j)}$ value may be equal to or greater than a particular value regardless of a configuration of a physical sidelink feedback channel (PSHCH), and for example, may be equal to or greater than 2/12. As a specific example, the $OH^{(j)}$ value may be configured to values which are greater than 2/12 and include a particular value as 0.21, regardless of FR1/B6G, FR2/A6G. Alternatively, same may be determined according to a ratio of slots in which a PSFCH resource is configured, or a period of a PSHCH resource in a resource pool configuration of a corresponding carrier. The higher the ratio at which a PSFCH resource is configured, the greater the $OH^{(j)}$ value. For example, when a value of a case where a PSFCH is configured in every slot is A, a value of a case where a PSFCH is configured in one slot per two slots is B, and a value of a case where a PSFCH is configured in one slot per four slots is C, a relation of A > B > C may be configured (e.g., A= 0.42, B = 0.32, C = 0.26). For reference, a ratio of slots in which a PSFCH resource is configured, or a period of a PSHCH resource may be determined based on the parameter sl-PSFCH-Period in a PSFCH-related configuration.

One or more sidelink resource pools may be configured for a terminal for transmission or reception of a PSSCH, and the $OH^{(j)}$ value may be also determined based on a parameter of a resource pool having the largest bandwidth according to a higher layer configuration among the resource pools.

[Equation 2] above means that, in case that a data rate, which may be determined based on the number of symbols allocated to a PDSCH (or PUSCH) and the size or TBS) of scheduled codeblocks, is configured to be greater than a maximum data rate, which may be calculated according to a predetermined method, there is a high possibility that data decoding fails due to too high coding rate, and thus a UE is possible to omit a part or the entirety of a data reconstruction process as omitting a demodulation process for a reception signal corresponding to data, or performing a demodulation process and omitting a data decoding process such as LDPC decoding. Meanwhile, Rmax = 948/1024 is configured in [Equation 3], but in 5G NR, a decodable coding rate may be different according to the basic graphs (or basic matrixes) BG(1) and BG(2) used for LDPC encoding and decoding. Therefore, a different value may be applied as Rmax = 948/1024 according to BG(1) and BG(2), based on a system (For example, an Rmax value for BG(1) may be configured to be higher than an Rmax value for BG(2)).

For reference, in 5G NR, a basic graph (or basic matrix) is determined according to a TBS length and a code rate as follows, and at the time of first transmission and retransmission, LDPC encoding and decoding is performed according to the determined basic graph.

[Method for selecting basic graph (or basic matrix)]

When a code rate indicated by an MCS is R,

- if TBS ≤ 292, TBS ≤ 3824 and R ≤ 0.67, or

  R ≤ 0.25, BG(2) (basic graph 2 or basic matrix 2) is used to perform LDCP encoding.

- otherwise, BG(1) (basic graph 1 or basic matrix 1) is used to perform LDCP encoding.

An (approximated) maximum data rate for the serving cell may be determined as a maximum value of an (approximated) maximum data rate calculated using [Equation 3] according to a supported band or band combination. In addition, with respect to a single carrier-based 5G NR (standalone) SA operation, a UE may support a data rate for a corresponding carrier not to be smaller than a data rate calculated through [Equation 3] above by configuring each parameter such that J is equal to 1 CC and $v_{Layers}^{(j)} \cdot Q_m^{(j)} \cdot f^{(j)}$ is not smaller than 4.

However, in case that a maximum modulation order supportable in a wireless communication system is 8 (that is, $Q_m^{(j)}=8$), if the scaling factor $f^{(j)}$ is configured to 0.4,

$$v_{Layers}^{(j)} \cdot Q_m^{(j)} \cdot f^{(j)} = v_{Layers}^{(j)} \times 3.2 \geq 4$$

the condition is satisfied only when $v_{Layers}^{(j)}$ is equal to or greater than 2. That is, a wireless communication system is not required to support transmission or reception of PDSCH or PUSCH data corresponding to a combination of $(v_{Layers}^{(j)}, f^{(j)})=(1, 0.4)$, or is not required to support transmission or reception of PDSCH or PUSCH data supporting a data rate determined based on the combination of $(v_{Layers}^{(j)}, f^{(j)})=(1, 0.4)$. However, in a system supporting 1024QAM, even in case that $f^{(j)}$ is configured to 0.4,

$$v_{Layers}^{(j)} \cdot Q_m^{(j)} \cdot f^{(j)} = v_{Layers}^{(j)} \times 10 \times 0.4 \geq 4$$

$v_{Layers}^{(j)} = 1$ is supportable from the above equation. Therefore, in case that a CQI or MCS table supporting 1024QAM, such as the CQI table of [Table 30] or the MCS tables of [Table 31] to [Table 36] according to the disclosure is configured, there is a case of supporting transmission or reception of PDSCH or PUSCH data supporting a combination of

$(v_{Layers}^{(j)}, f^{(j)}) = (1, 0.4)$ or a data rate equal to or greater than a (maximum) data rate determined based on the combination.

More specifically, with respect to at least single carrier-based 5G NR (standalone) SA operation in a wireless communication system supporting 1024QAM, a terminal/base station may transmit or receive PDSCH or PUSCH data corresponding to a combination of $(v_{Layers}^{(j)}, Q_m^{(j)}, f^{(j)}) = (1, 10, 0.4)$, or transmit or receive PDSCH or PUSCH data supporting a data rate greater than or equal to a data rate determined based on the combination of

$(v_{Layers}^{(j)}, Q_m^{(j)}, f^{(j)}) = (1, 10, 0.4)$.

As described above, a case of supporting 1024QAM in a wireless communication system (or a case where an MCS table supporting 1024QAM is configured) implies a special situation in which a channel environment is very good. Therefore, a condition for the $v_{Layers}^{(j)} \cdot Q_m^{(j)} \cdot f^{(j)}$ value may be differently configured. For example, in a system allowing the $Q_m^{(j)}$ value of 10, a reference value for the $v_{Layers}^{(j)} \cdot Q_m^{(j)} \cdot f^{(j)}$ value is configured to be greater than 4, or the $v_{Layers}^{(j)}$ or $f^{(j)}$ value may be limited. For example, configuration of a combination such as $(v_{Layers}^{(j)}, f^{(j)}) = (1, 0.4)$ may be restricted.

In a wireless communication system, as described above, a TB having a proper TBS in a range not exceeding a UE-specific supportable maximum data rate is transmitted, thereby increasing a decoding success probability, and consequently, unnecessary retransmission may be minimized.

In case that the higher layer parameter maxNrofCodeWordsScheduledByDCI indicates transmission of two codewords being "enabled", if one TB among two TBs is configured to be ($I_{MCS}$ = 26, $rv_{id}$ = 1) by DCI format 1_1, the TB is disabled. Except for the case where a TB is disabled by DCI format 1_1 as described above, a TBS may be determined for data transmission or reception through a PDSCH allocated by a PDCCH having DCI format 1_0, format 1_1, or format 1_2 corresponding to a CRC scrambled by a C-RNTI, an MCS-C-RNTI, a TC-RNTI, a CS-RNTI, or an SI-RNTI.

A TBS may be determined based on a total number $N_{RE}$ of REs allocated for a PDSCH or a PUSCH, Qm and R determined from MCS information of initial transmission, and the number v of used layers. Therefore, only for a case of having an $I_{MCS}$ value between 0 and 28 (both inclusive) when a CQI or MCS table corresponding to a maximum modulation order of 64QAM is configured, only for a case of having an $I_{MCS}$ value between 0 and 27 (both inclusive) when a CQI or MCS table corresponding to a maximum modulation order of 256QAM is configured, and only for a case of having an $I_{MCS}$ value between 0 and 26 (both inclusive) when a CQI or MCS table corresponding to a maximum modulation order of 1024QAM, such as [Table 31] to [Table 36], is configured, a TBS is determined based on Qm and R values corresponding to the MCS index.

First, a base station or a UE may determine the number $N'_{RE}$ of REs allocated for a PDSCH (or PUSCH) in one PRB by using $N'_{RE} = N_{SC}^{RB} \cdot N_{symb}^{sh} - N_{DMRS}^{PRB} - N_{oh}^{PRB}$. Here, $N_{SC}^{RB}$ is the number (e.g., 12) of subcarriers included in one RB, $N_{symb}^{sh}$ is the number of OFDM symbols allocated to a PDSCH (or PUSCH), $N_{DMRS}^{PRB}$ is the number of REs in one PRB, which are occupied by a demodulation reference signal (DMRS) of a code division multiplexing (CDM) group, and $N_{oh}^{PRB}$ denotes the number (e.g., this is configured to one of 0, 6, 12, and 18) of REs occupied by an overhead in one PRB configured by higher signaling (e.g., xOverhead in PDSCH-ServingCellConfig or xOverhead in PUSCH-ServingCellConfig). Thereafter, the total number $N_{RE}$ of REs allocated to the PDSCH (or PUSCH) may be determined as follows: $N_{RE}$=min(156,$N'_{REl}$) · $n_{PRB}$. Here, $n_{PRB}$ denotes the number of PRBs allocated to a terminal. A TBS value is determined based on the number $N_{info}$=$N_{RE}$ · $Q_m$ · $R$ · $v$ of temporary information bits.

In case that a CQI or MCS table corresponding to a maximum modulation order of 1024QAM, such as [Table 31] to [Table 36], is configured, if an $I_{MCS}$ value is configured between 27 and 31 (both inclusive), a TBS may be determined based on the DCI transported in the latest PDCCH for the same TB, the $I_{MCS}$ value of which is configured between 0 and 26 (both inclusive). If there is no PDCCH for the same TB configured to have a value between 0 and 26 (both inclusive), and an initial transmission PDSCH for the same TB is semi-persistently scheduled, a TBS is determined based on the most recent semi-persistent scheduling assignment PDCCH).

Similarly, in a case where an $I_{MCS}$ value is configured between 28 and 31 (both inclusive) when a CQI or MCS table corresponding to a maximum modulation order of 256QAM is configured, or in a case where an $I_{MCS}$ value is configured between 29 and 31 (both inclusive) when a CQI or MCS table corresponding to a maximum modulation order of 646QAM is configured, a TBS may be determined based on the DCI transported in the latest PDCCH for the same TB configured to have an $I_{MCS}$ value between 0 and 27 (both inclusive) or the same TB configured to have an $I_{MCS}$ value between 0 and 28 (both inclusive), in each case. If there is no PDCCH for the same TB configured to have a value between 0 and 27 (both inclusive) or a value between 0 and 28 (both inclusive) for each case, and an initial transmission PDSCH for the same TB is semi-persistently scheduled, a TBS is determined based on the most recent semi-persistent scheduling assignment PDCCH).

[Embodiment 12]

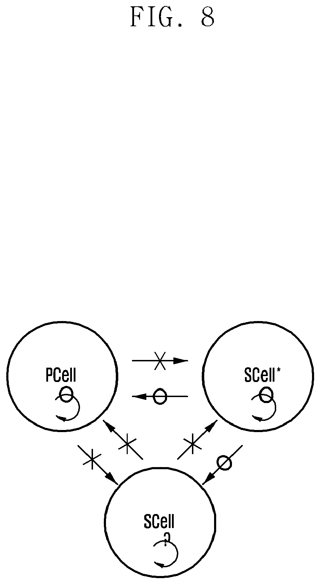

FIG. 8 is a diagram illustrating a scheduling method according to an embodiment of the disclosure.

Referring to FIG. 8, an example in which a base station performs cross-carrier scheduling of a PCell or a PSCell via one SCell (e.g., SCell* in FIG. 8) among multiple serving cells (SCells) configured for a terminal is illustrated. The terminal may monitor a PDCCH in a PCell and an SCell* according to a configuration. The base station is able to perform scheduling only for a PCell via the PCell, and is unable to perform scheduling a different SCell via same. On the contrary, the base station is able to perform scheduling for a PCell, an SCell*, and a different SCell via the SCell*. An operation of an SCell is required to be clearly defined.

According to an embodiment of the disclosure, a terminal may not monitor a PDCCH in an SCell configured to be subject to cross-carrier scheduling by a different SCell (e.g., SCell*).

In addition, according to an embodiment of the disclosure, the SCell* (an SCell configured to be able to perform cross-carrier scheduling of a PCell) in FIG. 8 may not be allowed to be deactivated or to enter into a dormant BWP. According to an embodiment, the terminal may not expect to receive a control signal (e.g., MAC CE, DCI) for deactivating the SCell*. According to an embodiment, the terminal may not expect to receive a control signal (e.g., MAC CE, DCI) for changing an active BWP of the SCell* into a dormant BWP. If the terminal receives a control signal for deactivating the SCell* or changing into a dormant BWP, the terminal may consider the control signal as an error, and discard same without processing.

In addition, according to an embodiment of the disclosure, the SCell* (an SCell configured to be able to perform cross-carrier scheduling of a PCell) in FIG. 8 may be allowed to be deactivated or to enter into a dormant BWP. According to an embodiment, in case that the SCell* is deactivated, the terminal may operate with an understanding that an SCell scheduled via the SCell* is also deactivated. Accordingly, the terminal may control (e.g., turn off, enter into sleep mode) power of a hardware resource (e.g., RF, baseband) in the terminal, which is associated with the SCell. According to an embodiment, in case that the SCell* is entered into a dormant BWP, the terminal may operate with an understanding that an SCell scheduled via the SCell* is also entered into a dormant BWP (if same is configured). According to a control signal (e.g., MAC CE, DCI) for deactivating the SCell* or changing into a dormant BWP, a time point at which the SCell is deactivated or entered into a dormant BWP may be determined.

In addition, according to an embodiment of the disclosure, the SCell* (an SCell configured to be able to perform cross-carrier scheduling of a PCell) in FIG. 8 may be allowed to be deactivated or to enter into a dormant BWP. According to an embodiment, in case that the SCell* is deactivated, the terminal may operate with an understanding that an SCell scheduled via the SCell* performs self-carrier scheduling. That is, the terminal may perform PDCCH monitoring in the SCell. According to an embodiment, in case that the SCell* is entered into a dormant BWP, the terminal may operate with an understanding that an SCell scheduled via the SCell* performs self-carrier scheduling. That is, the terminal may perform PDCCH monitoring in the SCell. According to a control signal (e.g., MAC CE, DCI) for deactivating the SCell* or changing into a dormant BWP, a time point at which PDCCH monitoring starts in the SCell may be determined.

A PDSCH may be scheduled for a terminal through DCI transmitted through a PDCCH, and the terminal may receive the PDSCH, and feed back HARQ-ACK information obtained as a result of attempting to decode the PDSCH, to a base station through a PUCCH or PUSCH. According to a result of the feedback, the base station may transmit DCI including information indicating retransmission of the PDSCH to the terminal through a PDCCH.

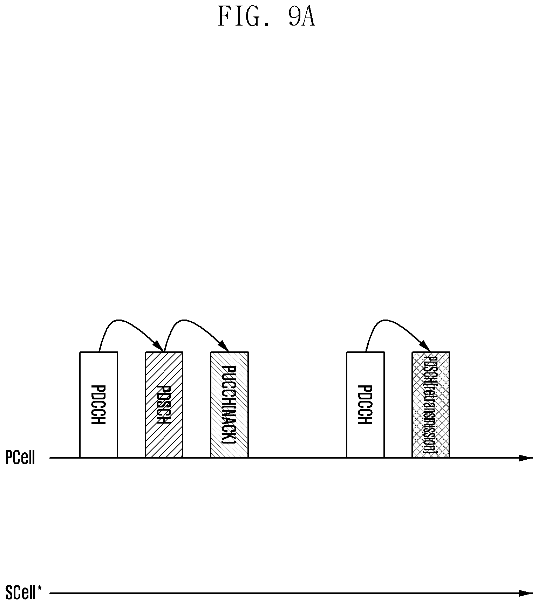

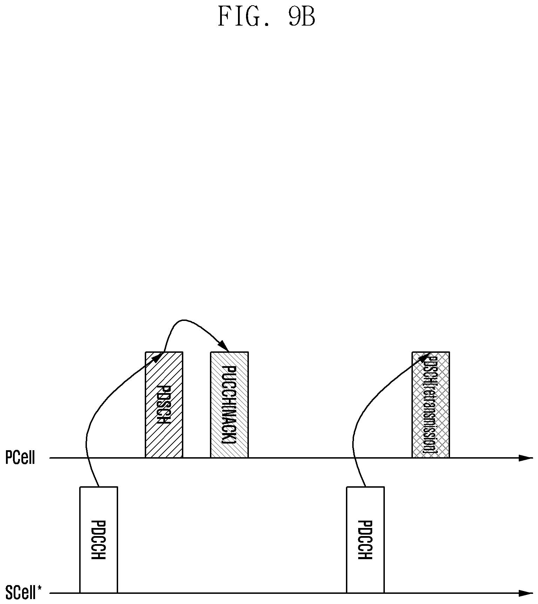

FIG. 9A and FIG. 9B are diagrams illustrating an example of a method of transmitting a PDCCH indicating retransmission according to an embodiment of the disclosure. In FIG. 9A and FIG. 9B, a PCell may be understood as the PCell in FIG. 8, and an SCell* may be understood as the SCell* (i.e., an Scell configured to be able to perform cross-carrier scheduling of the PCell) in FIG. 8. A different SCell which may be additionally configured is not illustrated.

Referring to FIG. 9A and FIG. 9B, a PDCCH indicating retransmission may be transmitted only in the same cell as a cell in which a PDCCH indicating initial transmission according to an embodiment of the disclosure is transmitted. According to an embodiment, transmission of a PDCCH indicating retransmission is not allowed in a cell different from the cell in which a PDCCH indicating initial transmission is transmitted. According to an embodiment, the terminal may not expect transmission of a PDCCH indicating retransmission in a cell different from the cell in which a PDCCH indicating initial transmission is transmitted. In FIG. 9A and FIG. 9B, only PDSCH is illustrated, but a different channel (e.g., PUSCH, PSSCH) may also be indicated in the same scheme.

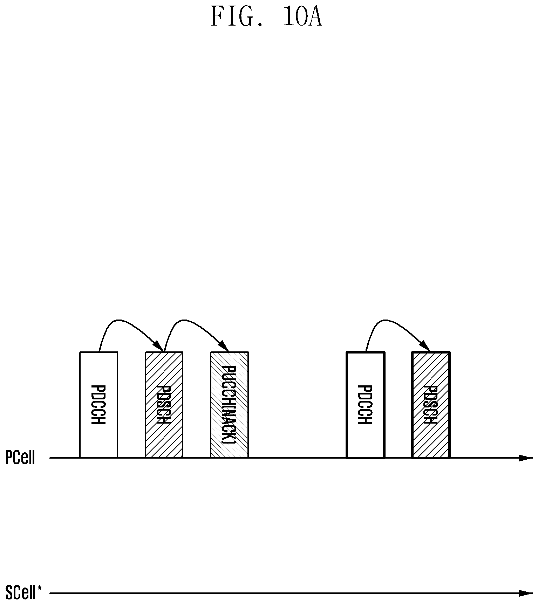

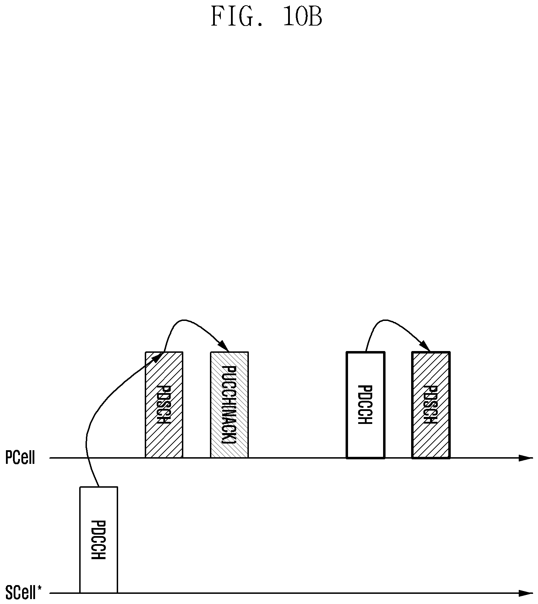

As described above, in case that transmission of a PDCCH including DCI indicating retransmission is possible only in the same cell as a cell of a previously transmitted PDCCH, a criterion of whether DCI included in a PDCCH transmitted in a PCell indicates an initial transmission PDSCH or a retransmission PDSCH is needed. A detailed description will be given with reference to FIG. 10.

FIG. 10A and FIG. 10B are diagrams illustrating a method of transmitting a PDCCH indicating retransmission according to an embodiment of the disclosure.

Referring to FIG. 10A and FIG. 10B, a criterion of whether a PDSCH scheduled by DCI transmitted through the second PDCCH is initial transmission or retransmission is needed. The PCell and the SCell* in FIG. 10A and FIG. 10B are the same as the PCell and the SCell* in FIG. 9A and FIG. 9B, and a different SCell which may be additionally configured is not illustrated.

According to an embodiment of the disclosure, according to a first serving cell in which a first PDCCH containing first DCI including a particular HARQ process number of a particular serving cell has been previously transmitted, whether a PDSCH indicated by a second PDCCH containing second DCI including the particular HARQ process number of the particular serving cell is initial transmission or retransmission may be determined.

According to an embodiment, according to a first serving cell in which a first PDCCH containing first DCI including a particular HARQ process number of a particular serving cell has been previously transmitted, and a second serving cell in which a second PDCCH containing second DCI including the particular HARQ process number of the particular serving cell is transmitted, whether a PDSCH indicated by the second PDCCH containing the second DCI is initial transmission or retransmission may be determined. According to an embodiment, according to whether the first serving cell is different from the second serving cell, whether the PDSCH is initial transmission or retransmission may be determined.

According to an embodiment, in case that a particular HARQ process number of a serving cell indicated by first DCI included in a first PDCCH transmitted in a PCell is the HARQ process of the serving cell indicated by second DCI included in a second PDCCH previously transmitted in a SCell*, a PDSCH scheduled by the first DCI included in the first PDCCH may be understood as initial transmission. Accordingly, a terminal may flush a HARQ buffer corresponding to the HARQ process of the serving cell, and then perform a HARQ operation for the PDSCH. For example, in FIG. 10B, it may be understood that a PDSCH scheduled by a PDCCH transmitted through a PCell is an initial transmission PDSCH.

According to an embodiment, in case that a particular HARQ process number of a serving cell indicated by first DCI included in a first PDCCH transmitted in a PCell is the HARQ process of the serving cell indicated by second DCI included in a second PDCCH previously transmitted in the PCell, whether a PDSCH scheduled by the first DCI included in the first PDCCH is initial transmission or retransmission may be determined based on whether an NDI is toggled. For example, FIG. 10A corresponds to this case. When an NDI is toggled, this may be understood as initial transmission, and the terminal may flush a HARQ buffer corresponding to the HARQ process of the serving cell, and then perform a HARQ operation for the PDSCH. When an NDI is not toggled, this may be understood as retransmission, and the terminal may perform an operation of combining with data stored in a HARQ buffer corresponding to the HARQ process of the serving cell, and then perform a HARQ operation for the PDSCH.

In the above explanation, a PDSCH is described, but the embodiment or a combination of the embodiments are also applicable to a different channel (e.g., PUSCH, PSSCH) in the same way.

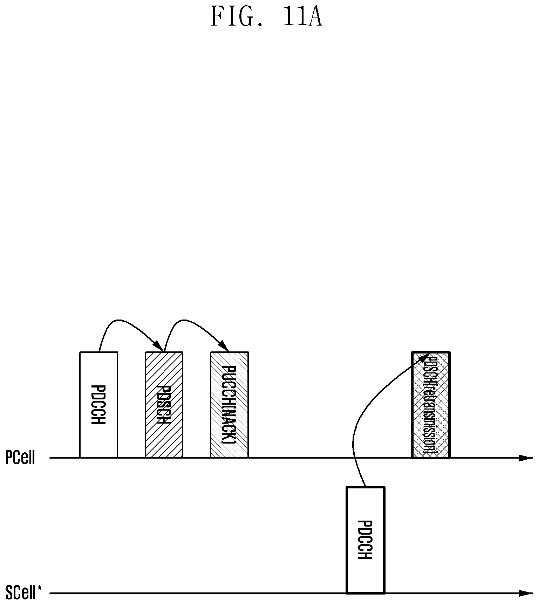

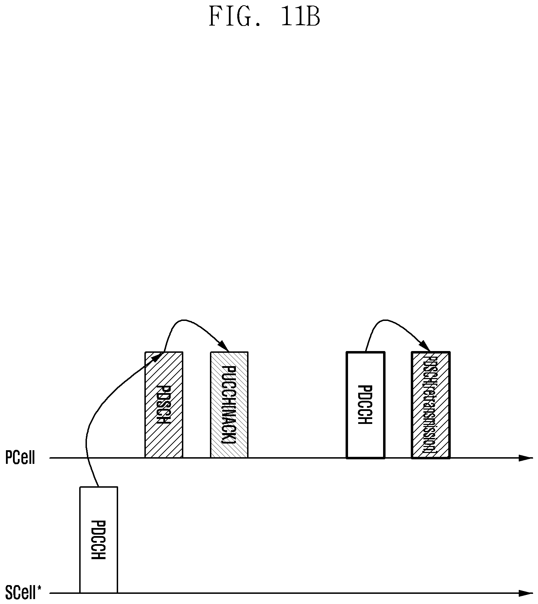

FIG. 11A and FIG. 11B are diagrams illustrating an embodiment of transmitting a PDCCH indicating retransmission according to an embodiment of the disclosure. The PCell and the SCell* in FIG. 11A and FIG. 11B are the same as the PCell and the SCell* in FIG. 9A and FIG. 9B, and a different SCell which may be additionally configured is not illustrated.

According to an embodiment, a PDCCH indicating retransmission may be transmitted in a cell different from the cell in which a PDCCH indicating initial transmission is transmitted. According to an embodiment, a PDCCH indicating retransmission may be transmitted in a cell identical to or different from a cell in which a PDCCH indicating initial transmission is to be transmitted. A terminal may monitor a PDCCH indicating retransmission in multiple cells accordingly, and in case that a PDCCH including DCI indicating retransmission is received in at least one serving cell among the multiple cells, the terminal may perform an operation of combining with previously received and stored data.

In FIG. 11A and FIG. 11B, only PDSCH is illustrated, but a different channel (e.g., PUSCH, PSSCH) may also be indicated in the same scheme.

As described above, in case that transmission of a PDCCH including DCI indicating retransmission is possible also in a cell different from a cell in which a previously transmitted PDCCH has been transmitted, a criterion of whether DCI included in a PDCCH transmitted in a PCell or an SCell* indicates an initial transmission PDSCH or a retransmission PDSCH is needed. That is, a criterion of whether a PDSCH scheduled by DCI transmitted through the second PDCCH of FIG. 11A and FIG. 11B is initial transmission or retransmission is needed.

According to an embodiment, based on whether an NDI value of a particular HARQ process number of a particular serving cell included in first DCI transmitted through a first PDCCH by using a PCell or an SCell* is toggled, whether a PDSCH scheduled by the first DCI is initial transmission or retransmission may be determined. When an NDI is toggled, this may be understood as initial transmission, and the terminal may flush a HARQ buffer corresponding to the HARQ process of the serving cell, and then perform a HARQ operation for the PDSCH. When an NDI is not toggled, this may be understood as retransmission, and the terminal may perform an operation of combining with data stored in a HARQ buffer corresponding to the HARQ process of the serving cell, and then perform a HARQ operation for the PDSCH.

According to an embodiment, a terminal may compare a first NDI value of a particular HARQ process number of a particular serving cell included in first DCI of a first PDCCH received in one cell among multiple cells, with a second NDI value of the particular HARQ process number of the particular serving cell included in second DCI of a second PDCCH previously received in one cell among the multiple cells, to determine whether a PDSCH scheduled by the first DCI is initial transmission or retransmission, according to whether the first NDI value is toggled. If the value is toggled, the terminal may understand as initial transmission, and if the value is not toggled, the terminal may understand as retransmission and perform a corresponding operation. According to an embodiment, if there is no the second DCI, the terminal may determine the PDSCH scheduled by the first DCI as initial transmission.

In the above explanation, a PDSCH is described, but the embodiment or a combination of the embodiments are also applicable to a different channel (e.g., PUSCH, PSSCH) in the same way.

In addition, according to another embodiment of the disclosure, an aggregation level of a first PDCCH indicating initial transmission and transmitted in a first cell may be different from an aggregation level of a second PDCCH indicating retransmission and transmitted in a second cell.

In addition, according to an embodiment, a PCell is a DSS carrier in which a different wireless access technology (e.g., LTE, 3G) and 5G coexist, and may exist in a lower frequency band, and an SCell* is a 5G-dedicated carrier, and may exist in a higher intermediate frequency band (e.g., 3.5 GHz). A base station may differently configure aggregationLevel included in SearchSpace IE configured in each cell according to a frequency characteristic. According to an embodiment, aggregationLevel equal to or smaller than that of a high frequency band may be configured in a cell having a low frequency band. According to an embodiment, in case that, as illustrated in FIG. 11A, a first PDCCH indicating initial transmission is transmitted in a PCell and a second PDCCH indicating retransmission is transmitted in a SCell*, a base station may use searchspace larger than or equal to aggregatoinLevel of the first PDCCH for transmission of the second PDCCH. According to an embodiment, in case that, as illustrated in FIG. 11B, a first PDCCH indicating initial transmission is transmitted in a SCell* and a second PDCCH indicating retransmission is transmitted in a PCell, the base station may use searchspace lower than or equal to aggregatoinLevel of the first PDCCH for transmission of the second PDCCH.

According to an embodiment, a TB size (TBS) of a data channel (e.g., PDSCH, PUSCH, PSSCH) scheduled by a control channel (e.g., PDCCH, PSCCH) including control information (e.g., DCI, SCI) indicating retransmission may be determined by control information (e.g., DCI, SCI) included in the latest control channel (e.g., PDCCH, PSSCH) transmitted for the same transport block in one cell (e.g., the PCell or SCell* in FIG. 11) among multiple scheduling cells.

According to an embodiment, at least one of "CQI or MCS tables (e.g., [Table 12] to [Table 16], [Table 31] to [Table 36]) corresponding to whether a maximum modulation order (e.g., 64QAM, 256QAM, 1024QAM) is determined and transform precoding is configured" is used or configured, and a value of a received "particular field (e.g., $I_{MCS}$) of control information (e.g., DCI or SCI) indicating retransmission" is one value among entries corresponding to "reserved" among entries of the used or configured table, a TB size (TBS) of a data channel (e.g., PDSCH, PUSCH, PSSCH) scheduled by a control channel (e.g., PDCCH, PSCCH) including the control information indicating the retransmission may be determined by control information transferred through the latest control channel among pieces of control information transmitted for the same transport block by using "one value among entries not corresponding to "reserved" among entries of the used or configured table" as the value of the particular field (e.g., $I_{MCS}$) in one cell (e.g., the PCell or SCell* in FIG. 11) among multiple scheduling cells.

For example, in case that a terminal is configured to use [Table 13] and a value of an $I_{MCS}$ field of DCI indicating retransmission received by the terminal is between 28 and 31 (both inclusive) (i.e., entries corresponding to "reserved"), a TBS of a PDSCH (or PUSCH) scheduled by a PDCCH including the DCI may be determined by DCI transferred through the latest PDCCH among pieces of DCI transmitted for the same transport block by using a value between 0 and 27 (both inclusive) (i.e., entries not corresponding to "reserved") as a value of an $I_{MCS}$ field in the PCell or the SCell * in FIG. 11A and FIG. 11B.

For example, in case that a terminal is configured to use one of [Table 12] or [Table 14] and a value of an $I_{MCS}$ field of DCI indicating retransmission received by the terminal is between 29 and 31 (both inclusive) (i.e., entries corresponding to "reserved"), a TBS of a PDSCH (or PUSCH) scheduled by a PDCCH including the DCI may be determined by DCI transferred through the latest PDCCH among pieces of DCI transmitted for the same transport block by using a value between 0 and 28 (both inclusive) (i.e., entries not corresponding to "reserved") as a value of an $I_{MCS}$ field in the PCell or the SCell * in FIG. 11A and FIG. 11B.

For example, in case that a terminal is configured to use one of [Table 15] or [Table 16] and a value of an $I_{MCS}$ field of DCI indicating retransmission received by the terminal is between 28 and 31 (both inclusive) (i.e., entries corresponding to "reserved"), a TBS of a PUSCH scheduled by a PDCCH including the DCI may be determined by DCI transferred through the latest PDCCH among pieces of DCI transmitted for the same transport block by using a value between 0 and 27 (both inclusive) (i.e., entries not corresponding to "reserved") as a value of an $I_{MCS}$ field in the PCell or the SCell * in FIG. 11A and FIG. 11B.

For example, in case that a terminal is configured to use one of [Table 31] or [Table 36] and a value of an $I_{MCS}$ field of DCI indicating retransmission received by the terminal is between 27 and 31 (both inclusive) (i.e., entries corresponding to "reserved"), a TBS of a PDSCH (or PUSCH) scheduled by a PDCCH including the DCI may be determined by DCI transferred through the latest PDCCH among pieces of DCI transmitted for the same transport block by using a value between 0 and 26 (both inclusive) (i.e., entries not corresponding to "reserved") as a value of an $I_{MCS}$ field in the PCell or the SCell * in FIG. 11A and FIG. 11B.

According to an embodiment, whether a transport block is the same transport block may be determined through a serving cell in which a PDSCH is transmitted and a HARQ process number.

[Embodiment 13]

For communication of a bandwidth-reduced low complexity (BL) terminal or a coverage enhancement (CE) UE, a CQI index may be determined according to [CQI determination-1] or [CQI determination-2] by using a CQI table different from [Table 9] to [Table 11] or [Table 17] to [Table 24]. In a case of a BL/CE terminal, application of a low modulation order or a low code rate is commonly needed for more robust transmission. Therefore, with respect to the same target BLER, there may be a need of a CQI table and an MCS table supporting a spectral efficiency lower than the spectral efficiency supported in the CQI or MCS tables in [Table 9] to [Table 24] for all the same indexes or averagely.

In addition, a 5G NR system may support a non-standalone (NSA) operation or mode performed in association with LTE or pre-LTE systems or a standalone (SA) operation or mode which may be performed regardless of LTE or pre-LTE systems. A current LTE system is able to apply a maximum of 1024QAM according to a protocol, but a 5G NR system (based on Release 16) is unable to support 1024QAM. Therefore, when a 5G NR system introduces 1024QAM to maximally support functions supported in LTE in supporting SA operating independently to an LTE system in the future, a new CQI table and MCS table may be introduced. Even in this case, multiple CQI/MCS tables having a maximum modulation order of 1024QAM and satisfying a feature of CQI/MCS tables according to a target BLER proposed in another embodiment of the disclosure may be defined.

[Embodiment 14]

For communication of a bandwidth-reduced low complexity (BL) terminal or a coverage enhancement (CE) UE, a CQI index may be determined according to [CQI determination-1] or [CQI determination-2] by using a CQI table different from [Table 9] to [Table 11] or [Table 17] to [Table 24]. In a case of a BL/CE terminal, application of a low modulation order or a low code rate is commonly needed for more robust transmission. Therefore, with respect to the same target BLER, there may be a need of a CQI table and an MCS table supporting a spectral efficiency lower than the spectral efficiency supported in the CQI or MCS tables in [Table 9] to [Table 24] for all the same indexes or averagely.

In addition, a 5G NR system may support a non-standalone (NSA) operation or mode performed in association with LTE or pre-LTE systems or a standalone (SA) operation or mode which may be performed regardless of LTE or pre-LTE systems. A current LTE system is able to apply a maximum of 1024QAM according to a protocol, but a 5G NR system (based on Release 16) is unable to support 1024QAM. Therefore, when a 5G NR system introduces 1024QAM to maximally support functions supported in LTE in supporting SA operating independently to an LTE system in the future, a new CQI table and MCS table may be introduced. Even in this case, multiple CQI/MCS tables having a maximum modulation order of 1024QAM and satisfying a feature of CQI/MCS tables according to a target BLER proposed in another embodiment of the disclosure may be defined.

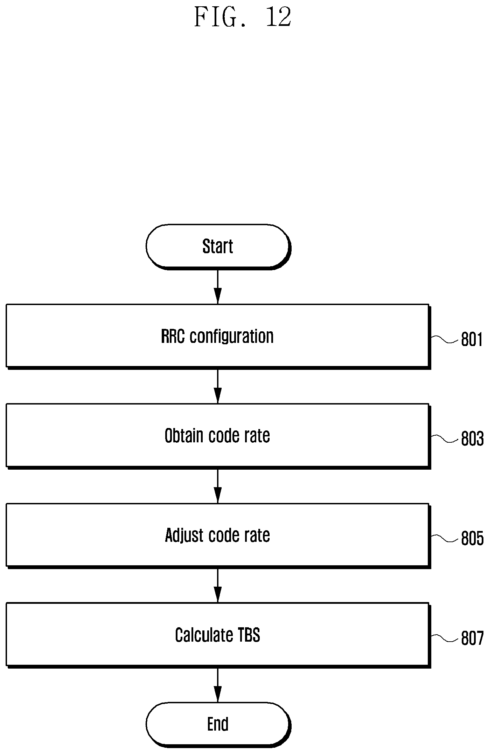

FIG. 12 illustrates a flowchart of a method for calculating a transport block size (TBS) by a terminal by using CQI and MCS tables according to an embodiment of the disclosure. FIG. 12 illustrates an example of an operation method of the terminal 120.

Referring to FIG. 12, a base station (e.g., the base station 110) may transmit configuration information related to a service to be provided to a terminal, to the terminal through RRC signaling in consideration of the service. In operation 801, the terminal performs an RRC configuration.

In operation 803, the terminal obtains a code rate and a modulation order as a reference. In operation 805, the terminal may adjust the code rate when a service defined in the RRC configuration is different from a service provided as a reference. Service information for adjusting the code rate may be directly indicated through RRC signaling, but may be indicated through a BLER value distinguished according to a service, or other parameters. A specific method for obtaining or determining a code rate and a modulation order, and a method for adjusting a code rate follow various embodiments of the disclosure. In operation 807, the terminal calculates a TBS by using the adjusted code rate.

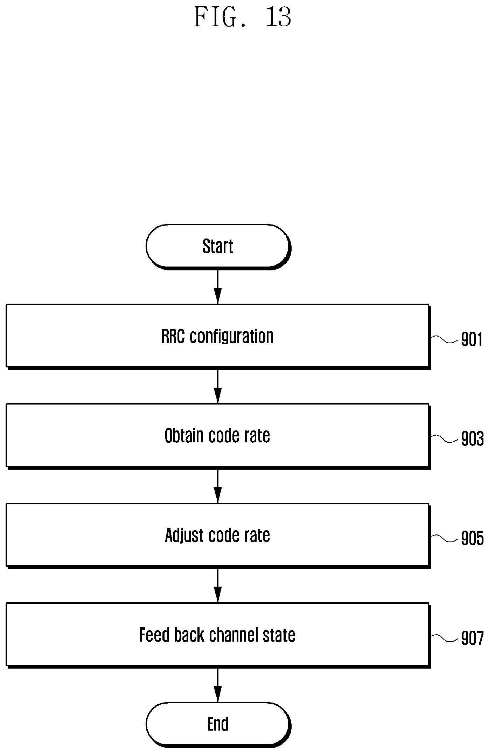

FIG. 13 illustrates a flowchart of another method for calculating a transport block size (TBS) by a terminal by using CQI and MCS tables according to an embodiment of the disclosure. FIG. 13 illustrates an example of an operation method of the terminal 120.

Referring to FIG. 13, a base station (e.g., the base station 110) may transmit configuration information related to a service to be provided to a terminal, to the terminal through RRC signaling, based on the service. In operation 901, the terminal performs an RRC configuration.

In operation 903, the terminal may obtain or determine a code rate and a modulation order as a reference. In operation 905, the terminal may adjust the code rate when a service defined in the RRC configuration is different from a service provided as a reference. Service information for adjusting the code rate may be directly indicated through RRC signaling, but may be indicated through a BLER value distinguished according to a service, or other parameters. A specific method for obtaining or determining a code rate and a modulation order, and a method for adjusting a code rate follow various embodiments of the disclosure. In operation 907, the terminal may feed back a channel state, based on the adjusted code rate.

In some embodiments, the base station 110 and the terminal 120 may perform communication by using at least one of wireless communication and wired communication.

A communication system may configure a suitable MCS level (or index), thereby supporting efficient information processing performance (throughput performance) of the terminal. Particularly, an MCS level (or index) for DL may be variably configured to be suitable for a system situation, based on CSI or CQI information (or feedback) transmitted or reported by the terminal in UL, and this is one of basic roles of a link adaptation technology. The link adaptation technology is important for efficient processing of packet-switched data traffic in a design of a wireless interface. A link adaptation technology of LTE or 5G NR may also dynamically adjust a data rate (i.e., a modulation scheme and a channel coding rate) to match a prevailing radio channel capacity of each UE. For DL data transmission, an eNodeB which is a base station of LTE or a gNB which is a base station of 5G NR may determine or select a modulation scheme (or order) and a code rate, based on a prediction of a DL channel environment or condition. Finally, CSI or CQI feedback may also referred to as an indication for a data rate (i.e., a modulation scheme and a channel coding rate) supportable in consideration of a signal-to-interference-plus-noise ratio or an SNR and a receiver feature of a UE. In embodiment 14 below, a specific example of a process of determining a proper MCS level through CQI feedback as described above will be described.

[Embodiment 15]

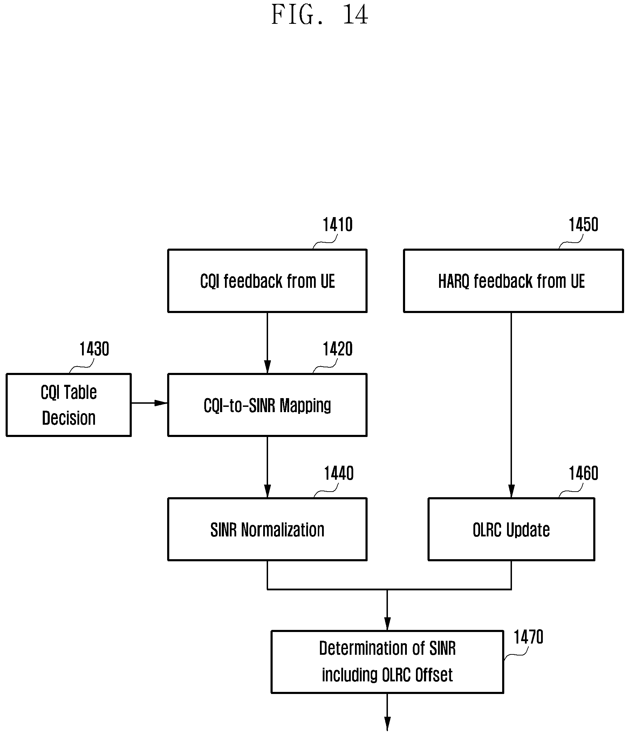

FIG. 14 shows a process in which a base station according to an embodiment of the disclosure receives CSI or CQI information (or feedback) transmitted in UL by a terminal, and then determines or selects an optimized MCS level (or index), based on the received CQI information (or CQI index).

First, when CSI or CQI feedback is received from a UE (operation 1410), a link adaptation block of a base station may perform an operation (or function) of mapping (or transforming) the CQI feedback information (or CQI index) to an SINR (operation 1420). The link adaptation block may be operated while being included in a controller of the base station, or may be operated while being connected to the controller of the base station. In addition, the link adaptation block may not be configured as a separate block, and an operation of the block may be performed as a function of the controller. Multiple CQI tables may exist in LTE or 5G NR, and thus a process of determining one of CQI tables may also be performed to map the CQI feedback information to an SINR (operation 1430). Therefore, CQI-to-SINR mapping (or CQI-to-SNR mapping) may be performed according to the determined CQI table.

The SINR (or SNR) value may be normalized into a case of a single layer and a single antenna (operation 1440). SINR normalization may be performed based on at least one value among the number of CSI-RS ports, the number of antennas used for CSI-RS transmission, the number of antennas per CSI-RS port, or an RI (or a rank index or a rank indicated by the RI). For example, through a SINR (or SNR) normalization function, normalization may be performed based on the number of CSI-RS ports and an RI (or a rank index or a rank indicated by the RI) (By SINR normalization function, the SINR value may be normalized based on a number of CSI-RS port and RI (or rank index or rank indicated by RI)). In addition, normalization may be performed based on an RI (or a rank value indicated by the RI) (By SINR normalization function, the SINR value may be normalized based on RI (or rank index or rank indicated by RI).

This normalization scheme may be differently applied according to a requirement or an operation of a system. As a specific example, in case that the terminal or the base station operates in an area having a particular frequency or higher (e.g., above 6GHz (A6G)), SINR normalization may be performed based on the number of CSI-RS ports and a rank, and in area having a particular frequency or lower (e.g., below 6GHz (B6G)), a method of performing normalization, based on a rank may be applied (For A6G, SINR may be normalized based on the number of CSI-RS port and reported rank index. For B6G, SINR may be normalized based on reported rank index.). The opposite scheme or various different schemes may also be applied. After SINR normalization, an SINR filtering function may be additionally performed in order to prevent unstable fluctuation of the normalized SINR value as needed.

In addition, in case that HARQ feedback is received (operation 1450), an SINR value may also be properly modified or transformed to perform an open loop rate control (OLRC) for accomplishing a target DL BLER (operations 1460 and 1470). As a process of modifying or transforming an SINR value to accomplish a target DL BLER, after a proper offset value is determined based on HARQ ACK/NACK information transmitted from the terminal (1460), a method of adding or subtracting the offset value to or from an existing SINR value may be applied (operation 1470). A DL BLER may be measured or determined based on ACK/NACK information for all or at least some of UL control channels corresponding to a PDSCH. In addition, determination or update of the OLRC offset may be performed based on the type of HARQ feedback. In addition, a setting or a value for OLRC update may be determined based on a configuration of an MCS table. For example, a value for OLRC update of a case where an MCS table corresponding to a maximum modulation order of 256QAM is configured, a value for OLRC update of a case where an MCS table corresponding to a maximum modulation order of 64QAM is configured, or a value for OLRC update of a case where an MCS table configuration is absent/omitted may be configured/determined to be different from each other (A value or setting for OLRC update may be determined based on a configuration of MCS table. For example, a value for OLRC update in case of a configuration for a MCS table corresponding to maximum modulation 256QAM (e.g., < mcs-Table = qam256 >) and a value for OLRC update in case of an absent/missing configuration or a configuration for a MCS table corresponding to maximum modulation 64QAM (e.g., < mcs-Table = 'absent' > or < mcs-Table = qam64LowSE >) can be differently set (or determined).).

As described above, an efficient MCS level may be finally determined based on the process shown in FIG. 14. The process shown in FIG. 14 merely corresponds to an example, a different function may be added in some cases, and each function of FIG. 14 may be further subdivided to be performed.

A terminal may receive a signal for transmitted data or an input bitstream, determine or identify an MCS index (or level) determined through the above process of FIG. 14, determine or identify a size or a TBS value of the input bitstream, based on the MCS index (or a modulation order and a code rate corresponding to the MCS index, or an MPR), and determine or identify a basic graph (or basic matrix) and a parity check matrix of an LDPC code to be subject to LDPC decoding, based on the determined size or TBS of the input bitstream and the code rate. Next, the terminal may reconstruct data or an input bitstream by performing decoding, based on the determined size or TBS of the input bitstream and the parity check matrix of the LDPC code.

According to the above description, a method for performing encoding by a terminal or a base station of a wireless communication system according to an embodiment of the disclosure may include: identifying an MCS table configuration and an MCS level; determining a size (TBS) of the transport block, based on the MCS table configuration and the MCS level; and performing LDCP encoding, based on the TBS, wherein the MCS table configuration corresponds to one of a maximum modulation order of 6 (64QAM), 8 (256QAM), or corresponds to 10 (1024QAM) or a BLER of 0.1, 0.001, or 0.00001. At least some of parameters required in the process of determining the TBS may be determined based on a maximum supported data rate or a minimum supported data rate supportable in the terminal.

In addition, a method for performing decoding by a terminal or a base station of a wireless communication system according to an embodiment of the disclosure may include: receiving a reception signal corresponding to a transport block; identifying an MCS table configuration and an MCS level, based on the received signal; determining a transport block size (TBS), based on the MCS table configuration and the MCS level; and performing LDCP decoding, based on the TBS, wherein the MCS table configuration corresponds to one of a maximum modulation order of 6 (64QAM), 8 (256QAM), or corresponds to 10 (1024QAM) or a BLER of 0.1, 0.001, or 0.00001. At least some of parameters required in the process of determining the TBS may be determined based on a maximum supported data rate or a minimum supported data rate supportable in the terminal.

In addition, a method for determining a modulation and coding scheme (MCS) level for downlink transmission by a base station in a wireless communication system according to an embodiment of the disclosure may include: receiving a channel quality indicator (CQI) from a terminal; identifying at least one of the number of CSI-RS ports or a rank index; determining a signal-to-interference-plus-noise ratio (SINR) value, based on the received CQI information; performing SINR normalization, based on the determined SINR value and at least one of the number of CSI-RS ports or the rank index; and determining an MCS, based on the normalized SINR value. The receiver includes a terminal or a base station.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, various modifications and changes may be made thereto without departing from the scope of the disclosure. Therefore, the scope of the disclosure should not be defined as being limited to the embodiments, but should be defined by the appended claims and equivalents thereof.

Certain subject matter is disclosed in the following clauses.

Clause 1 discloses a method for performing decoding by a terminal of a wireless communication system, the method comprising: receiving a reception signal corresponding to a transport block; identifying an MCS level applied to the transport block, based on the received signal; determining a transport block size (TBS), based on the MCS level; and determining whether to skip LDPC decoding, based on the reception signal and the TBS, wherein the LDPC decoding is skipped in case that the MCS level is configured to a highest MCS level and the TBS is equal to or smaller than a reference value.

Clause 2 discloses the method of clause 1, further comprising transmitting a HARQ NACK bit in case that the LDPC decoding is skipped.

Clause 3 discloses the method of clause 1, wherein, in case that the TBS is smaller than the reference value, a second basic matrix is used, wherein, in case that the TBS is greater than the reference value, a first basic matrix or the second basic matrix is used based on a code rate, and wherein the reference value is a predetermined value.

Clause 4 discloses the method of clause 3, wherein the reference value is configured to a predetermined value for each value of an overhead or a predetermined value for each range of the overhead, and wherein the value of the overhead is determined based on an amount of resources on which a reference signal is transmitted in a slot.

Clause 5 discloses a terminal of a wireless communication system, the terminal comprising: a transceiver; and a controller configured to receive a reception signal corresponding to a transport block via the transceiver, identify an MCS level applied to the transport block, based on the received signal, determine a transport block size (TBS), based on the MCS level, and determine whether to skip LDPC decoding, based on the reception signal and the TBS, wherein the LDPC decoding is skipped in case that the MCS level is configured to a highest MCS level and the TBS is equal to or smaller than a reference value.

Clause 6 discloses the terminal of clause 5, further comprising transmitting a HARQ NACK bit in case that the LDPC decoding is skipped.

Clause 7 discloses the terminal of clause 5, wherein, in case that the TBS is smaller than the reference value, a second basic matrix is used, wherein, in case that the TBS is greater than the reference value, a first basic matrix or the second basic matrix is used based on a code rate, and wherein the reference value is a predetermined value.

Clause 8 discloses the terminal of clause 7, wherein the reference value is configured to a predetermined value for each value of an overhead or a predetermined value for each range of the overhead, and wherein the value of the overhead is determined based on an amount of resources on which a reference signal is transmitted in a slot.

Clause 9 discloses a method for performing decoding by a base station of a wireless communication system, the method comprising: receiving a reception signal corresponding to a transport block; identifying an MCS level applied to the transport block, based on the received signal; determining a transport block size (TBS), based on the MCS level; and determining whether to skip LDPC decoding, based on the reception signal and the TBS, wherein the LDPC decoding is skipped in case that the MCS level is configured to a highest MCS level and the TBS is equal to or smaller than a reference value.

Clause 10 discloses the method of clause 9, further comprising transmitting a HARQ NACK bit in case that the LDPC decoding is skipped.

Clause 11 discloses the method of clause 9, wherein, in case that the TBS is smaller than the reference value, a second basic matrix is used, wherein, in case that the TBS is greater than the reference value, a first basic matrix or the second basic matrix is used based on a code rate, and wherein the reference value is a predetermined value.

Clause 12 discloses the method of clause 11, wherein the reference value is configured to a predetermined value for each value of an overhead or a predetermined value for each range of the overhead, and wherein the value of the overhead is determined based on an amount of resources on which a reference signal is transmitted in a slot.

Clause 13 discloses a base station of a wireless communication system, the base station comprising: a transceiver; and a controller configured to receive a reception signal corresponding to a transport block via the transceiver, identify an MCS level applied to the transport block, based on the received signal, determine a transport block size (TBS), based on the MCS level, and determine whether to skip LDPC decoding, based on the reception signal and the TBS, wherein the LDPC decoding is skipped in case that the MCS level is configured to a highest MCS level and the TBS is equal to or smaller than a reference value.

Clause 14 discloses the base station of clause 13, further comprising transmitting a HARQ NACK bit in case that the LDPC decoding is skipped.

Clause 15 discloses the base station of clause 13, wherein, in case that the TBS is smaller than the reference value, a second basic matrix is used, wherein, in case that the TBS is greater than the reference value, a first basic matrix or the second basic matrix is used based on a code rate, wherein the reference value is configured to a predetermined value for each value of an overhead or a predetermined value for each range of the overhead, and wherein the value of the overhead is determined based on an amount of resources on which a reference signal is transmitted in a slot.

## Claims

1. A method performed by a terminal in a wireless communication system, the method comprising:

   receiving, from a base station, configuration information for a cross carrier scheduling;
   identifying a secondary cell (scell) for scheduling a primary cell (pcell) based on the configuration information for the cross carrier scheduling;
   identifying whether a medium access control (MAC) control element (CE) for deactivating the scell for scheduling the pcell is received; and
   identifying that the scell for scheduling the pcell is deactivated in case that the MAC CE for deactivating the scell is received.

2. The method of claim 1, further comprising:

   identifying whether a downlink control information (DCI) for activating a dormant bandwidth part (BWP) for the scell for scheduling the pcell is received; and
   identifying that the dormant BWP is activated for the scell for scheduling the pcell, in case that the DCI is received.

3. The method of claim 1, further comprising:

   receiving, on the pcell, a first DCI including a hybrid automatic repeat request, HARQ, process number for a first transmission;
   identifying whether a first new data indicator, NDI, included in the first DCI is toggled;
   considering that the first transmission is for a new transmission, in case that the first NDI is toggled;
   receiving, on the scell for scheduling the pcell, a second DCI including the HARQ process number for a second transmission;
identifying whether a second NDI included in the second DCI is toggled; and
considering that the second transmission is for a retransmission, in case that the second NDI is not toggled.

4. The method of claim 1, further comprising:

receiving, on the scell for scheduling the pcell, a third DCI including a HARQ process number for a third transmission;
identifying whether a third NDI included in the third DCI is toggled;
considering that the third transmission is for a new transmission, in case that the third NDI is toggled;
receiving, on the pcell, a fourth DCI including the HARQ process number for a fourth transmission;
identifying whether a fourth NDI included in the fourth DCI is toggled; and
considering that the fourth transmission is for a retransmission, in case that the fourth NDI is not toggled.

5. The method of claim 2, further comprising:

determining that at least one serving cell is deactivated, in case that the scell for scheduling the pcell is deactivated, the at least one serving cell being scheduled by the scell for scheduling the pcell; and
determining that at least one dormant BWP is activated for at least one serving cell, in case that the dormant BWP is activated for the scell for scheduling the pcell, the at least one serving cell being scheduled by the scell for scheduling the pcell.

6. The method of claim 1, further comprising:
determining that a self carrier scheduling is performed by at least one serving cell, in case that the scell for scheduling the pcell is deactivated, the at least one serving cell being scheduled by the scell for scheduling the pcell.

7. The method of claim 2, further comprising:
determining that a self carrier scheduling is performed by at least one serving cell, in case that the dormant BWP is activated for the scell for scheduling the pcell, the at least one serving cell being scheduled by the scell for scheduling the pcell.

8. A terminal in a wireless communication system, the terminal comprising:

a transceiver; and
at least one processor configured to:

receive, from a base station via the transceiver, configuration information for a cross carrier scheduling,
identify a secondary cell (scell) for scheduling a primary cell (pcell) based on the configuration information for the cross carrier scheduling,
identify whether a medium access control (MAC) control element (CE) for deactivating the scell for scheduling the pcell is received, and
identify that the scell for scheduling the pcell is deactivated in case that the MAC CE for deactivating the scell is received.

9. The terminal of claim 8, wherein the at least one processor is further configured to:

identify whether a downlink control information (DCI) for activating a dormant bandwidth part (BWP) for the scell for scheduling the pcell is received, and
identify that the dormant BWP is activated for the scell for scheduling the pcell, in case that the DCI is received.

10. The terminal of claim 8, wherein the at least one processor is further configured to:

receive, on the pcell, a first DCI including a hybrid automatic repeat request, HARQ, process number for a first transmission,
identify whether a first new data indicator, NDI, included in the first DCI is toggled,
consider that the first transmission is for a new transmission, in case that the first NDI is toggled,
receive, on the scell for scheduling the pcell, a second DCI including the HARQ process number for a second transmission,

identify whether a second NDI included in the second DCI is toggled, and
consider that the second transmission is for a retransmission, in case that the second NDI is not toggled.

11. The terminal of claim 8, wherein the at least one processor is further configured to:

receive, on the scell for scheduling the pcell, a third DCI including a HARQ process number for a third transmission,
identify whether a third NDI included in the third DCI is toggled,
consider that the third transmission is for a new transmission, in case that the third NDI is toggled,
receive, on the pcell, a fourth DCI including the HARQ process number for a fourth transmission,
identify whether a fourth NDI included in the fourth DCI is toggled, and
consider that the fourth transmission is for a retransmission, in case that the fourth NDI is not toggled.

12. The terminal of claim 8, wherein the at least one processor is further configured to:
Determine that at least one serving cell is deactivated, in case that the scell for scheduling the pcell is deactivated, the at least one serving cell being scheduled by the scell for scheduling the pcell.

13. The terminal of claim 8, wherein the at least one processor is further configured to:
determine that a self carrier scheduling is performed by at least one serving cell, in case that the scell for scheduling the pcell is deactivated, the at least one serving cell being scheduled by the scell for scheduling the pcell.

14. The terminal of claim 9, wherein the at least one processor is further configured to:
determine that at least one dormant BWP is activated for at least one serving cell, in case that the dormant BWP is activated for the scell for scheduling the pcell, the at least one serving cell being scheduled by the scell for scheduling the pcell.

15. The terminal of claim 9, wherein the at least one processor is further configured to:
determine that a self carrier scheduling is performed by at least one serving cell, in case that the dormant BWP is activated for the scell for scheduling the pcell, the at least one serving cell being scheduled by the scell for scheduling the pcell.

FIG. 1

FIG. 2

210 — Wireless communication unit

240 — Controller

220 — Backhaul communication unit

230 — Storage unit

110

EP 4 456 466 A2

# FIG. 3

FIG. 4A

210 or 310

402

404

406-1

408

| Encoding and modulating unit | Digital beamformer | Transmission path | Analog beamformer |

406-N

Transmission path

EP 4 456 466 A2

# FIG. 4B

408

412-1-1  414-1-1

412-1-2  414-1-2

412-1-M  414-1-M

412-N-1  414-N-1

412-N-2  414-N-2

412-N-M  414-N-M

FIG. 4C

408

412-1-1    414-1-1

412-1-2    414-1-2

416-1

412-1-M    414-1-M

416-2

416-M

412-N-1    414-N-1

412-N-2    414-N-2

412-N-M    414-N-M

# FIG. 5

Radio frame (514)

Slot
(506)

$N_{RB}^{UL}$ or $N_{RB}^{UL}$ number of subcarriers (504)

$N_{RB}$ number of subcarriers (510)

Resource element
(512)

Resource block
(508)

$N_{symb}$ number of OFDM symbols
(502)

FIG. 6A

FIG. 6B

EP 4 456 466 A2

System bandwidth (660)

FIG. 6C

duration
(6c04)

Frequecy
resources
(6c03)

UE bandwidth
part (6c10)

Frequency

Time

Slot (6c20)

Control resource set#1 (6c01)

Control resource set#2 (6c02)

EP 4 456 466 A2

# FIG. 6D

1 symbol
[6d01]

1 PRB
[6d02]

DMRS
[6d05]

CCE
[6d04]

REG
[6d03]

FIG. 6E

CSI-RS (6e02)

6e01

Slot 0 (6e06)

Slot 1 (6e07)

Slot 2 (6e08)

Slot 3 (6e09)

PUSCH Slot 3 (6e09)

PDCCH

offset (6e03)

K2 (6e04)

# FIG. 6F

CSI-RS (6f02)

| Slot 0 (6f06) | Slot 1 (6f07) | Slot 2 (6f08) | Slot 3 (6f09) |

PDCCH  PDCCH  PDCCH  PDCCH

6f01

PUSCH
Slot 3 (6f09)

offset (6f03)

K2 (6f04)

EP 4 456 466 A2

# FIG. 7

Legend:
— Channel
- - - Interference

Magnitude

700

710

Time

UE CQI feedback

720

···· | CQI 0 | CQI 1 | CQI 2 | CQI 3 | CQI 4 | CQI 5 | CQI 6 | ····

FIG. 8

FIG. 9A

PCell

PDCCH

PDSCH

PUCCH(N/ACK)

PDCCH

PDSCH(retransmission)

SCell*

FIG. 9B

FIG. 10A

PCell

PDCCH  PDSCH  PUCCH(NACK)  PDCCH  PDSCH

SCell*

FIG. 10B

# FIG. 11A

FIG. 11B

# FIG. 12

```
              ┌──────────┐
              │   Start  │
              └──────────┘
                   │
                   ▼
   ┌────────────────────────────────┐
   │        RRC configuration       │ ∼ 801
   └────────────────────────────────┘
                   │
                   ▼
   ┌────────────────────────────────┐
   │         Obtain code rate       │ ∼ 803
   └────────────────────────────────┘
                   │
                   ▼
   ┌────────────────────────────────┐
   │         Adjust code rate       │ ∼ 805
   └────────────────────────────────┘
                   │
                   ▼
   ┌────────────────────────────────┐
   │          Calculate TBS         │ ∼ 807
   └────────────────────────────────┘
                   │
                   ▼
              ┌──────────┐
              │    End   │
              └──────────┘
```

# FIG. 13

```
        ┌─────────────┐
        │    Start     │
        └─────────────┘
               │
               ▼
┌───────────────────────────────┐
│      RRC configuration        │ ～901
└───────────────────────────────┘
               │
               ▼
┌───────────────────────────────┐
│      Obtain code rate         │ ～903
└───────────────────────────────┘
               │
               ▼
┌───────────────────────────────┐
│      Adjust code rate         │ ～905
└───────────────────────────────┘
               │
               ▼
┌───────────────────────────────┐
│    Feed back channel state    │ ～907
└───────────────────────────────┘
               │
               ▼
        ┌─────────────┐
        │     End      │
        └─────────────┘
```

# FIG. 14

1410

CQI feedback from UE

1450

HARQ feedback from UE

1430

CQI Table Decision

1420

CQI-to-SINR Mapping

1440

SINR Normalization

1460

OLRC Update

1470

Determination of SINR including OLRC Offset

## REFERENCES CITED IN THE DESCRIPTION

**Patent documents cited in the description**

- KR 2021014839 W

- KR 1020200137850